(19) Europäisches Patentamt
European Patent Office
Office européen des brevets

(11) EP 3 573 469 B1

(12) **EUROPEAN PATENT SPECIFICATION**

(45) Date of publication and mention of the grant of the patent:
**19.05.2021 Bulletin 2021/20**

(21) Application number: **18715281.4**

(22) Date of filing: **26.01.2018**

(51) Int Cl.:
***A23G 4/10*** *(2006.01)*

(86) International application number:
**PCT/US2018/015560**

(87) International publication number:
**WO 2018/140798 (02.08.2018 Gazette 2018/31)**

(54) **CHEWING GUM PRODUCTS AND METHODS OF MAKING**

KAUGUMMIPRODUKTE UND VERFAHREN ZUR HERSTELLUNG

PRODUITS DE GOMME À MÂCHER ET PROCÉDÉS DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.01.2017 US 201762451535 P**
**27.01.2017 US 201762451554 P**

(43) Date of publication of application:
**04.12.2019 Bulletin 2019/49**

(73) Proprietor: **Wm. Wrigley Jr. Company**
**Chicago, IL 60642 (US)**

(72) Inventors:
- **LIU, Jingping**
**Chicago**
**Illinois 60642 (US)**
- **KLINGENBERG, Eric**
**Chicago**
**Illinois 60642 (US)**
- **TSENG, Niku**
**Chicago**
**Illinois 60642 (US)**
- **SWAGLER, Justin M.**
**Chicago**
**Illinois 60642 (US)**

(74) Representative: **Haseltine Lake Kempner LLP**
**Redcliff Quay**
**120 Redcliff Street**
**Bristol BS1 6HU (GB)**

(56) References cited:
**WO-A1-2008/067207**
**WO-A1-2014/062413**
**US-A- 5 223 282**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 573 469 B1

## Description

CROSS-REFERENCE TO RELATED APPLICATIONS

TECHNICAL FIELD

This invention relates to chewing gum products and methods of making chewing gum products.

BACKGROUND OF THE INVENTION

Chewing gum is typically a soft, cohesive substance designed to be chewed without being swallowed. Humans have used chewing gum in some form for thousands of years. Modern chewing gum is composed of gum base, sweeteners, softeners, flavors, and optionally colors and many other ingredients. Chewing gum has several physical-chemical characteristics, including: chewiness, stickiness, bubble-blowing capability, flavor release, and cooling sensation.

To meet the demands and preferences of consumers, efforts continue to develop chewing gums of different textures, shapes, and other characteristics, as well as efficient and reliable processes to make them.

BRIEF SUMMARY OF THE INVENTION

In some embodiments, the present invention is a chewing gum composition comprising: 10 to 35 %, by weight, of a gum base and 50 to 80 %, by weight, of a bulk sweetener blend, based on the total weight of the chewing gum composition, wherein the bulk sweetener blend comprises xylitol, sorbitol, and at least one of isomalt and maltitol, and wherein the gum composition is a molten gum composition comprising at least one molten gum base and at least one molten polyol.

In some embodiments, the composition is a soft chewing gum composition, wherein the bulk sweetener blend comprises: (i) 12 to 57 wt.% xylitol, (ii) 10 to 70 wt.% sorbitol, and (iii) 5 to 61 wt.% isomalt or maltitol or mixtures thereof.

In some embodiments, the composition is an intermediate chewing gum composition, wherein the bulk sweetener blend comprises: (i) 29 to 72 wt.% xylitol, (ii) 11 to 34 wt.% sorbitol, and (iii) 5 to 49 wt.% isomalt or maltitol or mixtures thereof. In some embodiments of the intermediate chewing gum composition, the bulk sweetener blend has a crystallinity of from 40 to 50 wt%. In some embodiments of the intermediate chewing gum composition, the bulk sweetener blend comprises: (i) at least 15 wt% xylitol, (ii) less than 65 wt% sorbitol, and (iii) less than 65 wt% isomalt or maltitol, wherein a weight ratio between the highest content polyol and lowest content polyol is greater than 1.5.

In some embodiments, the chewing gum composition comprises: 10 to 35 wt% of a gum base, and 50 to 80 wt.% of a bulk sweetener blend, wherein the bulk sweetener blend has the properties of: (i) a glass transition temperature below 0°C, and (ii) a crystallinity of 20 to 70%; wherein the bulk sweetener blend comprises xylitol and sorbitol, and wherein the gum composition is a molten gum composition.

In some embodiments, the chewing gum composition has a crisp texture, wherein the bulk sweetener blend comprises: (i) 0 to 5 wt.% humectant, (ii) 0 to 15 wt.% xylitol, (iii) 0 to 15 wt.% sorbitol, and (iv) 85-100 wt.% isomalt or maltitol or mixtures thereof.

In some embodiments, the present invention is a method for making a chewing gum product, the method comprising the steps of:

a) preparing a chewing gum mixture comprising at least one gum base and at least one polyol;

b) exposing the chewing gum mixture to at least a first temperature, wherein the first temperature is a temperature at which the chewing gum mixture becomes a moldable fluid, at a first shear rate, to form a molten chewing gum mixture comprising at least one molten gum base and at least one molten polyol, and wherein the viscosity ratio (p) is 1000, wherein the viscosity ratio is the complex viscosity of the at least one molten base divided by the complex viscosity of the at least one molten polyol; and

c) depositing the melted chewing gum mixture onto a surface to form the chewing gum product.

In some embodiments, the method of the present invention is a method for making a soft chewing gum product comprising the steps of:

a) preparing a chewing gum mixture;
b) exposing the chewing gum mixture to a plurality of processing conditions to obtain a molten chewing gum mixture ; wherein the molten chewing gum mixture contains a molten chewing gum base with a complex shear viscosity at 80°C of less than 600 Pa.s and at least one molten polyol; and wherein the processing conditions comprise:

i) a melting temperature in the range of [(T(m)+ T(η=100Pa.s))/2 + 5] to $T_{max}$; and
ii) a molding temperature in the range of [T(η=1000Pa.s)] measured at gum heating to [T(η=1000Pa.s)] measured at gum cooling; and

c) depositing the chewing gum mixture onto a surface to form the chewing gum product.

In some embodiments of the method for making a soft chewing gum product, the step of preparing a chewing gum mixture comprises:

a) heating the chewing gum base to a temperature of from 60 to 80 °C to form a molten chewing gum base,

b) mixing the molten chewing gum base with at least one polyol, at least one softener, and at least one humectant, at a temperature of from 55 to 60 ° C, to form a gum dough, and

c) adding a flavor to the gum dough at a temperature of from 55 to 60 °C to form a flavored gum dough.

BRIEF DESCRIPTION OF THE DRAWINGS

The present invention can be further explained with reference to the attached drawings, wherein like structures are referred to by like numerals throughout the several views. The drawings shown are not necessarily to scale, with emphasis instead generally being placed upon illustrating the principles of the present invention. Further, some features may be exaggerated to show details of particular components.

Figure 1 is a graph showing the effect of various gum bases on viscosity ratio for gum compositions containing a base and a bulk sweetener blend.

Figure 2 is a graph showing the shear rate required to reach critical viscosity ratio p=1000 value in gum compositions which include different bases with a binary polyol blend of xylitol and sorbitol.

Figure 3 is a graph showing the shear rate required to reach critical viscosity ratio p=100 in gum compositions which include different bases with a binary polyol blend of xylitol and sorbitol.

Figure 4 is a graph showing viscosity ratio of gum compositions as a function of shear rate at the same isothermal temperature.

Figure 5 is a graph showing upper melt process temperature limit of gum compositions containing a particular gum base and different polyols.

Figure 6 is a graph plotting the $T_{max}$ and $T_{process}$ values to show the melt process window for gum compositions containing a particular gum base and different combinations of polyols as bulk sweeteners.

Figure 7 is a graph showing the relationship between shear rate and viscosity ratio at different isothermal temperatures for blends of gum bases and a binary sorbitol-xylitol blend as the bulk sweetener.

Figure 8 is a graph showing processing temperature ranges which achieve a desired texture based on a viscosity ratio of p=1000 for a given gum composition and a range of shear rates.

Figure 9 is a graph showing processing temperature ranges which achieve a desired texture based on a viscosity ratio of p=100 for a given gum composition and a range of shear rates.

Figure 10 is a graph showing processing temperature ranges which achieve a desired texture based on a viscosity ratio of p=1000 for different gum compositions and a range of shear rates.

Figure 11 is a graph showing processing temperature ranges which achieve a desired texture based on a viscosity ratio of p=100 for different gum compositions and a range of shear rates.

Figures 12A and 12D show pictures of a chewing gum composition of the present invention and conventional gum, respectively. Figures 12B-C and 12E-F show scanning electron microscopy images of the soft chewing gum made by processes of the present invention compared with conventional gum.

Figure 13 shows how the peak force, average force at 2-3mm, distance at peak force, and initial slope are measured in connection with chewing gum made by some embodiments of the methods of the present invention.

Figures 14A-D show texture analysis graphs of some embodiments of the chewing gum products of the present invention and a comparison to conventional gums.

Figure 15 shows a sample texture mapping of embodiments of chewing gum made by processes of the present invention.

Figures 16A and 16B show the results of a sensory test as used in some embodiments of the chewing gum product of the present invention.

Figure 17 is a chart showing a rheological test regarding some embodiments of the products of the present invention.

Figure 18 shows a graph of thermal properties of common bulk sweeteners.

Figure 19 shows a graphical representation of some chewing gum products of the present invention having a low humectant level.

Figure 20 is a graph showing humectant amount effect on some embodiments of the process of the present invention.

Figures 21A-B and 22A-B are graphs showing employer sensory analysis (ESA) of some embodiments of the chewing gum products of the present invention.

Figure 23 is a thermograph of an embodiment of a soft chewing gum product of the present invention.

Figures 24A-C show scanning electron microscope images obtained using some embodiments of the chewing gum compositions of the present invention, compared with Figures 24D-F showing scanning electron microscope images obtained using chewing gum made by conventional methods.

Figures 25A-C show scanning electron microscope images obtained using some embodiments of the chewing gum compositions of the present invention, compared with Figures 25D-F showing scanning electron microscope images obtained using chewing gum made by conventional methods.

Figures 26A and 26D show pictures of a chewing gum composition of the present invention and conventional gum, respectively. Figures 26B-C and 26E-F show scanning electron microscopy images of a chewing gum composition of the present invention and conventional gum, respectively.

Figures 27-29 show quantitative results regarding sweetness, sourness, and flavor intensity of molten chewing gum embodiments of the present invention.

Figures 30A and 30B show scanning electron microscopy images of conventional gum.

Figures 31A and 31B show graphs of two chewing gum compositions of the present invention compared with conventional gum.

Figures 32A-B show scanning electron microscopy images of the crisp chewing gum madeby processes of the present invention compared with conventional gum, as shown in Figures 32C-D. Figure 32E shows a sensory profile of a crisp chewing gum of the present invention.

Figures 33A and 33D show pictures of a crisp chewing gum composition of the present invention and conventional gum, respectively. Figures 33B-C and 33E-F show scanning electron microscopy images of a crisp chewing gum composition of the present invention and conventional gum, respectively.

Figure 34 shows the results of a sensory test as used in some embodiments of the crisp chewing gum product of the present invention.

Figure 35 is a graph showing the relationship between complex viscosity and shear rate for different molten bases and blends at different shear rates.

Figure 36 shows a graph of thermal properties of common bulk sweeteners of the crisp chewing gum product of the present invention.

Figure 37 is a graph showing the impact of glycerine content on crispness in some embodiments of the chewing gum products of the present invention.

Figure 38 shows thermal stability test results of some embodiments of the crisp chewing gum products of the present invention.

Figure 39 shows a thermograph of some embodiments of the crisp chewing gum products of the present invention.

Figures 40-42 show quantitative results regarding sweetness and flavor burst of molten crisp chewing gum products of the present invention.

Figure 43A illustrates a system suitable for use in some embodiments of the methods of the present invention and includes an agitated tank, pump, and a depositing mechanism.

Figure 43B illustrates a system suitable for use in some embodiments of the methods of the present invention and includes a dual-tank processing arrangement.

Figure 43C illustrates a system suitable for use in some embodiments of the methods of the present invention and includes an extruding system.

In addition, any measurements, specifications and the like shown in the figures are intended to be illustrative, and not restrictive. Therefore, specific structural and functional details disclosed herein are not to be interpreted as limiting, but merely as a representative basis for teaching one skilled in the art to variously employ the present invention.

**DETAILED DESCRIPTION OF THE INVENTION**

Among those benefits and improvements that have been disclosed, other objects and advantages of this invention can become apparent from the following description taken in conjunction with the accompanying figures. Detailed embodiments of the present invention are disclosed herein; however, it is to be understood that the disclosed embodiments are merely illustrative of the invention that may be embodied in various forms. In addition, each of the examples given in connection with the various embodiments of the invention are intended to be illustrative, and not restrictive. Any alterations and further modifications of the inventive feature illustrated herein, and any additional applications of the principles of the invention as illustrated herein, which can normally occur to one skilled in the relevant art and having possession of this disclosure, are to be considered within the scope of the invention.

Throughout the specification and claims, the following terms take the meanings explicitly associated herein, unless the context clearly dictates otherwise. The phrases "in one aspect" and "in some aspects" and the like, as used herein, do not necessarily refer to the same embodiments), though it may. Furthermore, the phrases "in another aspect" and "in some other aspects" as used herein do not necessarily refer to a different aspect (embodiment), although it may. Thus, as described below, various aspects (embodiments) of the invention may be readily combined, without departing from the scope or spirit of the invention.

In addition, as used herein, the term "or" is an inclusive "or" operator, and is equivalent to the term "and/or," unless the context clearly dictates otherwise. The term "based on" is not exclusive and allows for being based on additional factors not described, unless the context clearly dictates otherwise. In addition, throughout the specification, the meaning of "a," "an," and "the" include plural references. The meaning of "in" includes "in" and "on."

As used herein, "amorphous" refers to lacking a crystalline structure.

As used herein, the phrase "bulk sweetener blend" refers to one or more sweeteners, such as, for example, sugar alcohols (i.e., polyols) such as maltitol, sorbitol, isomalt, xylitol, mannitol, erythritol, arabitol, and lactitol; monosaccharides such as glucose, fructose, galactose, mannose, xylose, arabinose, ribose, tagatose and rhamnose; di-saccharides such as sucrose, lactose, maltose, isomaltulose and trehalose; and oligosaccharides such as raffinose, sucromalt, manninotriose, stachyose, and verbascose.

As used herein, the phrase "chewing gum cud" or "gum cud" or "cud" refer to a product produced when the user chews a piece of chewing gum.

As used herein, the phrase "chewing gum mixture" refers to any combination of materials used in the manufacture of chewing gum.

As used herein, a "coating" refers to a layer covering a composition. A non-limiting example of a coating is a sugar or sugar-like composition covering a chewing gum.

As used herein, the phrase "controlled release" refers to flavor delivery over a period of time in response to a user's chewing the chewing gum product. As non-limiting examples, the controlled release can occur during a period of time, e.g., but is not limited to, 1 minute, 5 minutes, 10 minutes, 15 minutes, etc.

As used herein, the phrase "conventional gum" refers to non-molten gum.

As used herein, the term "crisp" refers to at least the following texture characteristics: a first texture characteristic of a F(peak)/F(2-3 minute) greater than 10, a second texture characteristic of a deformation to reach peak force of less than 1mm, and a third texture characteristic of a maximum stress greater than 15MPa.

As used herein, the term "crystallinity" refers to the degree of structural order in a solid. In a crystal, the atoms or molecules are arranged in a regular, periodic manner. In some non-limiting examples, crystallinity can be from 10 to 30%.

As used herein, "deposit" or "deposition" refers to placing a physical object in a specific location. As a non-limiting example, the chewing gum product can be deposited in a package.

As used herein, the term "extrusion" or "extruding" or "extrude" refers to a process used to create objects of a fixed cross-sectional profile. In some embodiments of the method of the present invention, the extrusion may include a heating step.

As used herein, the term "extrudate" refers to an extruded product.

As used herein, the phrase "flavor burst" refers to flavor intensity experienced by a user when chewing a chewing gum product of the present invention. As non-limiting examples, the flavor burst can be in the form of an initial flavor release or a controlled release.

As used herein, the term "flow" or "flowing" refers to the movement of a product in liquid state from a first location to a second location. Some non-limiting examples of how a product can be made to flow are: pumping, use of gravity, pressure through a pipe, etc.

As used herein, the phrase "glass transition temperature" refers to the temperature at which a material transitions from a hard, glassy material to a soft, rubbery material. The glass transition temperature (Tg) is determined by differential scanning calorimetry (DSC) using a Discovery DSC commercially available from TA Instruments, with Tzero pans and Hermetic lids, using a heating rate of 20 °C/minute with a heating-cooling-heating cycle at a temperature range of -85C to 180 °C. The glass transition temperature is the mid-point between the sharp shift of baselines on the heat flow vs temperature curve calculated by the software (Trios, version 4.2.1). Other meaningful points on this curve are as follows. Midpoint: Half height: Defines the midpoint as the Y-axis value halfway between the calculated onset and calculated end of the step/glass transition region. Onset: Tangent: Uses the selected starting point of glass transition region to calculate a tangent line. End: Tangent: Uses the selected ending point of glass transition region to calculate a tangent line.

As used herein, "globule" or "globules" refers to a generally round portion of a structure. Figures 13B and 13C, for example, show images obtained from scanning electron microscopy containing globules.

As used herein, the phrase "initial flavor release" or "initial flavor burst" refers to flavor delivery over a period of time in response to a user's placing the chewing gum product in his or her mouth and commencing chewing for a period of time, e.g., but not limited to, 1 second, 5 seconds, 10 seconds, 15 seconds, etc.

As used herein, unless otherwise indicated, the term "molecular weight" means weight average molecular weight and was determined by Gel Permeation Chromatography (GPC). More particularly, the molecular weight was determined by GPC using a PL-GPC 50 model GPC manufactured by Polymer Laboratories (Varian, Inc.) as a measurement device and column PLgel column, $2X10^3$Å $2X10^4$Å manufactured by Polymer Laboratories (Varian, Inc.). Polystyrene standard with molecular weight range from 6 million g/mole to 580 g/mole were used as reference and regression analysis.

As used herein, the phrase "shear rate" refers to the rate of change of velocity at which one layer of fluid passes over an adjacent layer.

As used herein, the term "soft" refers to a chewing gum product that has at least the following texture characteristics: (i) a first texture initial slope of the penetration curve of less than 20 N/mm; (ii) a second texture characteristic of a deformation to reach peak force of greater than 2.5 mm, and (iii) a third texture characteristic of a maximum stress less than 5 MPa.

As used herein, the term "substantially similar" refers to a comparison of at least two compounds. As a non-limiting example, a substantially similar texture means that a quantitative measurement of a first compound is within +/-20% of a quantitative measurement of a second compound. As another non-limiting example, a substantially similar texture can be a crumbly/cohesive texture and could vary up to +/-20%. As a further non-limiting example a substantially similar hardness/toughness could vary up to +/-20%.

As used herein, the term "sweetener" refers to an additive that provides a sweet taste.

As used herein, the term "T(m)" or "melting temperature" refers to the temperature at which a given material changes from a solid to a liquid, or melts. More particularly, as used herein, the term "T(m)" or "melting temperature" refers to the temperature at highest melting peak of gum as measured by differential scanning calorimetry (DSC).

As used herein, the term "$T_{max}$" means the temperature at which the viscosity ratio is 1000, wherein the viscosity ratio is the complex viscosity of the at least one molten gum base divided by the complex viscosity of the at least one molten polyol.

Generally, the term "T(η=100Pa.s)" refers to the temperature of a fluid at a viscosity of 100 Pa.s. More particularly, as used herein, "T(η=100Pa.s)" means the temperature at which the gum flows with a complex viscosity measured at 100Pa.s by an oscillation temperature sweep rheological test.

Generally, the term "T(η=1000Pa.s)" refers to the temperature of a fluid at a viscosity of 1000 Pa.s. More particularly, as used herein, "T(η=1000Pa.s)" means the temperature at which the gum flows with a complex viscosity measured at 1000Pa.s by an oscillation temperature sweep rheological test.

As used herein, the term "viscosity," when associated with a numerical value, is complex viscosity as determined by the methods disclosed herein.

The oscillation temperature sweep rheological test referenced above is performed using the following: equipment - ARES G2 rotational Rheometer (TA Instruments), sample dimension = 1.3mm xcp25mm or 1.5mm x φ8 mm; frequency=10 rad/s; temperature range = 25° ~ 150°C; ramp rate = 3.0 °C/min; and strain=0.01%~5%.

*Chewing gum products - all textures (soft, intermediate, crisp)*

A chewing gum composition comprising: 10 to 35%, by weight, of a gum base and 50 to 80%, by weight, of a bulk sweetener blend, based on the total weight of the chewing gum composition, wherein the bulk sweetener blend comprises xylitol, sorbitol, and at least one of isomalt and maltitol, and wherein the gum composition is a molten gum composition comprising at least one molten gum base and at least one molten polyol.

In some embodiments, the viscosity ratio (p) is 1000, wherein the viscosity ratio is the complex viscosity of the gum base divided by the complex viscosity of molten polyol.

In some embodiments, the chewing gum composition comprises the following weight percentages of the gum base, based on the total weight of the chewing gum composition: 10-35%, 10-30%, 15-35% 15-30%, 15-25%, 15-20%, 20-30% 20-35%, 25-35%, 30-35%, 20-30%, 25-30%, at least 15% , at least 20%, at least 25%, less than 35%, less than 30%, less than 25%, less than 20%, or less than 15%, where the gum base includes at least all of the polymers, resins, and fillers present in the gum composition. In some embodiments, the gum base comprises a butadiene-styrene copolymer, polyisobutylene, isobutyleneisoprene copolymer, or a combination thereof.

In some embodiments, the chewing gum composition comprises the following weight percentages of the bulk sweetener blend, based on the total weight of the chewing gum composition: 50-80%, 50-75%, 50-70%, 50-65%, 50-60%, 50-55%, 55-70%, 55-65%, 55-60%, 60-70%, 60-65% 65-70%, at least 50%, at least 55%, at least, 60%, at least 65%, less than 70%, less than 65%, less than 60%, or less than 55%.

In some embodiments, the bulk sweetener blend includes at least one of sugar alcohols (e.g., polyols) such as maltitol, sorbitol, isomalt, xylitol, mannitol, erythritol, arabitol, lactitol; or monosaccharides, such as glucose, fructose, galactose, mannose, xylose, arabinose, ribose, tagatose and rhamnose; or di-saccharides, such as sucrose, lactose, maltose, isomaltulose and trehalose; or oligosaccharides, such as raffinose, sucromalt, manninotriose, stachyose, verbascose and combinations thereof. In some embodiments, the chewing gum composition comprises a polyol or polyol blend having a weight average molecular weight of 150-350 g/mole, greater than 150 g/mole, less than 350 g/mole, 200-300 g/mole, 200-250 g/mole, or 200-225 g/mole.

In some embodiments, the chewing gum may include heat sensitive flavors, colors, or other temperature sensitive ingredients, when the chewing gum mixture is exposed to an elevated temperature for a shorter duration than conventional processes.

In some embodiments, the present invention is a method for making a chewing gum product, the method comprising the steps of: a) preparing a chewing gum mixture comprising at least one gum base and at least one polyol; b) exposing the chewing gum mixture to at least a first temperature, wherein the first temperature is a temperature at which the chewing gum mixture becomes a moldable fluid, at a first shear rate, to form a molten chewing gum mixture comprising at least one molten gum base and at least one molten polyol, and wherein the viscosity ratio (p) is 1000, wherein the viscosity ratio is the complex viscosity of the at least one molten base divided by the complex viscosity of the at least one molten polyol; and c) depositing the melted chewing gum mixture onto a surface to form the chewing gum product.

In some embodiments, the first temperature is in the following range: 80-125°C, 90-120 °C, 90-110 °C, 90-100°C, 125-160°C, 130-150°C, or 130-140°C. In some embodiments, the first temperature is less than $T_{max}$.

In some embodiments, the chewing gum mixture is exposed to the following shear rate: 0.1 to 2500 $s^{-1}$, 10 to 2500 $s^{-1}$, 100 to 2500 $s^{-1}$, 200 to 2500 $s^{-1}$, 300 to 2500 $s^{-1}$, 400 to 2500 $s^{-1}$, 500 to 2500 $s^{-1}$, 600 to 2500 $s^{-1}$, 700 to 2500 $s^{-1}$, 800 to 2500 $s^{-1}$, 900 to 2500 $s^{-1}$, 1000 to 2500 $s^{-1}$, 1100 to 2500 $s^{-1}$, 1200 to 2500 $s^{-1}$, 1300 to 2500 $s^{-1}$, 1400 to 2500 $s^{-1}$, 1500 to 2500 $s^{-1}$, 1600 to 2500 $s^{-1}$, 1700 to 2500 $s^{-1}$, 1800 to 2500 $s^{-1}$, 1900 to 2500 $s^{-1}$, 2000 to 2500 $s^{-1}$, 2100 to 2500 $s^{-1}$, 2200 to 2500 $s^{-1}$, 2300 to 2500 $s^{-1}$, 2400 to 2500 $s^{-1}$, 10 to 2400 $s^{-1}$, 10 to 2300 $s^{-1}$, 10 to 2200 $s^{-1}$, 10 to 2100 $s^{-1}$, 10 to 2000 $s^{-1}$, 10 to 1900 $s^{-1}$, 10 to 1800 $s^{-1}$, 10 to 1700 $s^{-1}$, 10 to 1600 $s^{-1}$, 10 to 1500 $s^{-1}$, 10 to 1400 $s^{-1}$, 10 to 1300 $s^{-1}$, 10 to 1200 $s^{-1}$, 10 to 1100 $s^{-1}$, 10 to 1000 $s^{-1}$, 100 to 1000 $s^{-1}$, 200 to 1000 $s^{-1}$, 300 to 1000 $s^{-1}$, 400 to 1000 $s^{-1}$, 500 to 1000 $s^{-1}$, 600 to 1000 $s^{-1}$, 700 to 1000 $s^{-1}$, 800 to 1000 $s^{-1}$, 900 to 1000 $s^{-1}$, 10 to 900 $s^{-1}$, 10 to 800 $s^{-1}$, 10 to 700 $s^{-1}$, 10 to 600 $s^{-1}$, 10 to 500 $s^{-1}$, 10 to 400 $s^{-1}$, 10 to 300 $s^{-1}$, 10 to 200 $s^{-1}$, 10 to 100 $s^{-1}$, 100 to 2400 $s^{-1}$, 200 to 2300 $s^{-1}$, 300 to 2200 $s^{-1}$, 300 to 1000 $s^{-1}$, 400 to 2100 $s^{-1}$, 500 to 2000 $s^{-1}$, 600 to 1900 $s^{-1}$, 700 to 1800 $s^{-1}$, 800 to 1700 $s^{-1}$, 900 to 1600 $s^{-1}$, 1000 to 1500 $s^{-1}$, 1100 to 1600 $s^{-1}$, 1200 to 1500 $s^{-1}$, 1300 to 1400 $s^{-1}$, 100 to 900 $s^{-1}$, 200 to 800 $s^{-1}$, 300 to 700 $s^{-1}$, 400 to 600 $s^{-1}$, 500 to 600 $s^{-1}$, 500 to 550 $s^{-1}$, 500 to 525 $s^{-1}$, 400 to 500 $s^{-1}$, 500 $s^{-1}$, 515 $s^{-1}$, 520 $s^{-1}$, or 525 $s^{-1}$.

In some embodiments, the chewing gum mixture is exposed to the melting temperature for a residence time of: less than 15 minutes, less than 10 minutes, less than 9 minutes, less than 8 minutes, less than 7 minutes, less than 6 minutes, less than 5 minutes, less than 4 minutes, less than 3 minutes, less than 2 minutes, less than 1 minute, from 1 to 10 minutes, from 2 to 10 minutes, from 3 to 10 minutes, from 4 to 10 minutes, from 5 to 10 minutes, from 6 to 10 minutes, from 7 to 10 minutes, from 8 to 10 minutes, from 9 to 10 minutes, from 1 to 9 minutes, from 1 to 8 minutes, from 1 to 7 minutes, from 1 to 6 minutes, from 1 to 5 minutes, from 1 to 4 minutes, from 1 to 3 minutes, from 1 to 2 minutes, from 2 to 9 minutes, from 3 to 8 minutes, from 4 to 7 minutes, or from 5 to 6 minutes.

In some embodiments, the processes described herein can be used to make chewing gum products of the present invention.

The chewing gum product can be prepared using a batch method or a continuous method or a combination thereof.

*Soft chewing gum product*

In some embodiments, the gum composition is a soft chewing gum composition including: a gum base and 50 to 80 % by weight (wt%) of a bulk sweetener blend, wherein the bulk sweetener blend comprises: xylitol, sorbitol, and at least one of isomalt and maltitol; and wherein the bulk sweetener blend has a glass transition temperature below 0 °C; and a crystallinity of less than 25%.

A morphology of the soft chewing gum product is determined, when tested, by scanning electron microscopy at a resolution of 100 microns. In some embodiments, for example, the morphology comprises at least one continuous amorphous phase. In some embodiments, the bulk sweetener blend is amorphous.

In some embodiments, the soft chewing gum product has at least the following texture characteristics, when tested, by a penetration test: i) a first texture initial slope of less than 20 N/mm, ii) a second texture characteristic of a deformation to reach peak force of greater than 2.5 mm, and iii) a third texture characteristic of a maximum stress less than 5 MPa.

In some embodiments, the bulk sweetener blend has the following glass transition temperature: below 5°C, below 0°C, below -5°C, below -10°C, below -15°C, below -20°C, below -25°C, below -30°C, from -30 to 0°C, from -25 to 0°C, from -20 to 0°C, from -15 to 0°C, from -10 to 0°C, from -5 to 0°C, from -30 to -5°C, from -30 to -10°C, from -30 to -15°C, from -30 to -20°C, from -30 to -25°C, from -25 to -5°C, from -20 to -10°C, or from -15 to -10°C.

In some embodiments, the bulk sweetener blend has the following crystallinity: less than 40%, less than 30%, less than 25%, less than 20%, less than 15%, less than 10%, from 0.1 to 20%, from 1 to 20%, from 5 to 20%, from 10 to 20%, 15 to 20%, from 0.1 to 15%, from 0.1 to 10%, from 0.1 to 5%, from 5 to 15%, from 10 to 15%, from 0.1 to 15%, from 0.1 to 10%, from 0.1 to 5%, from 5 to 15%, or from 10 to 15%.

In some embodiments, the bulk sweetener blend includes at least 3 different polyols. In some embodiments, the bulk sweetener blend includes xylitol, sorbitol, and a third polyol selected from isomalt, maltitol, and combinations thereof. In some embodiments, the bulk sweetener blend further includes erythritol.

In some embodiments of the soft chewing gum, sorbitol is present in an amount of: from 10 to 70%, or from 18 to 50%, or from 27 to 40%; the xylitol is present in an amount of from 15 to 90%, 12 to 57%, or from 23 to 50%, or from 30 to 47%; and the third polyol of isomalt, maltitol, and combinations thereof, is present in an amount of from 1 to 60%, 5 to 61%, or from 14 to 43%, or from 21 to 33%, all % being by weight, based on the total weight of the bulks sweetener blend. In some embodiments. In some embodiments, the bulk sweetener blend comprises 10 to 70 wt% sorbitol, 15 to 90 wt% xylitol, and 1 to 60% isomalt, maltitol, or combinations thereof.

In some embodiments, the chewing gum product has the following first initial slope: less than 25 N/mm, less than 20 N/mm, less than 15 N/mm, less than 10 N/mm, less than 5 N/mm, less than 1 N/mm, from 1 to 20 N/mm, from 5 to 20 N/mm, from 10 to 20 N/mm, from 15 to 20 N/mm, from 1 to 15 N/mm, or from 5 to 10 N/mm.

In some embodiments, the chewing gum product has a texture characteristic of a deformation to reach peak force of: greater than 1.5 mm, greater than 2.5 mm, greater than 5 mm, greater than 7.5 mm, greater than 10 mm, from 2.5 mm to 10 mm, from 5 mm to 10 mm, from 7.5 mm to 10 mm, from 2.5 mm to 7.5 mm, from 2.5 mm to 5 mm, or from 5 mm to 7.5 mm.

In some embodiments, the chewing gum product has a texture characteristic of a maximum stress of: less than 6 MPa, less than 5 MPa, less than 4 MPa, less than 3 MPa, less than 2 MPa, less than 1 MPa, from 1MPa to 5 MPa, from 2MPa to 5 MPa, from 3MPa to 5 MPa, from 4MPa to 5 MPa, from 1MPa to 4 MPa, from 1MPa to 3 MPa, from 1MPa to 2 MPa, from 2MPa to 4 MPa, from 2MPa to 3 MPa, or from 3MPa to 4MPa.

In some embodiments, the humectant content of the soft chewing gum product having a high crystallinity (e.g., but not limited to, greater than 90%) bulk sweetener is from 5 to 16 wt%; and for a soft chewing gum product with a low crystallinity (e.g., but not limited to, less than 40%) bulk sweetener, the humectant content could be in the range of from 0 to 5 wt%, for example.

In some embodiments, the present invention is a method for making a soft chewing gum product comprising the steps of:

a) preparing a chewing gum mixture;

b) exposing the chewing gum mixture to a plurality of processing conditions to obtain a molten chewing gum mixture ; wherein the molten chewing gum mixture contains a molten chewing gum base with a complex shear viscosity at 80°C of less than 600 Pa.s and at least one molten polyol; and wherein the processing conditions comprise:

i) a melting temperature in the range of [(T(m)+ T($\eta$=100Pa.s))/2 + 5] to $T_{max}$; and

ii) a molding temperature in the range of [T($\eta$=1000Pa.s)] measured at gum heating to [T($\eta$=1000Pa.s)] measured at gum cooling; and

c) depositing the chewing gum mixture onto a surface to form the chewing gum product.

In some embodiments, the method includes extruding or pumping the chewing gum mixture. In some embodiments, the method comprises extruding the chewing gum mixture using a nozzle at 120 to 130 ° C. In some embodiments, the method includes exposing the chewing gum mixture to a melting temperature of from 80°C to 125°C to form a melted chewing gum mixture. In some embodiments, the method includes exposing the chewing gum mixture to the melting temperature for a residence time of less than 10 minutes and to a shear rate of 10 to 1000 $s^{-1}$.

In some embodiments, the processing conditions include a melting temperature in the following range: from [(T(m)+T($\eta$=100Pa.s))/2] to $T_{max}$, from [(T(m)+T($\eta$=100Pa.s))/2+1] to $T_{max}$, from [(T(m)+T($\eta$=100Pa.s))/2+2] to $T_{max}$, from [(T(m)+T($\eta$=100Pa.s))/2+3] to $T_{max}$, from [(T(m)+T($\eta$=100Pa.s))/2+4] to $T_{max}$, from [(T(m)+T($\eta$=100Pa.s))/2+5] to $T_{max}$, from [(T(m)+T($\eta$=100Pa.s))/2+10] to $T_{max}$, or from [(T(m)+T($\eta$=100Pa.s))/2+15] to $T_{max}$.

In some embodiments, the melting temperature is in the range of: from 80 to 125°C, from 80°C to 120°C, from 80°C to 115°C, from 80°C to 110°C, from 80°C to 105°C, from 80°C to 100°C, from 80°C to 95°C, from 80°C to 90°C, from 80°C to 85°C, 85°C to 120°C, from 90°C to 115°C, from 95°C to 110°C, or from 100°C to 105°C, 85°C to 125°C, from 90°C to 125°C, from 95°C to 125°C, from 100°C to 125°C, from 105°C to 125°C, from 110°C to 125°C, from 115°C to 125°C, from 120°C to 125°C, from 90 to 115°C, from 95 to 115°C, from 100 to 115°C, from 105 to 115°C, from 100 to 115°C, from 75 to 125°C, from 80 to 115°C, from 90 to 110°C, from 90 to 105°C, from 90 to 95°C, from 95 to 110°C, from 100 to 105°C, 60 to 100°C, from 65 to 100°C, from 70 to 100°C, from 75 to 100°C, from 80 to 100°C, from 85 to 100°C, from 90 to 100°C, from 95 to 100°C, from 60 to 95°C, from 60 to 90°C, from 60 to 85°C, from 60 to 80°C, from 60 to 75°C, from 60 to 70°C, from 60 to 65°C, from 65 to 95°C, from 70 to 90°C, from 75 to 85°C, or from 80 to 85°C.

In some embodiments, the molding temperature is in the range of: from 105 °C to 140 °C, from 110°C to 140 °C, from 115 °C to 140 °C, from 120 °C to 140 °C, from 125 °C to 140 °C, from 130 °C to 140 °C, from 135 °C to 140 °C, from 110 °C to 135 °C, from 110°C to 130 °C, from 110 °C to 125 °C, from 110 °C to 120 °C, from 110 °C to 115 °C, from 115 °C to 135 °C, from 120 °C to 125 °C, or from 125 °C to 130 °C.

In some embodiments, the chewing gum mixture has the following complex shear viscosity at 80°C: less than 650 Pa.s, less than 600 Pa.s, less than 500 Pa.s, less than 400 Pa.s, less than 300 Pa.s, less than 200 Pa.s, less than 100 Pa.s, from 100 to 600 Pa.s, from 100 to 500 Pa.s, from 100 to 400 Pa.s, from 100 to 300 Pa.s, from 100 to 200 Pa.s, from 200 to 600 Pa.s, from 300 to 600 Pa.s, from 400 to 600 Pa.s, from 500 to 600 Pa.s, from 200 to 500 Pa.s, or from 300 to 400 Pa.s.

In some embodiments, the chewing gum mixture has a humectant content of the following percent, by weight, based on the total weight of the chewing gum mixture: less than 6%, less than 5%, less than 4,% less than 3%, less than 2 %, less than 1 %, less than 0.1 %, from 0.1 to 5 %, from 0.1 to 4 %, from 0.1 to 3 %, from 0.1 to 2 %, from 0.1 to 1 %, from 1 to 5 %, from 2 to 5 %, from 3 to 5 %, from 4 to 5 %, from 2 to 4 %, or from 2 to 3 %.

*Intermediate chewing gum product*

In some embodiments, the gum composition is an intermediate chewing gum composition comprising: a gum base; and 50 to 80 weight % of a bulk sweetener blend, wherein the bulk sweetener blend comprises xylitol and sorbitol, has a humectant content of less than 5 weight%, and has the properties of: a glass transition temperature below 0°C, and a crystallinity of 20 to 70%.

In some embodiments of the intermediate chewing gum, the bulk sweetener blend comprises: from 70 to 95% of xylitol, and from 5 to 30% of sorbitol, all % being by weight, based on the total weight of the bulks sweetener blend.

In some embodiments, the bulk sweetener blend comprises three polyols as follows: xylitol in an amount of at least 15%, such as at least 18%, or 15-90%, 15-80%, 20-70%, 20-80%, 29-72%, 22-68%, 25-67%, 25-75%, 27-72%, 30-70%, 30-60%, 40-72%, 40-60%, 40-50%, 60-75%, 65-75%, 70-75%, 60-70%, 60-65%, or 65-70%; sorbitol in an amount of less than 65%, such as less than 60%, or 1-80%, 1-70%, 1-40%, 1-30%, 1-15%, 5-30%, 7-25%, 8-20%, 10-80%, 11-34%, 12-21%, 12-14%, 15-70%, 15-30%, 15-25%, 15-20%, 20-65%, 20-30%, 20-25%, 22-60%, 25-55%, 25-30%, or 30-50%; and a third polyol including at least one of isomalt and maltitol (or combinations thereof) in an amount of less than 65%, such as less than 60%, or 1-60%, 1-30%, 1-25%, 2-50%, 5-49%, 5-10%, 7-9%, 10-70%, 10-60%, 10-45%, 15-65%, 17-60%, 17-55%, 20-52%, 25-67%, or 30-40%, all % being by weight, based on the total weight of the bulk sweetener blend, wherein a weight ratio of the polyol present in a greatest amount to the polyol present in the smallest amount is great than 1.5, such as greater than 3.

In some embodiments of the intermediate chewing gum product, the composition comprises isomalt in a weight percent, based on the total weight of the bulk sweetener blend, of: less than 10 weight %, less than 9 weight %,from 8 to 9.9%, from 8.5 to 9.9%, from 9 to 9.9%, from 9.5 to 9.9%, from 8 and 9.5%, from 8 to 9%, from 8 to 8.5%, from 8.5 to 9.5%, from 8.5 to 9%, or from 9 to 9.5%.

In some embodiments, the chewing gum product comprises a bulk sweetener blend comprising; less than 65 wt% isomalt, at least 15 wt% xylitol, and less than 65 wt% sorbitol, all based on the total weight of the bulk sweetener blend, wherein a weight ratio between the highest content polyol and lowest content polyol is greater than 1.5.

In some embodiments of the intermediate chewing gum product, the bulk sweetener blend has a glass transition temperature of: below 5°C, below 0°C, below -5°C, below -10°C, below - 15°C, below -20°C, below -25°C, below -30°C, from -30 to 0°C, from -25 to 0°C, from -20 to 0°C, from -15 to 0°C, from -10 to 0°C, from -5 to 0°C, from -30 to -5°C, from -30 to -10°C, from -30 to -15°C, from -30 to -20°C, from -30 to -25°C, from -25 to -5°C, from -20 to -10°C, or from -15 to -10°C.

In some embodiments of the intermediate chewing gum product, the bulk sweetener blend has a crystallinity of: 20-70%, 25-70%, 30-70%, 35-70%, 40-70%, 45-70%, 50-70%, 55-70%, 60-70%, 65-70%, 20-65%, 20-60%, 20-55%, 20-50%, 20-45%, 20-40%, 20-35%, 20-30%, 20-25%, 25-65%, 30-60%, 35-55%, 40-50%, 45-50%, or 40%.

In some embodiments of the intermediate chewing gum product, the crystallinity of the composition is from 10 to 30%, 10 to 20%, 5 to 10%, 1-20%, or 1-10% less than a crystallinity of a conventional (non-molten), non-coated chewing gum composition, as measured by DSC. In some embodiments, the intermediate chewing gum product has a texture substantially similar to the texture of conventional (non-molten), non-coated chewing gum.

In some embodiments, the intermediate chewing gum product includes the following weight percent of humectant, based on the total weight of the chewing gum product, of: 0-6%, 0-5%, 0.1-5%, 1-5%, 2-5%, 3-5%, 4-5%, 0.1-4%, 0.1-3%, 0.1-2%, or 0.1-1%.

In some embodiments, the present invention is a method for making an intermediate chewing gum product, comprising the steps of:

a) preparing a chewing gum mixture;
b) exposing the chewing gum mixture to a melting temperature from 80°C to 125°C to form a melted chewing gum mixture;
c) conveying the chewing gum mixture at a temperature at or above the melting temperature of the chewing gum mixture; and
d) depositing the melted chewing gum mixture onto a surface to form the chewing gum product;
wherein the chewing gum mixture is exposed to:

i) the melting temperature for a residence time of less than 10 minutes; and
ii) a shear rate of 10 to 1000 $s^{-1}$.

In some embodiments of the intermediate chewing gum product, the chewing gum mixture is exposed to a melting temperature to form a melted chewing gum mixture, wherein the melting temperature is: from 80°C to 125°C, from 85°C to 125°C, from 90°C to 125°C, from 95°C to 125°C, from 100°C to 125°C, from 105°C to 125°C, from 110°C to 125°C, from 115°C to 125°C, from 120°C to 125°C, from 90 to 105°C, from 90 to 95°C, from 90 to 100°C, from 100 to 110°C, from 105 to 110°C, or from 92°C to 108°C.

In some embodiments, the molding temperature is from 60 to 95°C, from 65 to 95°C, from 70 to 95°C, from 75 to 95°C, from 80 to 95°C, from 85 to 95°C, from 90 to 95°C, from 60 to 90°C, from 60 to 85°C, from 60 to 80°C, from 60 to 75°C, from 60 to 70°C, from 60 to 65°C, from 65 to 90°C, from 70 to 85°C, or from 75 to 80°C.

In some embodiments, the present invention is a method for making the intermediate chewing gum product according to some embodiments of the present invention, comprising the steps of:

a) preparing a chewing gum mixture;
b) exposing the chewing gum mixture to a plurality of processing conditions;
wherein the chewing gum mixture contains:

i) chewing gum base with a complex shear viscosity at 80°C of less than 600 Pa.s; and
ii) a humectant content of less than 5 weight%;

wherein the processing conditions comprise:

i) melting zones of temperature in the range of [(T(m)+ T(η=100Pa.s))/2] to $T_{max}$; and
ii) molding temperature in the range of [T(η=1000Pa.s)] measured at gum heating to [T(η=1000Pa.s)] measured at gum cooling; and

c) depositing the chewing gum mixture onto a surface to form the chewing gum product.

In some embodiments, the method includes extruding or pumping the chewing gum mixture. In some embodiments, the method comprises extruding the chewing gum mixture using a nozzle at 120 to 130 ° C.

In some embodiments of the method for making the intermediate chewing gum product, the melting temperature is in the range of: from 90 to 110°C, from 90 to 105°C, from 90 to 100°C, from 90 to 95°C, from 95 to 110°C, from 100 to 110°C, from 105 to 110°C, from 95 to 105°C, from 93 to 102°C, from 90 to 100°C, or from 95 to 100°C.

In some embodiments, the intermediate chewing gum mixture has a shear viscosity at 80°C of: less than 650 Pa.s, less than 600 Pa.s, less than 500 Pa.s, less than 400 Pa.s, less than 300 Pa.s, less than 200 Pa.s, less than 100 Pa.s, from 100 to 600 Pa.s, from 100 to 500 Pa.s, from 100 to 400 Pa.s, from 100 to 300 Pa.s, from 100 to 200 Pa.s, from 200 to 600 Pa.s, from 300 to 600 Pa.s, from 400 to 600 Pa.s, from 500 to 600 Pa.s, from 200 to 500 Pa.s, or from 300 to 400 Pa.s.

In some embodiments of the method for making intermediate chewing gum product, the processing conditions include melting zones having a temperature in the range of: [(T(m)+ T(η=100Pa.s))/2] to $T_{max}$, as specified above for the soft chewing gum products. All suitable variations of the temperatures ranges for the melting zones are the same for the intermediate chewing gum products, but not necessarily limited to those, as disclosed above for the soft chewing gum products.

*Crisp chewing gum product*

In some embodiments, the present invention is a composition, comprising:
a crisp chewing gum product, comprising:

50 weight % to 70 weight % bulk sweetener blend, based on the total weight of the chewing gum product;
wherein the bulk sweetener blend has the properties of:

i) a glass transition temperature of greater than 20°C, and
ii) a crystallinity of less than 30%,

wherein the bulk sweetener blend is amorphous; and
wherein the bulk sweetener blend has either:

i) a glycerin/maltitol weight ratio of less than 0.09,
ii) a glycerin/isomalt weight ratio of less than 0.09,
iii) a sorbitol/isomalt weight ratio of less than 0.5,
iv) a xylitol/isomalt weight ratio of less than 0.5, or
v) a maltitol/isomalt weight ratio of between 0.01 and 1.5, or
vi) any combination thereof.

A morphology of the crisp chewing gum product is determined, when tested, by scanning electron microscopy at a resolution of 100 microns. In some embodiments, the morphology comprises a plurality of globules. In some embodiments, the plurality of globules comprise gum base. In some embodiments, the gum base comprises: butyl rubber, polyisobutene, polyisobutylene, colophonium resin, styrene-butadiene rubber, or any combination thereof.

In some embodiments, the crisp chewing gum product has at least the following texture characteristics when the crisp chewing gum product is tested using a penetration test:

i) a first texture characteristic of a F(peak)/F(2-3 mm) greater than 10,
ii) a second texture characteristic of a deformation to reach peak force of less than 1 mm, and
iii) a third texture characteristic of a maximum stress greater than 15 MPa.

In some embodiments, the bulk sweetener blend of the crisp chewing gum product has a glass transition temperature of: from 20.1 to 40°C, or greater than 30°C. In some embodiments, the crystallinity is from 20% to 30%, or less than 15%. In some embodiments, the crisp chewing gum product has a reduction in hardness of from 20 to 40% when the crisp chewing gum product is tested after the chewing gum product is chewed for 1 minute.

In some embodiments, the crisp chewing gum product includes a plurality of bursts of flavor profiles, including: (i) an initial flavor burst and (ii) a controlled release flavor burst.

In some embodiments, the present invention is a method for making the crisp chewing gum product according to some embodiments of the present invention, comprising the steps of:

a) preparing a chewing gum mixture;
b) exposing the chewing gum mixture to a melting temperature from 127°C to 160°C to form a melted chewing gum mixture;
c) conveying the chewing gum mixture at a temperature at or above the melting temperature of the chewing gum mixture; and
d) depositing the melted chewing gum mixture onto a surface to form the crisp chewing gum product;
wherein the chewing gum mixture is exposed to:

i) the melting temperature for a residence time of less than 10 minutes; and
ii) a shear rate of 0.1 to 1000 $s^{-1}$.

In some embodiments, the present invention is a method for making the crisp chewing gum product according to some embodiments of the present invention, comprising:

a) preparing a chewing gum mixture;
b) exposing the chewing gum mixture to a plurality of processing conditions;
wherein the chewing gum mixture contains:

i) chewing gum base with a complex shear viscosity at 80°C of less than 600 Pa.s; and
ii) a humectant content of less than 13 weight%;

wherein the extruding conditions comprise:

i) melting zones of temperature in the range of [(T(m)+ T($\eta$=100Pa.s))/2] to $T_{max}$;
ii) molding temperature in the range of [T($\eta$=1000Pa.s)] measured at gum heating to [T($\eta$=1000Pa.s)] measured at gum cooling; and

c) depositing the chewing gum mixture onto a surface to form the crisp chewing gum product.

In some embodiments, the method includes extruding or pumping the chewing gum mixture. In some embodiments, the method comprises extruding the chewing gum mixture using a nozzle at 120 to 130 ° C. In some embodiments, the chewing gum mixture is pumped using a depositing pump, a needle valve, or any combination thereof.

In some embodiments of the method for making the crisp chewing gum product, the melting temperature is in the range of: from 120 °C to 160°C, from 125 °C to 160°C, from 127 °C to 160°C, from 130 °C to 160°C, from 140 °C to 160°C, from 145 °C to 160°C, from 150 °C to 160°C, from 155 °C to 160°C, from 120 °C to 155°C, from 120 °C to 150°C, from 120 °C to 145°C, from 120 °C to 140°C, from 120 °C to 135°C, from 120 °C to 130°C, from 120 °C to 125°C, from 125 °C to 155°C, from 130°C to 135°C, from 130°C to 150°C, from 135 °C to 140°C, from 135 °C to 145°C, from 140 °C to 145°C, from 140 °C to 150°C, or from 145 °C to 150°C.

In some embodiments of the method for making the crisp chewing gum product, the molding temperature is in the range of: from 105 °C to 140 °C, from 110°C to 140 °C, from 115°C to 140 °C, from 120 °C to 140 °C, from 125 °C to 140 °C, from 130 °C to 140 °C, from 135 °C to 140 °C, from 110°C to 135 °C, from 110 °C to 130 °C, from 110 °C to 125 °C, from 110°C to 120 °C from 110 °C to 115 °C, from 115 °C to 135 °C, from 120 °C, from 120 °C to 125 °C, or from 125 °C to 130 °C.

In some embodiments, the preparing comprises:

a) heating the chewing gum base to a temperature of 60 to 80 °C to form a molten chewing gum base,
b) mixing the molten chewing gum base with at least one polyol, at least one softener, and at least one humectant at 55 to 60 °C to form a gum dough, and
c) adding a flavor to the gum dough at a temperature of 55 to 60 °C to form a flavored gum dough.

In some embodiments of the crisp chewing gum product, the bulk sweetener blend of the crisp chewing gum product has a glass transition temperature of: greater than 10°C, greater than 15°C, greater than 20°C, greater than 25°C, greater than 30°C, greater than 35°C, greater than 40°C, greater than 45°C, greater than 50°C, 10-50°C, 15-50°C, 20-50°C, 25-50°C, 30°C-50°C, 35-50°C, 40-50°C, 45-50°C, 10 -45°C, 10-40°C, 10-35°C, 10-30°C, 10°-25°C, 10-20°C, 10-15°C, 15-45°C, 20-40°C, 25-35°C, 30-35°C, or 25-30°C.

In some embodiments, the bulk sweetener blend of the crisp chewing gum product has a crystallinity of: less than 30%, less than 29%, less than 28%, less than 27%, less than 26%, less than 25%, less than 24%, less than 23%, less than 22%, less than 21%, less than 20%, less than 19%, less than 18%, less than 17%, less than 16%, less than 15%, less than 14%, less than 13%, less than 12%, less than 11%, less than 10%, less than 9%, less than 8%, less than 7%, less than 6%, less than 5%, less 4%, less than 3%, less than 2% less than 1%, 0%, 0.1-30%, 1-30%, 5-30%, 10-30%, 15-30%, 20-30%, 25-30%, 0.1-25%, 0.1-20%, 0.1-15%, 0.1-10%, 0.1-5%, 1-25%, 5-20%, or 10-15%.

In some embodiments, the bulk sweetener blend of the crisp chewing gum product is a combination of glycerin and maltitol. In some embodiments, the glycerin/maltitol has a weight ratio of: less than 0.1, less than 0.09, less than 0.08, less than 0.07, less than 0.06, less than 0.05, less than 0.04, less than 0.03, less than 0.02, less than 0.01, 0.01 to 0.09, 0.01 to 0.08, 0.01 to 0.07, 0.01 to 0.06, 0.01 to 0.05, 0.01 to 0.04, 0.01 to 0.03, 0.01 to 0.02, 0.02 to 0.09, 0.03 to 0.09, 0.04 to 0.09, 0.05 to 0.09, 0.06 to 0.09, 0.07 to 0.09, 0.08 to 0.09, 0.02 to 0.08, 0.03 to 0.07, 0.04 to 0.06, 0.04 to 0.05, 0.05 to 0.06.

In some embodiments, the bulk sweetener blend of the crisp chewing gum product is a combination of glycerin and isomalt. In some embodiments, the glycerin/isomalt has a weight ratio of: less than 0.1, less than 0.09, less than 0.08, less than 0.07, less than 0.06, less than 0.05, less than 0.04, 0.03, less than 0.02, less than 0.01, 0.01 to 0.09, 0.01 to 0.08, 0.01 to 0.07, 0.01 to 0.06, 0.01 to 0.05, 0.01 to 0.04, 0.01 to 0.03, 0.01 to 0.02, 0.02 to 0.09, 0.03 to 0.09, 0.04 to 0.09, 0.05 to 0.09, 0.06 to 0.09, 0.07 to 0.09, 0.08 to 0.09, 0.02 to 0.08, 0.03 to 0.07, 0.04 to 0.06, 0.04 to 0.05, or 0.05 to 0.06.

In some embodiments, the bulk sweetener blend of the crisp chewing gum product is a combination of sorbitol and isomalt. In some embodiments, the sorbitol/isomalt has a weight ratio of: less than 0.6, less than 0.5, less than 0.4, less than 0.3, less than 0.2, less than 0.1, 0.01 to 0.5, 0.1 to 0.5, 0.2 to 0.5, 0.3 to 0.5, 0.4 to 0.5, 0.1 to 0.4, 0.1 to 0.3, 0.1 to 0.2, 0.2 to 0.4, 0.3 to 0.4, 0.2 to 0.3.

In some embodiments, the bulk sweetener blend of the crisp chewing gum product is a combination of xylitol and isomalt. In some embodiments, the xylitol/isomalt has a weight ratio of: less than 0.6, less than 0.5, less than 0.4, less than 0.3, less than 0.2, less than 0.1, 0.01 to 0.5, 0.1 to 0.5, 0.1 to 0.4, 0.1 to 0.3, 0.1 to 0.2, 0.2 to 0.5, 0.3 to 0.5, 0.4 to 0.5, 0.2 to 0.4, 0.3 to 0.4, or 0.2 to 0.3.

In some embodiments, the bulk sweetener blend of the crisp chewing gum product is a combination of maltitol and isomalt. In some embodiments, the maltitol/isomalt has a weight ratio of: 0.01-3, 0.01-2, 0.01-1.5, 0.01-1, 0.1-1, 0.2-1, 0.3-1, 0.4-1, 0.5-1, 0.6-1, 0.7-1, 0.8-1, 0.9 and 1, 0.01-0.99, 0.01-0.9, 0.01-0.8, 0.01-0.7, 0.01-0.6, 0.01-0.5, 0.01-0.4, 0.01-0.3, 0.01-0.2, 0.01-0.1, 0.1-0.9, 0.2-0.8, 0.3-0.7, or 0.4-0.6. In some embodiments, the maltitol/isomalt has a weight ratio of: 50:50, 40:60, 60:40, 30:70, 70:30, 80:20, 20:80, 10:90, or 90:10.

In some embodiments of the crisp chewing gum, the bulk sweetener blend comprises: a first polyol selected from isomalt or maltitol, and a second polyol selected from xylitol or sorbitol, wherein when the second polyol is xylitol, then xylitol is present in an amount of less than 10% by weight, and when the second polyol is sorbitol, the then sorbitol is present in an amount of less than 15% by weight, based on the total weigh to of the bulk sweetener blend.

In some embodiments of the crisp chewing gum, the bulk sweetener blend comprises: xylitol, sorbitol and a third polyol selected from isomalt or maltitol, wherein the xylitol is present in an amount of less than 10% by weight, the sorbitol is present in an amount of less than 15% by weight, and the third polyol is present in an amount of at least 85% by weight, based on the total weight of the bulk sweetener blend.

Without being bound by theory, in some embodiments, the humectant content, (e.g., where the humectant is selected from, but not limited to, glycerin, propylene glycol, water, lactic acid, honey, and combinations thereof) has an impact on the crispness of the chewing gum product because it can plasticize the glassy domain of the molten polyol and increase its ability to dissipate mechanical energy. Thus, an increase in the humectant decreases these characteristics and makes the crisp chewing gum product less brittle. As shown in the examples, a small increase of glycerin in the formula dramatically reduces the chewing gum crispness.

In some embodiments, the crispness can be quantified by a texture analyzer penetration test, which quantifies three parameters: (i) F(peak)/F(2-3mm), which is the force required to alter a product by 2-3mm, (ii) deformation to reach peak force, and (iii) maximum stress needed to deform the product. In some embodiments, F(peak)/F(2-3mm) of the crisp chewing gum product is: greater than ION, greater than 15N, greater than 20N, greater than 25N, greater than 30N, greater than 35N, greater than 40N, greater than 45N, greater than 50N, greater than 55N, 10N to 55N, 15N to 55N, 20N to 55N, 25N to 55N, 30N to 55N, 35N to 55N, 40N to 55N, 45N to 55N, 50N to 55N, 10N to 50N, 10N to 45N, 10N to 40N, 10N to 35N, 10N to 30N, 10N to 25N, 10N to 20N, 10N to 15N, 15N to 50N, 20N to 45N, 25N to 40N, or 30N to 35N.

In some embodiments, the deformation to reach peak force of the crisp chewing gum product is: less than 1mm, less than 0.9mm, less than 0.8mm, less than 0.7mm, less than 0.6mm, less than 0.5mm, less than 0.4mm, less than 0.3mm, less than 0.2mm, less than 0.1mm, from 0.1mm to 1mm, from 0.2mm to 1mm, from 0.3mm to 1mm, from 0.4mm to 1mm, from 0.5mm to 1mm, from 0.6mm to 1mm, from 0.7mm to 1mm, from 0.8mm to 1mm, from 0.9mm to 1mm, from 0.1mm to 0.9mm, from 0.1mm to 0.8mm, from 0.1mm to 0.7mm, from 0.1mm to 0.6mm, from 0.1mm to 0.5mm, from 0.1mm to 0.4mm, from 0.1mm to 0.3mm, from 0.1mm to 0.2mm, from 0.2mm to 0.9mm, from 0.3mm to 0.8mm, from 0.4mm to 0.7mm, from 0.5mm to 0.6mm.

In some embodiments, the maximum stress of the crisp chewing gum product is: greater than 15MPa, greater than 20MPa, greater than 25MPa, greater than 30MPa, greater than 35MPa, greater than 40MPa, greater than 45MPa, greater than 50MPa, greater than 55MPa, greater than 60MPa, greater than 65MPa, greater than 70MPa, greater than 75MPa, is greater than 80MPa, greater than 85MPa, greater than 90MPa, greater than 95MPa, greater than 100MPa, greater than 105MPa, greater than 110MPa, greater than 115MPa, greater than 120MPa, greater than 125MPa, from 15MPa to 125MPa, from 20MPa to 125MPa, from 25MPa to 125MPa, from 30MPa to 125MPa, from 35MPa to 125MPa, from 40MPa to 125MPa, from 45MPa to 125MPa, from 50MPa to 125MPa, from 55MPa to 125MPa, from 60MPa to 125MPa, from 65MPa to 125MPa, from 70MPa to 125MPa, from 75MPa to 125MPa, from 80MPa to 125MPa, from 85MPa to 125MPa, from 90MPa to 125MPa, from 95MPa to 125MPa, from 100MPa to 125MPa, from 105MPa to 125MPa, from 110MPa to 125MPa, from 115MPa to 125MPa, from 120MPa to 125MPa, from 15MPa to 120MPa, from 15MPa to 115MPa, from 15MPa to 110MPa, from 15MPa to 105MPa, from 15MPa to 100MPa, from 15MPa to 95MPa, from 15MPa to 90MPa, from 15MPa to 85MPa, from 15MPa to 80MPa, from 15MPa to 75MPa, from 15MPa to 70MPa, from 15MPa to 65MPa, from 15MPa to 60MPa, from 15MPa to 55MPa, from 15MPa to 50MPa, from 15MPa to 45MPa, from 15MPa to 40MPa, from 15MPa to 35MPa, from 15MPa to 30MPa, from 15MPa to 25MPa, from 15MPa to 20MPa, from 20MPa to 125MPa, from 25MPa to 120MPa, from 30MPa to 115MPa, from 35MPa to 110MPa, from 40MPa to 105MPa, from 45MPa to 100MPa, from 50MPa to 95MPa, from 55MPa to 90MPa, from 60MPa to 85MPa, from 65MPa to 80MPa, from 70MPa to 75MPa.

In some embodiments, when the crisp chewing gum product is tested after the chewing gum product is chewed for 1 minute, the crisp chewing gum product has a reduction in hardness of: 20 to 40%, 25 to 40%, 30 to 40%, 35 to 40%, 20 to 35%, 20 to 30%, or 20 to 25%.

In some embodiments of the method for making the crisp chewing gum product, to form a melted chewing gum mixture, the chewing gum mixture is exposed to a melting temperature of: 127°C to 160°C, 130°C to 160°C, 135°C to 160°C, 140°C to 160°C, 145°C to 160°C, 150°C to 160°C, 155°C to 160°C, 127°C to 155°C, 127°C to 150°C, 127°C to 145°C, 127°C to 140°C, 127°C to 135°C, 127°C to 130°C, 130°C to 155°C, 135°C to 150°C, or 140°C to 145°C.

In some embodiments, the crisp chewing gum mixture has the characteristic of the complex shear viscosity at 80°C is: less than 600 Pa.s, less than 500 Pa.s, less than 400 Pa.s, less than 350 Pa.s, less than 300 Pa.s, less than 200 Pa.s, less than 100 Pa.s, from 100 to 600 Pa.s, from 100 to 500 Pa.s, 100 to 400 Pa.s, from 100 to 300 Pa.s, from 100 to 200 Pa.s, from 200 to 600 Pa.s, from 300 to 600 Pa.s, from 400 to 600 Pa.s, from 500 to 600 Pa.s, from 200 to 500 Pa.s, or from 300 to 400 Pa.s.

In some embodiments, the humectant content of the crisp chewing gum product includes the following weight percentages, based on the total weight of the crisp chewing gum product: less than 15%, less than 14%, less than 13%, less than 12%, less than 11%, less than 10%, less than 9%, less than 8%, less than 7%, less than 6%, less than 5%, less than 4%, less than 3%, less than 2%, less than 1%, 0 weight %, 0 to 13%, 0.1 to 13%, 1 to 13%, 2 to 13%, 3 to 13%, 4 to 13%, 4 to 12%, 5 to 13%, 5 to 10% 6 to 13%, 7 to 13%, 8 to 13%, 9 to 13%, 10 to 13%, 11 to 13%, 12 to 13%, 0.1 to 12%, 0.1 to 11%, 0.1 to 10%, 0.1 to 9%, 0.1 to 8%, 0.1 to 7%, 0.1 to 6%, 0.1 to 5%, 0.1 to 4%, 0.1 to 3%, 0.1 to 2%, 0.1 to 1 weight %, 1 to 12%, 2 to 11%, 3 to 10%, 4 to 9%, 5 to 8%, 6 to 7%, 4 to 12%, 5 to 11%, or 6 to 10%, 7 to 9%.

In some embodiments of the method for making the crisp chewing gum product, the processing conditions include melting zones of temperature in the range of: [(T(m)+ T(η=100Pa.s))/2] to $T_{max}$, as specified above for the soft chewing gum products. All suitable variations of the temperatures ranges for the melting zones are the same for the crisp chewing gum products, but not necessarily limited to those, as disclosed above for the soft chewing gum products.

Additional ingredients for potential inclusion in chewing gum products of the present invention

In some embodiments, the inventive chewing gum products detailed herein can include at least one flavor including natural and synthetic flavoring liquids such as synthetic flavor oils and flavoring aromatics and/or oils; and/or liquids, oleoresin or extracts derived from plants, leaves, flowers, fruits, etc., and combinations thereof. As non-limiting examples, the flavoring can be selected from spearmint oil, cinnamon oil, oil of wintergreen (methyl salicylate) and peppermint oil, clove oil, bay oil, oil of nutmeg, allspice, oil of sage, mace, oil of bitter almonds, and cassia oil. In some embodiments, the inventive chewing gum products can include artificial, natural or synthetic flavors, for example, but not limited to, vanilla and citrus oils including lemon, orange, grape, lime and grapefruit and fruit essences including apple, pear, peach, grape, strawberry, raspberry, cherry, plum, pineapple, apricot, etc., or any combination thereof.

In some embodiments, the chewing gum product can include at least one volatile flavor, including, as non-limiting examples: a hydrocarbon, an alcohol, a carbonyl, an aldehyde, a ketone, an acid, an ester, a lactone, a base, a sulfur compound, an acetal, an ether, a halogen, a nitrile, an amide, a phenol, a furan, an epoxide, a pyran, a coumarin, an oxazol(in)e, an anhydride, a phthalide, or any combination thereof. In some embodiments, the at least one volatile flavor includes a citrus and/or mint flavor.

In some embodiments, the inventive chewing gum products can include at least one of the flavorings: aldehydes and esters such as benzaldehyde (cherry, almond), citral, e.g., but not limited to, alphacitral (lemon, lime), neral, i.e., beta-citral (lemon, lime), aldehyde C-8 (citrus fruits), aldehyde C-9 (citrus fruits), aldehyde C-12 (citrus fruits), tolyl aldehyde (cherry, almond), 2,6-dimethyl-octanal (green fruit), and 2-dodecenal (citrus, mandarin), or any combination thereof.

In some embodiments, the inventive chewing gum products can include water insoluble material(s) such as, but not limited to, elastomers, waxes, elastomer solvents, emulsifiers, plasticizers, bulking agents/fillers, or any combination thereof.

In some embodiments, exemplary elastomers to be used in the inventive chewing gum products include both natural and synthetic elastomers and rubbers, for example, substances of vegetable origin such as chicle, crown gum, nispero, rosadinha, jelutong, perillo, niger gutta, tunu, balata, gutta-percha, lechi-capsi, sorva, gutta kay, and the like, or a combination thereof. Synthetic elastomers such as butadiene-styrene copolymers, polyisobutylene, isobutyleneisoprene copolymers, polyethylene, a combination thereof, and the like, or a combination thereof are also useful. The gum base can include a non-toxic vinyl polymer, such as polyvinyl acetate and its partial hydrolysate, polyvinyl alcohol, or a combination thereof. When utilized, the molecular weight of the vinyl polymer can range from 3,000 up to and including 94,000. Additional useful polymers include: crosslinked polyvinyl pyrrolidone, polymethylmethacrylate; copolymers of lactic acid, polyhydroxyalkanoates, plasticized ethylcellulose, polyvinyl acetatephthalate, or a combination thereof.

In some embodiments, the inventive chewing gum products can include elastomer solvents (also called elastomer plasticizers, resins and tackifiers) including, but not limited to, natural rosin esters such as glycerol ester of partially hydrogenated rosin, glycerol ester of polymerized rosin, glycerol ester of partially dimerized rosin, glycerol ester of rosin, pentaerythritol esters of partially hydrogenated rosin, methyl and partially hydrogenated methyl esters of rosin, pentaerythritol ester of rosin or mixtures; synthetic resins such as terpene resins derived from alpha-pinene, beta-pinene and/or d-limonene, poly-dl-lactide resin and combinations thereof.

In some embodiments, the inventive chewing gum products can include suitable plasticizers and softeners (including, for example, waxes and fats). Some non-limiting examples of suitable plasticizers and softeners include, but are not limited to, triacetate, medium chain triglycerides, and acetylated monoglycerides. In some embodiments, a small amount (for example, less than 2%, less than 1.5%, less than 1%, between 0.05% and 1.5%, between 0.1% and 1%, or between 0.25% and 0.75%, by weight, based on the total weight of the chewing gum product) of one or more high potency plasticizers is added to decrease the viscosity of the gum base at both the melt process temperature and at the tempering temperature, decrease tempering time, and/or minimize phase separation tendency. In some embodiments, the high potency plasticizer is highly compatible with hydrophobic gum base but is incompatible with the hydrophilic amorphous bulk sweetener phase, (for example, where the partition coefficient of the plasticizers is at least 1, at least 2, at least 3, or at least 4), and is a low molecular weight substance which can readily penetrate into base polymers (for example, where the molecular weight is less than 1500 g/mole, less than 1000 g/mole; less than 800 g/mole, less than 600 g/mole, or less than 400 g/mole). In some embodiments, the high potency plasticizer is one or more of the following: hydrocarbon-type flavor compounds, such as limonene, sesqui-phellandrene, terpinene, myrcene, sabinene, pinene, citrus oil, lemon oil, orange peel oil, and the like; oxygenated terpene flavor compounds, such as menthol, carvone, menthone, undecalactone, terpineol, decanal, eucalyptol, eucalyptus, linalool, menthofuran, pulegone and the like; and natural color compounds, such as phycocyanin, phycocyanobilin, cadet blue, capsanthin, capsorubin, curcumin, beta carotene, and the like.

In some embodiments, the inventive chewing gum products can include waxes such as, but not limited to, natural and synthetic waxes, hydrogenated vegetable oils, petroleum waxes such as polyurethane waxes, polyethylene waxes, paraffin waxes, microcrystalline waxes, fatty waxes, sorbitan monostearate, tallow, propylene glycol, and the like, or a combination thereof, can also be incorporated into the gum base to obtain a variety of desirable textures and consistency properties.

In some embodiments, the inventive chewing gum products can includes suitable emulsifiers such as, but not limited to, distilled monoglycerides, acetic acid esters of mono and diglycerides, citric acid esters of mono and diglycerides, lactic acid esters of mono and diglycerides, mono and diglycerides, polyglycerol esters of fatty acids, ceteareth-20, polyglycerol polyricinoleate, propylene glycol esters of fatty acids, polyglyceryl laurate, glyceryl cocoate, gum arabic, acacia gum, sorbitan monostearates, sorbitan tristearates, sorbitan monolaurate, sorbitan monooleate, sodium stearoyl lactylates, calcium stearoyl lactylates, diacetyl tartaric acid esters of mono- and diglycerides, glyceryl tricaprylate-caprate I medium chain triglycerides, glyceryl dioleate, glyceryl oleate, glyceryl lacto esters of fatty acids, glyceryl lacto palmitate, glyceryl stearate, glyceryl laurate, glycerlydilaurate, glyceryl monoricinoleate, triglyceryl monostearate, hexaglyceryl distearate, decaglyceryl monostearate, decaglyceryl dipalmitate, decaglyceryl monooleate, polyglyceryl 10 hexaoleate, medium chain triglycerides, caprylic/capric triglyceride, propylene glycol monostearate, polysorbate 20, polysorbate 40, polysorbate 60, polysorbate 80, polysorbate 65, hexylglyceryl distearate, triglyceryl monostearate, tweens, spans, stearoyl lactylates, calcium stearoyl-2-lactylate, sodium stearoyl-2-lactylate, lecithin, ammonium phosphatide, sucrose esters of fatty acids, sucroglycerides, propane-1,2-diol esters of fatty acids, or a combination thereof.

In some embodiments, the inventive chewing gum products can includes suitable fillers such as, but not limited to, magnesium and calcium carbonate, ground limestone and silicate types such as magnesium and aluminum silicate, clay, alumina, talc as well as titanium oxide, mono-, di- and tricalcium phosphate, cellulose polymers such as ethyl, methyl and wood or mixtures thereof, and combinations thereof.

In some embodiments, at least one color can be added to the chewing gum products of the present invention. In some embodiments, the at least one color is natural or non-artificial. In some embodiments, the at least one color is artificial. In some embodiments, the at least one color can be known substances to render the chewing gum products of the present invention red, orange, yellow, green, blue, purple, pink, or any similar color. In some embodiments, the inventive chewing gum products can include two or more colors, e.g., but not limited to, red and green, red and yellow, orange and yellow, blue and red, etc.

In some embodiments, the inventive chewing gum products can include at least one flavor. In some embodiments, exemplary flavors can include, but are not limited to, natural and/or synthetic flavoring liquids, such as, but not limited to, natural and/or synthetic flavor oils, natural and/or synthetic flavoring aromatics, oleoresin, extracts derived from plant parts (e.g., leaves, flowers, fruits, other parts, and any combinations thereof). As non-limiting examples, exemplary flavors can include at least one of spearmint oil, cinnamon oil, oil of wintergreen (methyl salicylate), peppermint oil, clove oil, bay oil, oil of nutmeg, allspice, oil of sage, mace, oil of bitter almonds, cassia oil, and any combination thereof. In some embodiments, exemplary flavors can include vanilla and citrus oils, including, but not limited to, lemon, orange, lime and grapefruit, at least one fruit essence selected from at least one essence of, but not limited to, apple, pear, peach, grape, strawberry, raspberry, cherry, plum, pineapple, apricot, other fruit, and any combination thereof. In some embodiments, exemplary flavors can include at least one vegetable essence, at least one fruit essence, and any combination thereof.

For example, at least one of flavor can be in a form of: aldehydes and/or esters such as, but not limited to, benzaldehyde (cherry, almond), citral, e.g., but not limited to, alphacitral (lemon, lime), neral, i.e., beta-citral (lemon, lime), aldehyde C-8 (citrus fruits), aldehyde C-9 (citrus fruits), aldehyde C-12 (citrus fruits), tolyl aldehyde (cherry, almond), 2,6-dimethyl-octanal (green fruit), and 2-dodecenal (citrus, mandarin), or any combination thereof.

In some embodiments, the inventive chewing gum products can include, but are not limited to, at least one of volatile flavor: a hydrocarbon, an alcohol, a carbonyl, an aldehyde, a ketone, an acid, an ester, a lactone, a base, a sulfur compound, an acetal, an ether, a halogen, a nitrile, an amide, a phenol, a furan, an epoxide, a pyran, a coumarin, an oxazol(in)e, an anhydride, a phthalide, and any combination thereof.

Physical appearance of chewing gum products made in accordance with the present invention

In some embodiments, the physical appearance of the inventive chewing gum products made in accordance with the present invention can vary in at least one of the following appearance characteristics: shape, color, and size. In some embodiments, an ability to create a particular inventive chewing gum product having particular appearance characteristic(s) can depend on the use of the depositing machinery, deposition condition(s), extruder and/or extruding condition(s), as detailed herein.

For example, in some embodiments, the inventive chewing gum products can be made in any desired shapes, including, but not limited to, non-geometrically-right shapes (e.g., a slab, a stick, a square, a chunk, a round, etc.), geometrically-right shapes (e.g., a cube, a sphere, a square, a pyramid, etc.), fruit-like shapes (e.g., a strawberry-like shape, an apple-like shape, a cherry-like shape, etc.), leaf-like shapes (e.g., a spearmint leaf-like shape, mistletoe sprig-like shape, etc.), strip-like shapes, toy-character-like shapes, sports-related shapes (e.g., a soccer ball shape, a football shape, a baseball shape, a baseball bat shape, a mascot shape, a helmet shape, etc.), any other similar suitable shapes, and any combination thereof.

In some embodiments, the inventive chewing gum products can vary in size to fit any desired packaging physical arrangement. For example, in some embodiments, the inventive chewing gum products can have a size that allows for an arrangement in a package that can be easily held and manipulated by a user using one hand. In some embodiments, the inventive chewing gum products can have a size that allows each serving of the inventive chewing gum products to fit in a human hand. In another non-limiting example, the inventive chewing gum products can have a size that allows for an arrangement made from numerous pieces of particular chewing gum product(s) (e.g., but not limited to, 2 pieces, 3 pieces, 4 pieces, 5 pieces, 6 pieces, 7 pieces, 8 pieces, 9 pieces, 10 pieces, or any other desired number of pieces).

For example, in some embodiments, the inventive chewing gum products can have a size that allows pieces of the inventive chewing gum product(s) to be arranged in an arrangement that is similar to an arrangement of eggs in an egg carton. In another non-limiting example, pieces of an exemplary inventive chewing gum product(s) can be in the shape of leave(s) and can have a size that allows to be arranged in a tree arrangement with each leaf piece being one serving of the exemplary inventive chewing gum product(s). In another non-limiting example, pieces of the exemplary inventive chewing gum product(s) can have certain shape(s), color(s), and/or size(s) that allow pieces of the exemplary inventive chewing gum product(s) to be arranged in a package in a puzzle-like arrangement, where each chewing gum piece of the exemplary inventive chewing gum product(s) may or may not be similar in size, shape, and/or color. In yet another non-limiting example, pieces of the exemplary inventive chewing gum product(s) can have certain shape(s), color(s), and/or size(s) that allow pieces of the exemplary inventive chewing gum product(s) to be fit together in a puzzle-like arrangement and/or have a writing (e.g., but not limited to, "best friends forever", "be my valentine", and "happy holidays," etc.) pressed into and/or made onto a surface of the chewing gum product(s).

In some embodiments, the inventive chewing gum products can have at least one color which can be added at different stages of the inventive manufacturing processes of the present invention as detailed herein. In some embodiments, the inventive chewing gum products can display any suitable color such as, but not limited to, red, orange, yellow, green, blue, purple, pink, or any similar color. In some embodiments, the inventive chewing gum products can display at least two or more colors (e.g., but not limited to, red and green, red and yellow, orange and yellow, blue and red, etc.).

In some embodiments, the inventive chewing gum products can include two or more textures. In a non-limiting example, the inventive chewing gum products can include two or more portions: a soft chewing gum portion and a conventional chewing gum portion.

In some embodiments, the inventive chewing gum products can include three dimensional shapes having, e.g., but not limited to, one flat side. In some embodiments, the inventive chewing gum products can include hollow shapes, wherein the hollow shapes can include a filling (e.g., but not limited to, a liquid filling, a crunchy filling, etc.) In some embodiments, the shape of the chewing gum product corresponds to the flavor of the shape (e.g., but not limited to, a strawberry shaped chewing gum product has a strawberry flavoring. In some embodiments, the shape of the chewing gum product does not correspond to the flavor of the shape (e.g., but not limited to, a strawberry shaped chewing gum product having a banana flavoring).

## Packaging

In some non-limiting exemplary embodiments, the chewing gum products of the present invention can be deposited in thermoformed pack (e.g., a blister pack), a container, a roll (e.g., but not limited to, a depositing similar to how candy dots are deposited on a paper roll), a central location (e.g., a "tree trunk" which is configured to hold the chewing gum pieces shaped as leaves), etc.

In some embodiments, molten gum is processed using deposition. In some embodiments, molten gum is not processed using extrusion processing.

In some embodiments, the chewing gum compositions of the present invention are suitable for depositing into a blister pack, where the blister pack is sufficiently constructed so as to withstand the temperatures of molten gum (e.g., but not limited to, 80°C to 120°C, or 135°C to 160°C), resist deformation of the package upon depositing of the molten gum (e.g., but not limited to less than 30%, less than 20%, less than 10%, or less than 5% deformation), and is configured to have color/clarity and an appropriate level of detail to permit the molten gum to conform to and be readily releasable from the blister pack.

In some embodiments, the package is a blister pack having at least two parts: (1) a thermoformed base and (2) a cover or lid (made of aluminum, for example, or any other suitable material(s)), where the thermoformed base may be made of plastic film(s). Table 1 describes some exemplary materials for the base.

Table 1:

| Material | Thickness (mil) | Max. Depositing Temp. (°C) | Clarity (Rank) | MVTR (g/m2-day) | OTR (cm3/m2-day) |
|---|---|---|---|---|---|
| Polypropylene (PP) | 15 | < 120 | 4 | 10.85 | 2325 |
| Co-Polyester | 10 | < 90 | 1 | 10 | 173 |
| High impact polystyrene (HIPS) | 10 | < 80 | 3 | 120 | 5425 |
| Polypropylene/Cyclic olefin co-polymer/Polypropylene (PP/COC/PP) | 15 | < 115 | 3 | 0.46 | 175 |
| Amorphous polyethylene terephthalate (APET) | 10 | < 65 | 1 | 6.2 | 16 |
| Cyclic olefin copolymer (COC) | 10 | < 90 | 2 | 0.40 | 110 |

In some embodiments, the film thickness of the material used for the blister pack is between 8.5 mil - 20 mil (1 mil = 0.001 inch), but any suitable thickness may be used.

The suitability of materials for use with the depositing temperatures used in some embodiments of the present invention may be tested, for example, using shaped 1up blister packs (1up is the number of cavities of the mold). The films may be thermoformed as per the desired shape on a blister machine configured to produce, for example, one blister pack at a time using vacuum pressure and heat.

The thermoformed blister pack in the film may be filled using a depositor that projects the product (gum) at a temperature of between 70°C and 130°C, for example. After each deposit, the film can be examined visually for any sort of deformation of or around the cavity (e.g., but not limited to, deformations such as folds in the film, film that has not been completely adhered to a surface, etc.) to determine the suitability of the material.

The pack may be clear, translucent or opaque, for example. In some embodiments, the pack material is such that the product in the pack is visible, in whole or in part, through the pack. In some embodiments, edible (i.e., food grade) ink or other material is printed on or otherwise placed on the blister pack prior to depositing the gum into the blister pack, where the edible ink or other material may be of the same or a different color than the gum being deposited.

Moisture Vapor Transmission Rate (MVTR) and Oxygen Transmission Rate (OTR) measure the barrier property of the film. The values provided in Table 1 are the measure of the water molecules and oxygen molecules permeating through 1 square meter of the film per day. The ASTM standards available for this quantification are ASTM F1249 (MVTR) and ASTM D3985 (OTR), which are hereby incorporated by reference in their entireties. A film material may block the moisture ingress and protect the molten gum product to ensure freshness.

Other materials which may be used include but are not limited to (1) PP/ethylene vinyl alcohol (EVOH)/PP, which has comparable properties to PP and an improved oxygen barrier compared to PP, as well as improved clarity to PP, (2) PP/Nylon/PP, which has comparable characteristics to PP/EVOH/PP, (3) polyvinyl chloride (PVC), or (4) polyvinylidene chloride (PVDC).

The cover may be a standard aluminum foil cover or lid or it may be made of any other suitable material including plastic polymers and laminated materials.

Product performance

In some embodiments, the chewing gum products of the present invention can be tested using sensory testing. The chewing gum products of the present invention may be tested using the standard Spectrum Descriptive Analysis Method and the Spectrum 15 point Universal Scale or "Universal Scale" that is a standard industry scale. A panel of qualified and trained taste-testers may receive the Universal Scale references (e.g., comparisons to known flavor profiles, e.g., but not limited to, crackers, applesauce, orange juice, grape juice, and cinnamon gum) on the day of the trial.

The chewing gum products of the present invention also may be tested using customized methodology focused on any desired sensory attributes, such as attributes at the first bite or during the chew (for example, but not limited to, at 0 seconds, 10 seconds, 20 seconds, 30 seconds, 40 seconds, 60 seconds, 80 seconds, 100 seconds, 120 seconds, 3 minutes, 6 minutes, or any other appropriate amount of time). Examples of attributes that can be measured include without limitation hardness, cohesiveness, stickiness, crumbliness, toughness, granularity, bounciness, smoothness, waxiness, gum size, smoothness, elasticity, intensity, sweetness, and bitterness.

While a number of embodiments of the present invention have been described, it is understood that these embodiments are illustrative only, and not restrictive, and that many modifications may become apparent to those of ordinary skill in the art. Further still, the various steps may be carried out in any desired order (and any desired steps may be added and/or steps may be eliminated).

Non-limiting examples

The following examples are intended to illustrate the invention and should not be construed as limiting the invention in any way.

*Molten gum processing conditions do not cause the deterioration of gum/base ingredients*

In the following examples, chemical analysis found no detectable flavor loss or degradation. A slight increase of aspartame's major decomposition product, 2,5-diketopiperazine (DKP) was observed in molten gums processed at temperatures higher than 120°C. However, the maximum DKP level in gum was still below the accepted safety limit.

Additionally, in the examples below, it was found that the rheological behavior of molten gum cuds was the same as control gum cud.

*Process window prediction and formulation strategies*

Molten gum process windows for embodiments of the chewing gum disclosed herein can be predicted effectively by differential scanning calorimetry (DSC) and rheological experiments using the following parameters: T(m) (gum melting point) and $T_{\eta=100Pa.s}$ and $T_{\eta=1000Pa.s}$, as defined above.

In the following examples, the type of bulk sweeteners included in the product significantly impacts the characteristics of the product and were significant factors in determining the processing temperatures and the molten gum initial firmness. For conventional sorbitol gum formulas, use of the molten process described herein significantly increases the initial hardness.

Use of high levels of humectant (e.g. glycerin>10%) impacted processing conditions, including the mixing step, (mixing/holding revolutions per minute (rpm)), the molding temperature, and the de-molding time. When low levels of humectant were used, the humectant amount correlated with the crispness of molten gum.

Although the viscosity of a majority of bases did not have a strong impact on the process window and initial texture, a few bases with high molten viscosity (> 500 Pa.s @ 80°C) caused phase separation. Given that molten gum contains two high volume immiscible liquids (molten bulk sweeteners and bases), the gum composition has a strong tendency to phase separate. When the viscosities of two immiscible phases are matched, the degree of phase separation can be reduced by dynamic factors such as proper mixing and cooling. When the phase domain size and the refractive index (or color) between two phases are large, an inconsistent product appearance may result.

As used herein, the "viscosity ratio," p, at the temperature and shear rate present in the melt process, is defined as: $p = \frac{\eta^*_{base}}{\eta^*_{polyol}}$ (Equation 1), where $\eta^*_{base}$ is the complex viscosity of molten bases and $\eta^*_{polyol}$ is the complex viscosity of molten polyols. The complex viscosity is measured by the following rheological test method:

| Instrument | Method name | condition |
|---|---|---|
| ARES G2 rotational Rheometer (TA Instruments | Isothermal strain rate sweep (steady) | Dimension= 25mm 0.1rad CP FCO (bases/blends) 50mm 0.04rad CP APS (polyols/blends) Strain rate 0.1-500 /sec Temperature= 80, 90, 100, 140, 150 °C (bases/blends); 80, 85, 90, 95, 100, 110°C (polyols/blends) |

When the viscosity ratio (p) of two liquids is close to 1, the separate phases become unstable and prone to breaking up and combining under shear force. Thus, when the viscosity ratio (p) is close to 1, the conditions for mixing two such liquids are excellent. On the other hand, when the viscosity difference between two ingredients is very high (for example, when the viscosity ratio is much higher than 1), the highly viscous phase could simply slosh around in the low viscosity phase and result in an unbroken viscous phase causing a lump in the blend. (For practical reasons, viscosity ratios less than 1 are not a concern, given that typically the viscosity of the base is close to or higher than the viscosity of the polyol blend at normal processing temperatures and shear rates.) For example, when the viscosity ratio of molten base to molten bulk sweetener blend is close to 10,000 (p≥10,000), instant phase separation is likely to occur. Thus, p should be <1000, for example <100, or even <50. In some embodiments, p≤100, the deposit temperature is <100°C and the environmental (ambient) temperature is <22°C, in a system operating under ambient conditions. In some embodiments, p≤50, the deposit temperature is <90°C and the environmental (ambient) temperature is <20°C, with forced convection.

The higher the viscosity ratio, the lower the viscosity matching degree of the two ingredients, and the higher the risk of macro-scale phase separation between bulk sweeteners and gum bases. When the gum base viscosity is greater than 1000 times higher than the polyol viscosity (p>1000), phase separation could occur. When the gum base viscosity is 100 times higher than the polyol viscosity (p=100), macro-scale phase separation could develop after deposit, and forced air circulation or other additional cooling means may be needed. To prevent the development of macro-scale phase separation during natural (ambient temperature without forced air circulation) cooling after deposit, the gum base viscosity should be less than 50 times the polyol viscosity (p<50). When the gum base viscosity is 50 times less than the polyol viscosity (p=50) or even 30 times less than the polyol viscosity (p=30), macro-scale phase separation should not develop during cooling at room temperature, for example, without any additional forced air circulation beyond common room ventilation.

The shear rate or temperature may be adjusted to reach the desired viscosity ratio. Experiments have determined that the complex viscosity of different molten gum bases is more sensitive to shear rate than to temperature (approximately following the power law), whereas the viscosity of molten polyols (such as pure xylitol, sorbitol, their blends at different ratios, and the ternary blend of xylitol, sorbitol, and isomalt) is more sensitive to temperature than to shear rate (Newtonian fluids). It has also been determined that the more viscous the gum base, the higher the shear rate is needed to reduce the viscosity ratio. For example, in some embodiments, at 100°C, increasing the shear rate from 0.1 to 100 $sec^{-1}$ results in a decrease in base viscosity of almost 10 to 60 times, as shown in Figure 35. The shear rate effects on the viscosity of fully-melted chewing gums were found to be in between the neat molten bases and polyol systems in the formula, and at least some partially melted gums show a stronger and broader dependency on shear rate. Gum compositions containing polyol blends with a high amount (i.e., greater than 50 weight percent) of xylitol and/or erythritol require a higher shear rate.

Table 2

| Gum Base Examples | | | | | |
|---|---|---|---|---|---|
| GUM BASE EX. # | GB01 | GB02 | GB03 | GB04 | GB05 |
| Butyl Rubber | | 11.99 | 9.77 | 8.67 | 1.80 |
| Styrene-Butadiene Rubber(25% styrene) | | | | | 2.61 |
| Polyvinylacetate (Hi MW) | 35.50 | | | | 19.19 |
| Polyisobutylene (Med MW) | | | | | |
| Polyisobutylene (Low MW) | 11.42 | 2.00 | 1.82 | 1.60 | 11.03 |
| Polyvinylacetate (Low MW) | | 27.00 | 26.92 | 23.91 | 6.00 |
| Elastomer Solvents | 19.49 | 25.00 | 24.71 | 22.24 | 15.59 |
| Softeners | 13.55 | 17.80 | 19.91 | 17.69 | 20.87 |
| Lecithin | | 1.80 | 3.65 | 3.23 | 2.40 |
| Fillers | 19.98 | 14.37 | 13.14 | 22.60 | 20.45 |
| Antioxidant | 0.06 | 0.04 | 0.07 | 0.06 | 0.06 |
| Total | 100.00 | 100.00 | 100.00 | 100.00 | 100.00 |

| GUM BASE EX. # | GB06 | GB07 | GB08 | GB09 | GB10 | GB11 |
|---|---|---|---|---|---|---|
| Butyl Rubber | 9.27 | 7.86 | 10.34 | 4.44 | | 1.68 |
| Styrene-Butadiene Rubber(25% styrene) | | | | | | 2.48 |
| Polyvinylacetate (Hi MW) | | | | 20.31 | 19.54 | 19.54 |
| Polyisobutylene (Med MW) | | | | | 10.93 | |
| Polyisobutylene (Low MW) | 1.85 | 9.86 | | 12.31 | | 10.90 |
| Polyvinylacetate (Low MW) | 27.18 | 15.96 | 23.36 | 6.77 | 11.08 | 6.52 |
| Elastomer Solvents | 24.71 | 14.66 | 16.11 | 16.12 | 18.70 | 15.40 |
| Softeners | 19.88 | 26.42 | 21.90 | 21.81 | 20.91 | 20.61 |
| Lecithin | 3.58 | | 4.90 | 0.98 | 2.08 | 2.37 |
| Filler | 13.49 | 25.21 | 22.79 | 17.24 | 16.67 | 20.45 |
| Natural color | | | 0.57 | | | |
| Antioxidant | 0.04 | 0.03 | 0.03 | 0.05 | 0.09 | 0.05 |
| Total | 100.00 | 100.00 | 100.00 | 100.00 | 100.00 | 100.00 |

| GUM BASE EX. # | GB12 | GB13 |
|---|---|---|
| Butyl Rubber | | |
| Styrene-Butadiene Rubber(25% styrene) | | |
| Polyvinylacetate (Hi MW) | 18.58 | 31.29 |
| Polyisobutylene (Med MW) | 10.40 | |
| Polyisobutylene (Low MW) | | 10.85 |
| Polyvinylacetate (Low MW) | 10.54 | |
| Elastomer Solvents | 17.79 | 18.51 |
| Softeners | 23.77 | 18.90 |
| Lecithin | 1.98 | |
| Fillers | 16.84 | 20.45 |
| Natural color | | |
| Antioxidant | 0.10 | |
| Total | 100.00 | 100.00 |

As shown in Figure 1, different types of gum bases, with compositions listed in Table 2 above, have been categorized by their viscosities at 80°C, which are listed under the gum base identifiers in the figure. The higher the viscosity, the more viscous the base. Bases having higher viscosities typically contain high proportions of high molecular weight polymers, such as butyl rubber, styrene butadiene rubber (SBR) or high molecular weight polyvinyl acetate (PVAc) while the bases having lower viscosities contain higher proportions of wax, fats, softener and/or lower molecular weight PVAc or polyisobutylene (PIB). These results appear to indicate that more viscous gum bases require higher shear rates to decrease the viscosity ratio, p, to 1000 or below.

In order to avoid instant macro-scale phase separation, it is important to match the viscosity of the polyol phase and base phase during the molten process by proper control of the process temperature and strain rate. Shear rate is specific strain rate generated by shear stress. Strain rate is a more general term and includes other forms of deformation, such as without limitation, tensile, compression, etc. Figure 2 provides the shear rate required to reach critical viscosity ratio p=1000 value in gum compositions which include different bases with a binary polyol blend of xylitol:sorbitol (2:1 weight ratio). Generally, the minimum shear rate required for such base-polyol combinations was found to be very low, i.e., varying between 0.01 to 2 $sec^{-1}$ at 90°C; 0.02 to 0.4 $sec^{-1}$ at 100°C; 0.01 to 0.9 sec-1 at 110C, depending on the type of gum base.

For minimizing the phase separation immediately after deposition, Figure 3 provides the shear rate required to reach critical viscosity ratio p=100 in gum compositions which include different bases with a binary polyol blend of xylitol: sorbitol (2:1 weight ratio). Generally, the he minimum shear rate required for such base-polyol combinations varied between 0.01 to 60 $sec^{-1}$ at 90°C; 0.01 to 145 $sec^{-1}$ at 100°C; 0.01 to 300 $sec^{-1}$ at 110°C.

In some embodiments, at a high shear rate (e.g., >100$sec^{-1}$) or high temperature (e.g., near $T_{max}$), the viscosity

ratio depends primarily on shear rate, and not on temperature, whereas at low shear rate and low temperature, a higher process temperature requires a higher shear rate to minimize phase separation. In some embodiments using common bases and polyol systems, the viscosity ratio is a function of shear rate at the same isothermal temperature, as shown in Figure 4, where the higher the shear rate, the lower the viscosity ratio and where the viscosity ratio varies with the composition of the polyols in the sample. Also, the higher the average molecular weight of the polyol blends (such as those containing high levels of isomalt), the lower the viscosity ratio, while those with low molecular weight (such as polyol blends having a high content of xylitol), the higher the viscosity ratio. In some embodiments, higher process temperatures require a higher shear rate to minimize phase separation, for all types of polyol blends.

The inventors have found that the temperature effect on base viscosity varies with the temperature range, and that in a molten gum process temperature range of 80-120°C, gum base viscosity decreases slowly with an increase in temperature and remains in a relatively narrow viscosity range. Therefore, increasing the processing temperature would have only a limited effect on reducing base viscosity, and would even tend to increase the viscosity ratio and the likelihood of phase separation, given that polyol viscosity tends to decrease faster than base viscosity with an increase in temperature.

Figure 5 is an example of the determination of the upper melt process temperature (which depends on the molecular weight of the polyols) for gums made from a base blend of GB11 and GB10 and different polyols. The viscosity data was collected from a temperature sweep of a GB11/GB10 2: 1 ratio gum base blend and the following polyol/blends:

| |
|---|
| xylitol |
| sorbitol |
| isomalt |
| molten xylitol /sorbitol (1:2) blend (XS21) |
| molten xylitol /sorbitol (1:1) blend (XS11) |
| molten xylitol /sorbitol (2:1) blend (XS21) |
| molten xylitol/ sorbitol/isomalt (1:1:1) blend (XSI111) |
| molten xylitol/ sorbitol/isomalt (1:1:2) blend (XSI112) |
| molten xylitol/ sorbitol/isomalt (33:18:49) blend |
| molten xylitol/ sorbitol/isomalt (1:1:3) blend (XSI113) |

A graph such as Figure 5 can be used to determine the upper limit melt process temperature ($T_{max}$) of gum made from the graphed base blend and polyols/polyol blends. As shown, addition of even a small amount of isomalt into the formula could increase the upper limit melt process temperature. For example, for a molten erythritol-containing gum, at least 18 weight % (such as 24 weight %, or even 30 weight %) of isomalt or maltitol would be suitable to increase $T_{max}$ to higher than erythritol's melting point. For example, for molten xylitol-containing gum, at least 5 weight % (such as 7 weight %, or even 10 weight %) of isomalt or maltitol may enlarge the process window by increasing the $T_{max}$ to greater than 120°C. For example, for molten intermediate chew molten gum containing a xylitol/sorbitol blend (2:1), adding 0.5 weight % (such as 2 weight %, or even 7 weight %) of isomalt or maltitol should increase the $T_{max}$ to greater than 120°C.

The melt process temperature window should be between the upper limit ($T_{max}$) and the lowest temperature at which the gum fluid has good flowability (for example, where the viscosity is in the range of $10^2$ to $10^3$ Ns/m$^2$). The minimum process temperature can be estimated by the melting point of the chewing gum and the temperature when the viscosity of the molten gum fluid reaches 100 Pa.sec. In some embodiments, the process temperature is effectively determined by the equation $T_{process}=(T(m)+T_{\eta=100Pa.s})/2+5$, and the molding temperature by $T_{\eta}$=1000Pa.s measured at gum heating, to $T_{\eta=1000Pa.s}$ measured at gum cooling, as shown by the examples below:

| | $5+(T(m)+T_{\eta=100Pa.s})/2$ | $T_{\eta=1000Pa.s}$ | Actual extruder T | Actual molding T |
|---|---|---|---|---|
| Sample-ctrl | 81 | 74 | 78-80 | 70-72 |
| Sample 1-1 | 147 | 143 | 144-150 | 125-127 |
| Sample 1-2 | 134 | 119 | 131-134 | 123 |
| Sample 1-3 | 95 | 85 | 92-95 | 82-85 |

(continued)

| | 5+(T(m)+ $T_{\eta=100Pa.s}$)/2 | $T_{\eta=1000Pa.s}$ | Actual extruder T | Actual molding T |
|---|---|---|---|---|
| Sample 1-4 | 93 | 76 | 93 | 74-76 |
| Sample 1-5 | 101 | 96 | 107 | 76-82 |
| Sample 1-6 | 95 | 80 | 100 | 88 |
| Sample 1-7 | 105 | 94 | 105-107 | 70-86 |
| Sample 1-8 | 129 | 108 | 126-131 | 79-98 |
| Sample 1-9 | 96 | 81 | 93-95 | 71-73 |
| Sample 1-10 | 98 | 86 | 96-98 | 75-80 |
| Sample Hibase | 100 | 81 | 98-102 | 76-88 |
| Sample Higlycerin | 91 | 73 | 95 | 74-78 |

As shown in Figure 6, the area between the $T_{max}$ line and the $T_{process}$ line is the melt process window determined for the gum embodiments described in Table 3 below, all of which used a 2:1 ratio gum base blend of GB11 and GB10 (and strawberry flavor):

Table 3

| | **Polyol** |
|---|---|
| Sample 1-1 | Isomalt |
| Sample 1-2 | Sorbitol/isomalt (1:2) |
| Sample 1-3 | Sorbitol/xylitol (2:1) |
| Sample 1-4 | Xylitol/sorbitol 2:1 |
| Sample 1-5 | Sorbitol |
| Sample 1-6 | Xylitol |
| Sample 1-7 | Sorbitol/isomalt (2:1) |
| Sample 1-8 | Xylitol/isomalt (1:2) |
| Sample 1-9 | Xylitol/sorbitol/isomalt (1:1:1) |
| Sample 1-10 | Xylitol/isomalt (2:1) |

The $T_{process}$ data in this example is based on the DSC and rheological data of ten samples. As shown in the figure, the molecular weight of the polyol combination of about 200 to 250 g/mole has the broadest process window. However, for the sample containing erythritol as the polyol (molecular weight of only 122), $T_{max}$ (<100 °C) did not exceed $T_{process}$ (>120 °C), and the formulation did not have a viable process window. A temperature of 100 °C would avoid phase separation but result in a gum fluid that is too viscous to process.

In general, under the same environmental conditions, the molecular weight of a material affects the viscosity of the material. The molecular weight of the main gum base ingredients are generally substantially higher than those of bulk sweeteners, indicating the high viscosity ratio p between base and molten polyols or their blends, which could result in a narrow viscosity matching processing window, as shown in Figure 6. In some embodiments, the molecular weight of the molten bulk sweetener phase is from 140 to 400 g/mole, and the shear rate is less than 600 sec-1, melt process temperature is 80-150°C, and deposit temperature is less than 100°C. In some embodiments, to control the viscosity ratio between molten gum bases and molten bulk sweeteners below a desired range, the average molecular weight of the molten bulk sweetener phase is increased by the addition of one or more high molecular weight ingredients that are miscible with the bulk sweeteners, as shown in Figure 5. In some embodiments, the higher molecular weight ingredient(s) have a molecular weight of 100 to 500 g/mole, 110 to 475 g/mole, 120 to 450 g/mole, 130 to 425 g/ mole, 140 to 400 g/mole, 150 to 300 g/mole, 175 to 250 g/mole, or 200 to 225 g/mole. In some embodiments, the higher molecular weight ingredient(s) have a molecular weight of greater than 200 g/mole, greater than 300 g/mole, greater than 400 g/mole, or greater than 500 g/mole

Figure 7 shows the relationship between shear rate and viscosity ratio at different isothermal temperature for gum base GB11 (as defined herein) and sorbitol-xylitol (1:2) (SX12) binary blends, in which the viscosity value decreases with an increase in shear rate. The viscosity value also may decrease with a decrease in the process temperature or by the use of less viscous bases, such as GB03-GB11 or their combinations. In some embodiments, the base has a viscosity of less than 500 Pa.s, such as ≤400 Pa.s, or even ≤350 Pa.s, at 80°C.

To minimize macro-scale phase separation during the melt process, in some embodiments, the viscosity ratio at the melt mixing temperature is: less than 1000, less than 900, less than 800, less than 700, less than 600, less than 500, less than 400, less than 300, less than 200 less than 100, 0.001-1000, 1-1000, 100-1000, 200-1000, 300-1000, 400-1000, 500-1000, 600-1000, 700-1000 800-1000 900-1000, 1, 0.001-1, 0.1-1, 0.2-1, 0.3-1, 0.4-1, 0.5-1, 0.6-1, 0.7-1, 0.8-1, or 0.9-1.

To minimize phase separation after deposit, in some embodiments, the viscosity ratio at the melt mixing temperature is: less than 100, less than 90, less than 80, less than 70, less than 60, less than 50, less than 40, less than 30, less than 20, less than 10, less than 5, 0.001-100, 0.01-90, 0.1-80,1-70, 10-60, 20-50, or 30-40.

To minimize macro-scale phase separation, in some embodiments, the viscosity ratio is reduced by conducting the process at relatively low temperature and high shear rate. In some embodiments, the chewing gum is processed at a temperature of: less than 180 °C, 100°C-180°C, less than 170 °C, 110°C-170°C, less than 160 °C, 120°C-160°C, less than 150 °C, less than 140 °C, less than 130 °C, less than 120 °C, less than 110 °C, less than 100 °C, less than 90 °C, or less than 80 °C. In some embodiments, the chewing gum is a crisp chewing gum processed at a temperature of 140-175 °C, 145-170 °C, or 150-180 °C, and a shear rate of at least 0.1 $sec^{-1}$, at least 0.12 $sec^{-1}$, at least 0.14 $sec^{-1}$, at least 0.15 $sec^{-1}$,or at least 0.2 $sec^{-1}$. In some embodiments, a crisp chewing gum is processed at a temperature of 145-170 °C and a shear rate of at least 0.14 $sec^{-1}$. Shear rate will depend on the agitator configuration (e.g., the configuration of the agitator blade(s)) and speed in the tank containing the chewing gum mixture

In some embodiments, the chewing gum is a soft chewing gum with low crumbliness (where "low crumbliness" is defined as having a DA sensory value for crumbliness, on a scale of 0 (not crumbly) to 15 (very crumbly) of: at a chew time of zero seconds, less than 4, less than 3, less than 2.5, less than 2.4, less than 2.2, less than 2, or less than 1; at a chew time of 10 seconds, less than 1.5, less than 1.4, less than 1.3, less than 1.2, less than 1.1, less than 1; at a chew time of 20 seconds, less than 1, less than 0.8, less than 0.6, less than 0.5, less than 0.4, or less than 0.2; at a chew time of 40 seconds, less than 0.2, less than 0.15, less than 0.1, or less than 0.05) that is processed at a temperature between 110°C and 160°C. In some embodiments, the chewing gum is a soft chewing gum with low crumbliness that is processed at a temperature of: 115°C to 155°C, 120°C to 160°C, 130°C to 150°C, 85°C to 140°C, or 90°C to 135°C, and a shear rate above 7 $sec^{-1}$, above 8 $sec^{-1}$, above 9 $sec^{-1}$, above 10 $sec^{-1}$, above 5 $sec^{-1}$, above 10 $sec^{-1}$ above 15 $sec^{-1}$, above 20 $sec^{-1}$, or above 24 $sec^{-1}$.

In some embodiments, the chewing gum is a chewing gum having a texture substantially similar to the texture of conventional non-coated chewing gum and is processed at a temperature between 95°C and 130°C and a shear rate above 0.1 $sec^{-1}$, above 0.2 $sec^{-1}$, above 0.3 $sec^{-1}$, above 0.4 $sec^{-1}$, or above 0.5 $sec^{-1}$.

As shown in Figure 8, suitable processing temperature ranges may be selected to achieve a desired texture based on the viscosity ratio of a given gum composition, at a particular shear rate. In some embodiments, for example, without limitation, the chewing gum is a soft chewing gum with low crumbliness and a viscosity ratio between 500 and 1000, and is processed at a temperature from 115°C to 155°C and exposed to a shear rate of from 0.005 to 1.2 $sec^{-1}$. In some embodiments, the chewing gum is a chewing gum having a texture substantially similar to the texture of conventional non-coated chewing gum and a viscosity ratio between 500 and 1000, and is processed at a temperature from 95°C to 130°C and exposed to a shear rate of up to 1.1 $sec^{-1}$.

For some embodiments of the soft chewing gum with low crumbliness, where the viscosity ratio is <1000 and processing temperature ≤155°C, the shear rate should be >0.4 $sec^{-1}$. In some embodiments, where the viscosity ratio is <100 and processing temperature ≤120°C, the shear rate should be >1.2 $sec^{-1}$. In some embodiments, where the viscosity ratio is <50 and processing temperature ≤115°C, the shear rate should be >2.5 $sec^{-1}$.

In some embodiments, as shown in Figure 9, the chewing gum is a soft chewing gum with low crumbliness and a viscosity ratio less than 100, and is processed at a temperature from 115°C to 155°C and exposed to a shear rate of from 0.13 to 1.25 $sec^{-1}$. In some embodiments, the chewing gum is a chewing gum having a texture substantially similar to the texture of conventional non-coated chewing gum and a viscosity ratio less than 100, and is processed at a temperature from 95°C to 130°C and exposed to a shear rate of up to from 0.9 to 110 1.1 $sec^{-1}$. In some embodiments, where the viscosity ratio is less than 100, and the processing temperature ≤120°C, the shear rate should be >1.2 $sec^{-1}$. In some embodiments of the soft chewing gum with low crumbliness, where the viscosity ratio is less than 50 and the processing temperature ≤115°C, the shear rate should be >2.5 $sec^{-1}$.

As shown in Figure 10 and Figure 11, processing temperature ranges may be selected to achieve a desired viscosity ratio for specified gum compositions and shear rates. Suitable processing temperature ranges may be selected to properly process the product and achieve a desired texture based on the viscosity ratio of a given gum composition, within a particular range of shear rates. In some embodiments, the chewing gum is a crisp chewing gum including a bulk sweetener blend including isomalt or maltitol or a xylitol/sorbitol/isomalt blend, and is processed at a viscosity ratio of less than 1000 and temperature ≤160°C and shear rate > 0.01 $sec^{-1}$. In some embodiments, where the viscosity ratio is less than 100 in a temperature range of from 130 to 150°C, the shear rate should be >0.15 $sec^{-1}$. In some embodiments, where the viscosity ratio is less than 50 in a temperature range of from 135 to 145°C, the shear rate should be >0.4 $sec^{-1}$.

Table 4 shows examples of molten gum derived from conventional gum formulas. Specifically, formulas A to H are conventional gum formulas, having a base viscosity at 80 °C and humectant content as listed. Formulas I to R differ from A and B by including different bulk sweeteners.

Table 4:

| | Powdery Polyol | Flavor | Molten Base Viscosity (@80C) | Humectant (wt%) |
|---|---|---|---|---|
| A | sorbitol | Peppermint | 150~250 | 16 |
| B | sorbitol | Tropical | 250~350 | 7 |
| C | sorbitol | Cinnamon | 350~450 | 13 |
| D | sorbitol | Apple | 350~450 | 10 |
| E | sorbitol | Lemon | 500~600 | 5 |
| F | sorbitol | Bubble gum | <100 | 9 |
| G | sorbitol | Bubble gum | >1000 | 6 |
| H | sorbitol/NCS | Peppermint | 150~250 | 8 |
| I | xylitol | Peppermint | 150~250 | 15 |
| J | xylitol | Lemon | 500~600 | 0 |
| K | xylitol | Tropical | 250~350 | 2 |
| L | maltitol | Peppermint | 150~250 | 16 |
| M | maltitol | Tropical | 250~350 | 3 |
| N | mannitol | Peppermint | 150~250 | 16 |
| O | mannitol | Tropical | 250~350 | 3 |
| P | erythritol | Peppermint | 150~250 | 16 |
| Q | erythritol | Tropical | 250~350 | 3 |
| R | sugar | Peppermint | 200~300 | 2 |

The extrusion process window can be predicted by differential scanning calorimetry rheological testing. Gum melting condition can be determined by analyzing temperatures (T molding and T extruder), shear complex viscosity (e.g., measuring 100Pa.s), and polyol melting point. Minimum molding temperature can be determined by the temperature shear complex viscosity=1000Pa.s. Some of the embodiments of the inventive process described herein include a gum base having a complex viscosity at 80°C with a viscosity of <500Pa.s, which reduces phase separation of the chewing gum composition. Humectant content can enlarge the process window, reduce the process temperature, and increase the demolding time. In some non-limiting exemplary embodiments, the humectant level is less than 13%, less than 10%, or less than 5%.

Figures 12A and 12D show, respectively, pictures of the water-insoluble portions of a soft chewing gum according to some embodiments of the present invention (mII) compared with conventionally made gum (II). Figures 12B-C show scanning electron microscopy ("SEM") images of water-insoluble portions of the same soft chewing gum compared with conventionally made chewing gum (Figures 12E-F). The SEM images indicate that soft gum composition of the present invention has fewer and smaller dispersed phases, as compared to other embodiments of the gum compositions herein and conventional gum. Soft gum also does not have needle-shape crystals present in the conventional gum, in contrast to the needles observed in conventional gum. Although the majority of the gum base in the soft gum forms a continuous phase, a portion of the gum base is dispersed as small globular domains.

Figure 13 shows how the peak force, average force at 2-3mm, distance at peak force, and initial slope are measured.

Figures 14A-D show mechanical properties characterized by penetration tests using a texture analyzer. Figures 14A-D shows curves of conventional gums (conventional-AA), crisp molten gum (mAA), intermediate molten gum (mDD) and soft molten gum (mII). In some embodiments, a "molten" gum is a gum obtained using an embodiment of the method of the present invention disclosed herein.

Figure 15 shows how to generate different textures by selecting different polyols and their combination. Exemplary gum formulas are set forth in Table 5.

Table 5:

| | AA-ctrl | AA | BB | CC | DD | EE | FF | GG | HH | II | JJ |
|---|---|---|---|---|---|---|---|---|---|---|---|
| 70% Sorbitol Solution | 33.00 | | | | | | | | | | |
| Sorbitol powder | 35.00 | | 22.67 | 45.33 | 22.67 | 68.00 | | 45.33 | | 22.67 | |
| Xylitol powder | | | | 22.67 | 45.33 | | 68.00 | | 22.67 | 22.67 | 45.33 |
| Isomalt powder | | 68.00 | 45.33 | | | | | 22.67 | 45.33 | 22.67 | 22.67 |
| Gum Base | 26.00 | 26.00 | 26.00 | 26.00 | 26.00 | 26.00 | 26.00 | 26.00 | 26.00 | 26.00 | 26.00 |
| Free/Encap HIS | 1.24 | 1.24 | 1.24 | 1.24 | 1.24 | 1.24 | 1.24 | 1.24 | 1.24 | 1.24 | 1.24 |
| Food acids (fumaric, citric, malic) | 0.70 | 0.70 | 0.70 | 0.70 | 0.70 | 0.70 | 0.70 | 0.70 | 0.70 | 0.70 | 0.70 |
| Glycerin | 1.00 | 1.00 | 1.00 | 1.00 | 1.00 | 1.00 | 1.00 | 1.00 | 1.00 | 1.00 | 1.00 |
| Hydrophobic Softeners | 1.00 | 1.00 | 1.00 | 1.00 | 1.00 | 1.00 | 1.00 | 1.00 | 1.00 | 1.00 | 1.00 |
| Color | 0.06 | 0.06 | 0.06 | 0.06 | 0.06 | 0.06 | 0.06 | 0.06 | 0.06 | 0.06 | 0.06 |
| Flavor | 2.00 | 2.00 | 2.00 | 2.00 | 2.00 | 2.00 | 2.00 | 2.00 | 2.00 | 2.00 | 2.00 |
| Total | 100.00 | 100.00 | 100.00 | 100.00 | 100.00 | 100.00 | 100.00 | 100.00 | 100.00 | 100.00 | 100.00 |

Figures 16A-B shows results of analysis by well-trained and calibrated sensory panelists (DA) (n = 5-7) of molten gums having different hardnesses. In some embodiments, molten sorbitol or sorbitol/isomalt blend gums have a firm texture and molten xylitol gum or xylitol/sorbitol or xylitol/sorbitol/isomalt blend gum have a partially firm to soft texture. Figure 16A shows sample texture mapping via a graph, using sensory testing on a soft gum of the present invention (II), conventional gum (AA-CTRL), gum made using the process of the present invention (DD), and firm gum (EE).

As shown in Figure 16B, an embodiment of the soft chewing gum of the present invention has a soft initial bite which lasts throughout the chew. The texture profile of the soft chewing gum product was evaluated by a group of trained sensory panelists and the results are shown in Figure 16B.

Figure 17 is a graph of a temperature sweep rheological test that shows the effect of molten base viscosity during the process of making chewing gum products. When base viscosity at its rubbery plateau is higher than 500 Pa.s, there is an increased phase separation. Images of exemplary embodiments are shown. Image A is sample G; image B is sample J; image C is sample E; image D is sample C; and other data points include samples A, B, D, F, H, I, K, and L to R.

Figure 18 is a bar graph that shows thermal properties, e.g., the high energy input needed, for molten mannitol and erythritol gums, for example.

Figure 19 shows chewing gum products having a low humectant level (<10%) (samples C-H, K, O, Q; data from DSC and temperature sweep rheological test), and the heating temperature required to form a lower viscosity fluid. The heating temperature correlated with the melting point of bulk sweeteners in the chewing gum.

Figure 20 shows humectant concentration and its effect on the process for making the chewing gum products of the present invention. In chewing gum with a high humectant level (≥10%) (from left to right: samples A, B, I, L, N, and P; data from DSC and temperature sweep rheological test), the gum flow can reach a low viscosity at a temperature lower than the melting point of the bulk sweeteners, e.g., for sweeteners such as maltitol, mannitol, and erythritol.

Figures 21A-B and 22A-B show that chewing gum products generated using the processes described herein have different taste profiles. The figures show employer sensory analysis (ESA) using samples A-C, E, J, and M. The ESA was an internal sensory panel which provided each participant with a rating card for rating the attributes of the tested chewing gums at different time points of chewing to ultimately provide a quantitative indication of how the product was received by each participant. Chewing gums made using a molten process have a higher initial burst of flavor and sweetness than those of conventional gums. Molten gums also surprisingly release increased intensities of peppermint and citrus flavors, for example. In conventional gums, flavor distributes mostly in the gum base and on the surface of the bulk sweetener crystal. Without being bound by theory, in some embodiments of the present invention, during the molten gum process, the flavor quickly diffuses out from the gum base matrix, and blends into the molten bulk sweeteners liquid. Due to the quick cool down of the molten gum, flavor chemicals may be trapped inside the bulk sweetener domain, resulting in more flavor in the molten bulk sweetener phase than on the surface of the powdery bulk sweetener. Because bulk sweeteners dissolve in saliva quickly, a higher amount of flavor may be released.

Figure 23 shows a thermograph indicating that an embodiment of the soft gum composition of the present invention has a low glass transition temperature and low crystallinity. These results indicated that after the polyol granules in conventional chewing gum melt and they formed a mixture of liquid droplets and polymorphic crystalline domains in addition to the polymeric gum base network. The morphology of soft gum is primarily two continuous amorphous phases of liquid polyol and gum base, with a portion of gum base dispersed and few accompanying polyol crystals.

Figure 24A-F show scanning electron microscopy images of chewing gums at different magnification. Figures 24A-C are different magnifications (100 micron, 10 micron, 2 micron) of a soft gum prototype (molten II (mII)) generated by the methods described herein. Figures 24D-F show scanning electron microscopy images (100 micron, 10 micron, 2 micron) of conventional gum processed in a conventional way. Figures 24A-C show that the soft gum has a smooth texture, while the conventional gum shown in Figures 24D-F has a different morphology from the soft chewing gum compositions of the present invention, which appears rough and needle-like.

Figures 25A-F show scanning electron microscopy images of chewing gums at different magnification. Figures 25A-C show scanning electron microscopy images of a gum composition (mFF) generated by the methods described herein, whereas Figures 25D-F show scanning electron microscopy images of gum processed in a conventional way.

Figures 26A and 26D show pictures of the water-insoluble portions of chewing gums, Figure 26A is a gum made by the methods described herein (mFF) after water extraction, while Figure 26D is conventional gum (FF) after water extraction. Figures 26B-C are scanning electron microscopy images of the gum shown in Figure 26A, and Figures 26E-F are scanning electron microscopy images of the gum shown in Figure 26D. Comparing the gum composition with conventional gum, they both have a high amount of dispersed phase distributed within the continuous phase, although the composition of the continuous phase and the shapes of disperse phases vary. Without being bound by theory, in the gum composition, the continuous phases could be a gum base network and polyol network (see, e.g., Figure 26A-C); the dispersed phase could be the mixture of base (sphere) (see, e.g., Figure 24F) and polyol crystal (needle) (see, e.g., Figure 25A-C); the sphere size could be in the range 10 to 200 μm; the diameter of the needle could be in the range of a few to hundreds nanometer with length in the range of 1 to 30 μm. However, in gums made in the conventional way, the gum base is the continuous phase (see, e.g., Figure 26D-F, Figure 25E, 25F) and polyol crystal particles are in a dispersed phase (see, e.g., Figure 25D). Depending on the polyol type and suppliers, the shape could be needle-like (e.g., but not limited to, sorbitol and isomalt) or irregular cubic (e.g., but not limited to, xylitol). In some embodiments, the particle size varied from a few microns to 2 mm, with the majority being in the range of 45-850 μm (e.g., in the range of from 75 to 180μm).

Non-limiting example: soft chewing gum generated using molten gum technology containing amorphous bulk sweeteners with high glass transition temperature

Processing Equipment: Sigma-blade batch mixer (Winkworth Machinery Ltd.), Twin screw extruder BC21 (Clextral Co.)

Procedure: The gum bases are pre-heated in the oven at a temperature of 70 °C. The powdery polyol(s), molten gum bases, softeners, and humectant are mixed at 55-60 °C until gum dough are formed. Flavors, e.g., high intensity sweetener (HIS), e.g., aspartame, and antioxidant are added at a temperature of 55-60 °C until homogenous gum dough formed, the total mixing time being within 14 minutes. The gum dough is removed from the mixer, and broken into small pieces. In some samples, the gum dough is sheeted and scored. The feeding zone of the twin screw extruder is set to a temperature of 55 °C, the heating zones are set to temperatures of 93 to 96 °C, the temperature at the nozzle is between 78 to 86 °C, and the rotation speed of the twin screws is in the range of 50 to 120 rpm, usually ranging from 60 to 100 rpm (for example, 70 rpm). The gum fluid is poured into silicone molds. The molten gum is demolded after the temperature cooled to below 32 °C.

Non-limiting example: chewing gum generated using molten gum technology containing amorphous bulk sweeteners with high glass transition temperature

Processing Equipment: Sigma-blade batch mixer (Winkworth Machinery Ltd.), Twin screw extruder BC21 (Clextral Co.)

Procedure: The gum bases are pre-heated in the oven at a temperature of 70 °C. The powdery polyol(s), molten gum bases, softeners, and humectant are mixed at 55-60 °C until gum dough are formed. Flavors, e.g., high intensity sweetener (HIS), e.g., aspartame, and antioxidant are added at a temperature of 55-60 °C until homogenous gum dough formed, the total mixing time being within 14 minutes. The gum dough is removed from the mixer, and broken into small pieces. In some samples, the gum dough is sheeted and scored. The feeding zone of the twin screw extruder is set to a temperature of 55 °C, the heating zones are set to temperatures of 88 to 93°C, the temperature at the nozzle is between 73 to 83 °C, and the rotation speed of the twin screws is in the range of 50 to 120 rpm, usually ranging from 60 to 100 rpm. The gum fluid is poured into silicone molds. The molten gum is demolded after the temperature cooled to below 32 °C.

When making the gum compositions as described herein, the following steps may be taken:

- adding cold gum to mixer/melter, using high shear mixing to avoid separation and pump to generate pressure to the manifold;
- preheating gum using an extruder that feeds a heated tank to get it to the final temperature that limits time at temperature;
- using the extruder to heat material and provide pressure to the depositing manifold;
- delaying differentiation of products by adding color and/or flavor (for example) to blank gum via inline mixing;
- mixing of all ingredients in molten form rather than traditional gum mixing (i.e., mixing by adding ingredients sequentially);
- mixing stable ingredients at a desired temperature, adding the other ingredients at a later time;
- continuously mixing, melting, and pressurizing the manifold in one unit operation;
- reducing temperature needed for a desired viscosity; or
- any combination thereof.

Table 6 shows the composition of some embodiments of soft chewing gum of the present invention, in weight percent, based on the total weight of the soft chewing gum.

Table 6:

| | **I** | **I-1** | **I-2** | **I-3** |
|---|---|---|---|---|
| Sorbitol | 22.67 | 20.00 | 21.50 | 21.50 |
| Xylitol | 22.67 | 20.00 | 21.50 | 21.50 |
| Isomalt | 22.67 | 20.00 | 21.50 | 21.50 |
| Gum Base (High MW PVAC-PIB-SBR-butyl rubber) | 26.39 | 34.00 | 26.00 | 26.00 |
| Free and encapsulated HIS | 1.24 | 1.24 | 1.24 | 1.24 |
| Food acids (fumaric, citric, malic) | 0.30 | 0.30 | 0.30 | 0.30 |
| Glycerin | 1.00 | 1.00 | 4.50 | 4.50 |
| Hydrophobic Softeners | 1.00 | 1.00 | 1.00 | 1.00 |
| Color | 0.06 | 0.06 | 0.06 | 0.06 |
| Flavor | 2.00 | 2.00 | 2.00 | 2.00 |
| | 100.00 | 100.00 | 100.00 | 100.00 |

Table 7 sets forth the composition of some embodiments of chewing gum of the present invention.

Table 7:

| | DD | LL | MM | NN | OO | PP | QQ | RR | SS | TT | UU | VV | WW | XX |
|---|---|---|---|---|---|---|---|---|---|---|---|---|---|---|
| Sorbitol | 22.67 | 22.46 | 25.79 | 25.79 | 19.13 | 25.79 | 22.46 | 19.13 | 19.13 | 22.46 | 15.32 | 22.72 | 22.72 | 22.72 |
| Xylitol | 45.33 | 44.91 | 51.58 | 51.58 | 38.25 | 51.58 | 44.92 | 38.25 | 38.25 | 44. 92 | 46.56 | 45.44 | 45.44 | 45.44 |
| Isomalt | | | | | | | | | | | 6.12 | | | |
| Hi. visc. base @37C | 24.39 | | 15.00 | | 35.00 | | 25.00 | | | | 24.39 | | 24.39 | 24.39 |
| Med. visc. Base @37C | | 25.00 | | 15.00 | | | | | 35.00 | | | | | |
| Low. Visc. base. @37C | | | | | | 15.00 | | 35.00 | | 25.00 | | 24.69 | | |
| Free/enc ap HIS | 2.86 | 2.86 | 2.86 | 2.86 | 2.86 | 2.86 | 2.86 | 2.86 | 2.86 | 2.86 | 2.86 | 2.35 | 2.86 | 2.86 |
| Food acids (fumaric , citric, malic) | 0.70 | 0.70 | 0.70 | 0.70 | 0.70 | 0.70 | 0.70 | 0.70 | 0.70 | 0.70 | 0.70 | 0.70 | 0.70 | 0.70 |
| Glycerin | 1.00 | 1.00 | 1.00 | 1.00 | 1.00 | 1.00 | 1.00 | 1.00 | 1.00 | 1.00 | 1.00 | 1.00 | 1.00 | 1.00 |
| Hydrophobic softener s | 1.00 | 1.00 | 1.00 | 1.00 | 1.00 | 1.00 | 1.00 | 1.00 | 1.00 | 1.00 | 1.00 | 1.00 | 1.00 | 1.00 |
| Color | 0.06 | 0.06 | 0.06 | 0.06 | 0.06 | 0.06 | 0.06 | 0.06 | 0.06 | 0.06 | 0.06 | 0.30 | 0.02 | 0.02 |
| strawber ry flavor | 2.00 | 2.00 | 2.00 | 2.00 | 2.00 | 2.00 | 2.00 | 2.00 | 2.00 | 2.00 | 2.00 | 2.00 | | |
| spearmi nt flavor | | | | | | | | | | | | | 2.57 | |
| melon flavor | | | | | | | | | | | | | | 2.00 |
| TOTAL | 100 | 100 | 100 | 100 | 100 | 100 | 100 | 100 | 100 | 100 | 100 | 100 | 100 | 100 |

Table 8 shows ranges of heating zone temperature and molding temperature parameters used in some embodiments of the methods of the present invention.

Table 8:

| | | Heating zone actual temperature (°C) | Actual molding T°C |
|---|---|---|---|
| Chew | Sample: | | |
| | Strawberry (UU) | 93-98 | 74~82 |
| | Spearmint (WW) | 92-99 | 79-81 |
| | Watermelon (XX) | 102-108 | 81-85 |
| | Strawberry (VV) | 93-94 | 77-80 |
| Soft chew | I | 93-95 | 71-73 |
| | I-2 | 98-102 | 76-88 |
| | I-3 | 95 | 74-78 |

Table 9 shows the polyol forms in the gums listed in Table 8 and their corresponding characteristics.

Table 9:

| Sample | polyol form in gum | Fpeak/ F2-3mm | Peak stress (MPa) | Distance at Fpeak (mm) | Crispness |
|---|---|---|---|---|---|
| A | powder sorbitol | 1.0 | 3.2 | 2.3 | none |
| B | powder sorbitol | 1.1 | 6.1 | 1.5 | none |
| C | powder sorbitol | 1.0 | 3.8 | 2.9 | none |
| D | powder sorbitol | 1.0 | 4.8 | 3.0 | none |
| E | powder sorbitol | 1.2 | 11.1 | 1.1 | none |
| F | powder sorbitol | 1.4 | 14.6 | 1.4 | none |
| G | powder sorbitol | 1.0 | 8.0 | 3.0 | none |
| H | powder sorbitol | 1.3 | 8.0 | 1.0 | none |
| I | powder xylitol | 1.1 | 2.2 | 2.1 | none |
| J | powder xylitol | 1.1 | 3.2 | 2.3 | none |
| K | powder xylitol | 1.1 | 2.5 | 2.4 | none |
| L | powder maltitol | 1.0 | 2.9 | 2.8 | none |
| N | powder mannitol | 1.0 | 3.5 | 2.9 | none |
| O | powder mannitol | 1.0 | 4.5 | 2.9 | none |
| R | powder sugar | 1.0 | 4.1 | 2.9 | none |
| P | powder erythritol | 1.0 | 3.2 | 2.9 | none |

Figures 27-28 show a sweetness and sourness of embodiments of the present invention. Figure 27 shows sweetness by DA sensory panel on soft gum (molten II), conventional gum (non-molten AA-CTRL), normal texture gum (molten DD) and firm gum (molten EE). Figure 28 shows sourness by DA sensory panel on soft gum (molten II); conventional gum (non-molten AA-CTRL); normal texture gum (molten DD) and firm gum (molten EE).

Figure 29 shows flavor intensity by DA sensory panel on soft gum (molten II); conventional gum (non-molten AA-CTRL), normal texture gum (molten DD), and firm gum (molten EE).

Figures 30A-B are scanning electron microscopy images of conventional gum (e.g., EE) showing resolution at 10 microns and 2 microns. The crystallinity of the gum composition of some embodiments of the present invention is higher than soft gum. However, the gum composition of some embodiments of the present invention has a lower crystallinity than conventional gum as shown in the DSC thermograms of Figures 31A and 31B. Figures 31A and 31B show DSC curves of two gum compositions of the present invention and conventional chewing gum (Figure 31A: molten FF by melt extrusion vs FF by conventional gum mixing; Figure 31B molten DD by melt extrusion vs DD by conventional gum mixing).

Crisp Chewing Gum Products Examples

*Formulation strategies*

In the following examples, the type of bulk sweeteners included in the crisp product significantly impacts the characteristics of the product. The type of bulk sweeteners included in the crisp product were significant factors in determining the molten process temperature and the molten gum initial firmness. For conventional sorbitol gum formulas, use of the molten process described herein significantly increases the initial hardness.

Figures 32A-D show scanning electron microscopy images at magnifications of 100 microns and 10 microns. Figures 32A and 32B are images obtained using the crisp gum product of the present invention (sample AA) were made by the methods detailed herein. Figures 32C and 36D show scanning electron microscopy images of gum processed by a conventional method.

The samples of Figures 32A-D were prepared by cutting a 1mm thick sample of the chewing gum, breaking the sample into two pieces under liquid nitrogen, thereby obtaining a fresh cross-section without stretching or deforming the samples. Equipment used to obtain the images in Figures 32A-D were: Carl-Zeiss Merlin Scanning Electron Microscope; In-lens detector: topographical contrast enhanced with compositional contrast. The testing conditions were as follows: Acceleration voltage 1 kV; Working distance ~5 mm; No metal coating; Imaged at 100 x to 5k x magnification.

Figure 32E shows a comparison of a sensory profile of a crisp prototype (sample AA) with a conventional chewing gum (sample AA-ctrl). The crisp chewing gum product had a reduction in hardness and crumbliness and an increase in cohesiveness when the product was chewed for 20 seconds when the crisp chewing gum product was evaluated by a group of trained sensory panelists. The solid line of Figure 32E shows the attribute at first bite, and the dashed line shows the attribute at 20 seconds of chewing time. The dark grey lines are derived from control testing, while the light grey lines are derived from crisp gum product testing.

Figures 33A and 33D show pictures of water-insoluble portions of crisp chewing gum of the present invention (Figure 33A) and conventional chewing gum (Figure 33D), respectively. Figures 33B-C show scanning electron microscopy images derived from the crisp chewing gum of the present invention (New, sample AA), showing the water-insoluble portion of the crisp chewing gum. As disclosed herein, "sample mAA" has the same formulation as sample AA. Sample mAA was generated using an embodiment of the molten gum process of the present invention. Figures 33E-F show scanning electron microscopy images derived from conventional gum (AA-ctrl), showing the water-insoluble portion of the conventional gum. The water extraction test was performed by preparing a 1mm thick cross section of a sample in deionized water at room temperature and kept stationary (no agitation). Samples were kept in water for 12 hours to fully remove water soluble ingredients; residuals were then removed from water and dried in vacuum for 1 hour for SEM imaging under the same conditions as described previously. Crisp gum (mAA) resulted in much faster dissolution (< 10 min) in water and disintegration; the conventional gum (Ctrl) dissolved slower (~ 1 hr) and maintained its original shape. Figures 33B and 33C show that the morphology of the crisp gum product, as shown in the scanning electron microscope images, has globular features embedded in a smooth matrix. Figures 33B and 33C show that, after water extraction, the globular domains are from gum base. The domain sizes are in the range of 1~100 μm. Conversely, the gum made by the conventional method has a rough surface (Figures 33E and 33F).

Figures 33A-C show that the molten polyol in crisp gum has a continuous glassy phase, with dispersed globular gum base domains distributed within the continuous polyol phase. However, in conventional gum, gum base is in a continuous phase and polyol particles are dispersed within the continuous gum base matrix. This dispersed phase in crisp gum occurs when the gum base/polyol weight ratio is less than 0.6. With high base content, such as a base/polyol weight ratio higher than 0.6, the gum base and polyol continuous phases may occur.

Some examples of formulas having a firm characteristic are, but are not limited to: B, C, D, E, F, H, BB, EE, GG, and HH. Some examples of formulas having a crisp characteristic are, but are not limited to, M and AA. Some examples of formulas having a soft characteristic are, but are not limited to, I, L, N, P, and II. Some examples of formulas having similar characteristics are J, K, CC, DD, FF, and JJ. A non-limiting example of a crumbling characteristic is formula A. Formula G is a non-limiting example of a gum composition having phase separation due, at least in non-binding theory, to high base viscosity (could not be processed at sufficient shear). Formulas O and R are non-limiting examples of gum compositions with a foaming characteristic (where the melting temperature used was >155 °C).

Table 10 shows the melting temperature (heating zone temperature) and molding temperature of formulas AA and BB.

Table 10:

| | Heating zone temperature °C | Molding T °C |
|---|---|---|
| AA | 144-150 | 125-127 |
| BB | 131-134 | 123 |

Figure 34 shows results of analysis by well-trained and calibrated sensory panelists (DA) (n = 5-7) of molten gums having different hardnesses. In some embodiments, molten sorbitol or sorbitol/isomalt blend gums have a firm texture, and molten maltitol or isomalt or isomalt/maltitol blend gums have a crisp texture. Figure 34 shows sample texture mapping via a graph, using sensory testing on a conventional gum (AA-CTRL), crisp gum (AA), and firm gum.

Figure 36 is a bar graph that shows thermal properties, e.g., the high energy input needed, for molten mannitol and erythritol gums. Figure 19 shows chewing gum products having a low humectant level (<10%) (samples C-H, M, O, Q; data from DSC and temperature sweep rheological test), and the heating temperature required to form low viscosity fluid. The heating temperature correlated with the melting point of bulk sweeteners in the chewing gum.

Figure 20 shows humectant concentration and its effect on the process for making chewing gum products of some embodiments of the present invention. In chewing gum with a high humectant level (≥10%) (from left to right: samples A and B; data from DSC and temperature sweep rheological test), the gum flow can reach low viscosity at a temperature lower than the melting point of the bulk sweeteners.

Figure 37 shows that humectant content has a strong impact on crispness (from left to right: crisp gum comprising a glycerin content of 3%, 5%, or 6%). Chewing gum crispness was measured by the difference between peak force and the force at 2-3mm penetration. A larger difference in force correlates with a crispier chewing gum. In some embodiments, the ratio between maximum peak force and average force (F 2-3 mm) is greater than 10 and the glycerin/maltitol ratio is less than 0.09, such as less than 0.05, where other humectants and plasticizers are absent.

Non-limiting example: crisp chewing gum generated using molten gum technology containing amorphous bulk sweeteners with high glass transition temperature

Processing Equipment: Sigma-blade batch mixer (Winkworth Machinery Ltd.), Twin screw extruder BC21 (Clextral Co.)

Procedure: The gum bases were pre-heated in the oven at a temperature of 70 °C. The powdery polyol(s), molten gum bases, softeners, and humectant were mixed at 55-60 °C until gum dough was formed. Flavors, e.g., high intensity sweetener (HIS) (e.g., aspartame), and antioxidant were added at a temperature of 55-60 °C until homogenous gum dough formed (total mixing time was within 14 minutes). The gum dough was removed from the mixer and broken into small pieces. In some samples, the gum dough was sheeted and scored. The feeding zone of the twin screw extruder was set to a temperature of 55 °C; the heating zones were set to temperatures of 145 to 150 °C; the temperature at the nozzle was between 120 to 130 °C (typically at 127 °C); and the rotation speed of the twin screws was in the range of 50 to 120 rpm, usually ranging from 60 to 100 rpm (for example, 70 rpm). The gum fluid was poured into silicone molds. The molten gum was demolded after the temperature cooled to below 32 °C.

Crisp chewing gum structure

If a crisp material has both a glass transition temperature and melting point higher than the chewing temperature, the material would feel hard to a user. In general, molecules in crystal form arrange in a more regular way than those in an amorphous phase. The regularly repeating structure of a crystal is generally more difficult to damage than a randomly aggregated structure.

The majority of bulk sweeteners in conventional gum exist in the form of powdery crystal and behave as filler. By melting the bulk sweeteners, bulk sweeteners fuse together. When the bulk sweeteners content is higher than 30% by volume, they can form a continuous phase. When the bulk sweetener continuous phase has a glass transition temperature higher than ambient temperature and with low crystallinity (0-30% (DSC method)), it behaves like crisp hard candy.

Tested chewing gum formulas typically contained 50 volume% to 80 volume% isomalt and maltitol or their blends with a minimum amount of humectant and plasticizers for polyols, such as glycerin, water, ethylene glycol, propylene glycol, xylitol, sorbitol, etc. The glycerin/maltitol ratio was combined to be less than 0.09; and, in the absence of other humectant and plasticizers, the glycerin/maltitol ratio is less than 0.05; and, a sorbitol/isomalt or a xylitol/isomalt ratio was combined to be less than 0.5.

The melting temperature was in the range of 127 to 160 °C under short resident time, i.e., less than 10 minutes, with a medium shear rate (10 to 1000 $s^{-1}$).

Examples of the tested formulas for crisp molten gum are shown in Table 11 below:

Table 11:

| | **Ex. 1** | **Ex. 2** | **Ex. 3** | **Ex. 4** | **Ex. 5** | **Ex. 6** | **Ex. 7** | **Ex. 8** |
|---|---|---|---|---|---|---|---|---|
| Maltitol | 54.00 | 54.00 | 63.40 | 64.50 | 59.20 | 69.30 | 56.40 | |
| Isomalt | | | | | | | | 68.00 |
| Wax-free High MW-PVAc-Low MW PIB - butyl rubber base | 23.20 | 23.20 | | | 23.20 | | 23.20 | |
| Wax-free low MW PVAc-butyl rubber base | 5.80 | 5.80 | | | 5.80 | | 5.80 | |
| Wax-free low MW PVAc-low MW PIB-butyl rubber base | | | | 21.50 | | 21.50 | | |
| Wax-free high MW PVAc-butyl rubber base | | | | 4.50 | | 4.50 | | |
| Wax-free high MW PVAc-low MW PIB-SBR base | | | 17.42 | | | | | 17.42 |
| High MW PVAc-medium MW PIB-high wax base | | | 8.58 | | | | | 8.58 |
| HSH/Glycerin Blend | 6.50 | 6.50 | | | | | 6.50 | |
| Evaporated sorbitol syrup | | | 5.00 | 5.00 | 5.00 | | | |
| Tropical fruit flavor | 2.10 | 2.10 | | | | | 2.10 | |
| Strawberry | | | 2.00 | | 2.10 | | | 2 |
| Spearmint | | | | 2.57 | | 2.10 | | |
| Glycerin | 3.75 | 4.42 | | | | 0.50 | 1.38 | 1 |
| Filler | 2.00 | 2.00 | | | 2.00 | | 2.00 | |
| Free/Encap. HIS | 0.98 | 0.31 | 1.83 | 1.83 | 1.83 | 1.83 | 0.98 | 1.24 |
| Food acids (fumaric, citric, malic) | 1.50 | 1.50 | 0.70 | | 0.70 | | 1.50 | 0.70 |
| Salt solution | | | | 0.08 | | 0.08 | | |
| Hydrophobic Softeners | | | 1.00 | | | | | 1.00 |
| Triacetate | 0.09 | 0.09 | | | 0.09 | 0.02 | 0.09 | |
| Color | 0.10 | 0.10 | 0.06 | 0.02 | 0.06 | | 0.10 | 0.06 |
| Total | 100.00 | 100.00 | 100.00 | 100.00 | 100.00 | 100.00 | 100.00 | 100.00 |
| Glycerin content | 5.38 | 6.05 | 1.95 | 1.95 | 1.95 | 0.50 | 3.00 | 1.00 |
| Glycerin/Polyol | 0.09 | 0.10 | 0.03 | 0.03 | 0.03 | 0.01 | 0.05 | 0.01 |

In the crisp product embodiments described in Table 11, the product has a relatively high but tolerable initial hardness and then fails rapidly. This was achieved by generation of a polyol network having a high Tg and low crystallinity as illustrated in Figure 49 (DSC thermograph of crisp example 7).

The crisp gum structure was characterized by a differential scanning calorimeter (DSC) using the following method. A Discovery-DSC (TA Instrument) was configured to have an equilibrium at -85°C and a standard ramp in the range of -85 to 180°C; was configured to run for two cycles; and had a heating rate of 20°C/min.

Crystallinity was calculated using the following equation:

$$Relative\ crystallinity = \frac{\Delta H_{MOLTEN}}{\Delta H_{CONVENTIONAL}} \times 100\%$$

ΔH is the enthalpy in molten gum and has powdery crystal structure in conventional gum.

As shown in Figure 39, a DSC thermograph and table, crisp gum has stable low crystallinity and the glass transition temperature is higher than ambient temperature. Table 12 shows the quantified results for Examples 7 and 8:

Table 12:

| Sample | Tg (° C) | T(m) (° C) | Crystallinity % |
|---|---|---|---|
| Example 7 | 25~32 | 145 | 2% |
| Example 8 | ~19 | 98 and 137 | 26% |

Crispness characterization test

*Texture analyzer*

Equipment: TA.XT Plus Texture Analyzer (Stable Micro Systems) was used to quantify peak force (FPeak), penetration distance at peak force (DFPeak), average force between 2 and 3 mm penetration, and a first initial slope (slope calculated between two calculated points provided by the computational system described herein). The force used was 25 kg force for a 2 mm stainless steel probe.

The sample geometry was a cube, rectangle or cylinder with shortest side/diameter/height > 1cm. The probe material and size was a 2mm diameter stainless steel cylindrical probe. The speed was 1mm/s pre-test and test speed. The target distance was 3mm and, prior to initiating the test, the plot was stopped at target position. The trigger force was 5g.

There were three parameters tested using the Texture analyzer ("penetration test"):

(1) The ratio between peak force and the force at 2-3mm during penetration, which allowed for the following observations. The bigger the difference observed, the greater the crispness. For the conventional gum with powdery polyol, this value was usually around 1, while for crisp gum, as shown in these examples, this value was 10+ times higher. The value of most crisp gum samples was around 16.

(2) The maximum force or the maximum stress during penetration, which was higher than the conventional gum but lower than expected biting force on hard candy. Under current test conditions (probe diameter=2 mm), the peak force of conventional gums are in the range of 5 to 50 N or 2 to 15 MPa. In contrast, the crisp chewing gum has peak force higher than 100N. In some examples, the peak stress is in the range of 40 to 125 MPa.

(3) The distance to maximum force was as short as possible. Under current test conditions this value of conventional gums is in the range of 1 to 3mm. The crisp gum has a value of less than 0.5mm; in contrast, the value of conventional gum is around 0.3mm.

Figures 40-42 show a sweetness and flavor burst of embodiments of the present invention. Figure 40 shows sweetness by DA sensory panel on conventional gum (non-molten AA-CTRL), crisp gum (molten AA), and firm gum (molten EE). Figure 41 shows sourness by DA sensory panel on conventional gum (non-molten AA-CTRL), crisp gum (molten AA), and firm gum (molten EE). Figure 42 shows strawberry intensity by DA sensory panel on conventional gum (non-molten AA-CTRL), crisp gum (molten AA), and firm gum (molten EE).

Figures 43A-C provide various schematic drawings of process apparatus suitable for performing one or more of the methods for making chewing gum compositions disclosed herein. More particularly, Figure 43A illustrates a system including an agitated tank 10, pump 20, depositing mechanism 35, and thermoformed blisters 30 used in some embodiments of the methods of the present invention. Figure 43B illustrates a system including a dual-tank processing arrangement including two agitated tanks 12, 14, pumps 22, 24 associated with each tank 12, 14 and a depositing mechanism 32, used in some embodiments of the methods of the present invention. In the systems shown in Figures 43A and 43B, respectively, the agitated tanks 10, 12, 14 are used to melt the base to the desired temperature and incorporate additional ingredients, and pumps 20, 22, 24 are used to transport the molten gum, ultimately to one or more depositing mechanisms 30, 32 (selection of the pumps 20, 22, 24 being dependent on the viscosity, temperature, pressure, and desired flow rate, as will be known and understood by persons of ordinary skill in the relevant art). Figure 43C illustrates an extruding system used in some embodiments of the methods of the present invention. In the system shown in Figure 43C, two tanks 16, 18 and two pumps 26, 28 are included, and an extruder 40 is used, while flavor and color are added downstream of other ingredients.

Tables 13-17 below provide additional examples of molten gums having various textures:

Table 13

| Example # | TX01 | TX02 | TX03 | TX04 | TX05 | TX06 |
|---|---|---|---|---|---|---|
| X:S:I ratio | NA | 0:0:100 | 0:33:67 | 33:67:0 | 67:33:0 | 0:100:0 |
| Sorbitol-glycerin blend | 33.00 | 0 | | | | |
| Sorbitol Powder | 35.00 | | 22.70 | 45.30 | 22.70 | 68.00 |
| Xylitol Powder | | | | 22.70 | 45.30 | |
| Isomalt Powder | | 68.00 | 45.30 | | | |
| GB11 | 17.42 | 17.42 | 17.42 | 17.42 | 17.42 | 17.42 |
| GB10 | 8.58 | 8.58 | 8.58 | 8.58 | 8.58 | 8.58 |
| Free and Encapsulated HIS | 1.24 | 1.24 | 1.24 | 1.24 | 1.24 | 1.24 |
| Food Acids | 0.70 | 0.70 | 0.70 | 0.70 | 0.70 | 0.70 |
| Glycerin | 1.00 | 1.00 | 1.00 | 1.00 | 1.00 | 1.00 |
| Hydrophobic Softeners | 1.00 | 1.00 | 1.00 | 1.00 | 1.00 | 1.00 |
| Color | 0.06 | 0.06 | 0.06 | 0.06 | 0.06 | 0.06 |
| Strawberry Flavor | 2.00 | 2.00 | 2.00 | 2.00 | 2.00 | 2.00 |
| Total | 100.00 | 100.00 | 100 | 100 | 100 | 100 |

Table 14

| Example # | TX07 | TX08 | TX09 | TX10 | TX11 |
|---|---|---|---|---|---|
| X:S:I ratio | 100:0:0 | 67:0:33 | 33:0:67 | 33:33:33 | 67:0:33 |
| Sorbitol Powder | | 45.30 | | 22.70 | |
| Xylitol Powder | 68.00 | | 22.70 | 22.70 | 45.30 |
| Isomalt Powder | | 22.70 | 45.30 | 22.70 | 22.70 |
| GB11 | 17.42 | 17.42 | 17.42 | 17.42 | 17.42 |
| GB10 | 8.58 | 8.58 | 8.58 | 8.58 | 8.58 |
| Free and Encapsulated HIS | 1.24 | 1.24 | 1.24 | 1.24 | 1.24 |
| Food Acids | 0.70 | 0.70 | 0.70 | 0.70 | 0.70 |
| Glycerin | 1.00 | 1.00 | 1.00 | 1.00 | 1.00 |
| Hydrophobic Softeners | 1.00 | 1.00 | 1.00 | 1.00 | 1.00 |
| Color | 0.06 | 0.06 | 0.06 | 0.06 | 0.06 |
| Strawberry Flavor | 2.00 | 2.00 | 2.00 | 2.00 | 2.00 |
| Total | 100.00 | 100.00 | 100.00 | 100.00 | 100.00 |

Table 15

| Example # | TX12 | TX13 |
|---|---|---|
| | high base | high glycerin |
| X:S:I ratio | 33:33:33 | 33:33:33 |
| Sorbitol Powder | 20.00 | 21.50 |
| Xylitol Powder | 20.00 | 21.50 |
| Isomalt Powder | 20.00 | 21.50 |
| GB11 | 22.78 | 17.42 |
| GB10 | 11.22 | 8.58 |
| Free and Encapsulated HIS | 1.24 | 1.24 |
| Food Acids | 0.70 | 0.70 |
| Glycerin | 1.00 | 4.50 |
| Hydrophobic Softeners | 1.00 | 1.00 |
| Color | 0.06 | 0.06 |
| Strawberry Flavor | 2.00 | 2.00 |
| Total | 100.00 | 100.00 |

Table 26

| Example # | TX14 | TX15 | TX16 | TX17 |
|---|---|---|---|---|
| X:S:I ratio | 68:23:9 | 67:33:0 | 67:33:0 | 67:33:0 |
| Sorbitol Powder | 15.32 | 22.72 | 22.72 | 22.72 |
| Xylitol Powder | 46.56 | 45.44 | 45.44 | 45.44 |
| Isomalt Powder | 6.12 | | | |
| GB11 | 16.34 | | 16.34 | 16.34 |
| GB10 | 8.05 | | 8.05 | 8.05 |
| GB05 | | 16.54 | | |
| GB01 | | | | |
| GB12 | | 8.15 | | |
| Free and Encapsulated HIS | 2.86 | 2.35 | 2.86 | 2.86 |
| Food Acids | 0.70 | 0.70 | | 0.70 |
| Glycerin | 1.00 | 1.00 | 1.00 | 1.00 |
| Hydrophobic Softeners | 1.00 | 0.80 | 1.00 | 1.00 |
| Color | 0.06 | | | |
| Flavor | 2.00 | 2.30 | 2.59 | 2.02 |
| TOTAL | 100.00 | 100.00 | 100.00 | 100.00 |

Table 37

| Example # | TX18 | TX19 |
|---|---|---|
| Isomalt Powder | 67.99 | 34.00 |

(continued)

| Example # | TX18 | TX19 |
|---|---|---|
| Maltitol Powder | | 34.00 |
| GB11 | 16.34 | 16.34 |
| GB10 | 8.05 | 8.05 |
| Glycerin | 1.00 | 1.00 |
| Free/Encap HIS | 2.86 | 2.86 |
| Food Acids(fumaric, citric, malic) | 0.70 | 0.70 |
| Hydrophobic Softeners | 1.00 | 1.00 |
| Strawberry Flavor | 2.00 | 2.00 |
| Color | 0.06 | 0.06 |
| Total | 100.00 | 100.00 |

## Claims

1. A chewing gum composition comprising 10 to 35 wt. % of a gum base and 50 to 80 wt.% of a bulk sweetener blend, wherein the bulk sweetener blend comprises at least one polyol, and wherein the chewing gum composition is formed from a molten gum composition comprising at least one molten gum base and at least one molten polyol, wherein the at least one polyol comprises xylitol, sorbitol, and at least one of isomalt and maltitol, and wherein a morphology of the chewing gum composition comprises at least one continuous amorphous phase when tested by scanning electron microscopy at a resolution of 100 microns.

2. The composition of claim 1, wherein the gum base comprises a butadienestyrene copolymer, polyisobutylene, isobutyleneisoprene copolymer, or a combination thereof.

3. The composition of any of the preceding claims,
wherein the composition is a soft chewing gum composition,
wherein the bulk sweetener blend comprises:

   i) 12 to 57 wt. % xylitol,
   ii) 10 to 70 wt. % sorbitol, and
   iii) 5 to 61 wt. % isomalt or maltitol or mixtures thereof.

4. The composition of any of the preceding claims, wherein the composition is a soft chewing gum composition wherein the bulk sweetener blend has the properties of:

   i) a glass transition temperature below 0 °C as determined by differential scanning calorimetry; and
   ii) a crystallinity of less than 25% as measured by differential scanning calorimetry.

5. The composition of any of the preceding claims, wherein the bulk sweetener blend is amorphous.

6. The composition of any of the preceding claims, further comprising between 0.1% and 1% by weight of a plasticizer, based on the total weight of the composition, the plasticizer having a partition coefficient of at least 2 and a molecular weight of less than 1000 g/mole.

7. The composition of any of claims 1-3, wherein the composition has an intermediate texture and low crumbliness, wherein the bulk sweetener blend comprises:

   i) 29 to 72 wt. % xylitol,
   ii) 11 to 34 wt. % sorbitol, and
   iii) 5 to 49 wt. % isomalt or maltitol or mixtures thereof

**8.** The composition of claim 7, wherein the bulk sweetener blend has a crystallinity of from 40 to 50% as measured by differential scanning calorimetry, and/or wherein the bulk sweetener blend comprises less than 65 wt% isomalt or maltitol, at least 15 wt% xylitol, and less than 65 wt% sorbitol, all based on the total weight of the bulk sweetener blend, wherein a weight ratio between the highest content polyol and lowest content polyol is greater than 1.5.

**9.** The composition of any of claims 1-3, wherein the composition has a crisp texture, and wherein the bulk sweetener blend comprises:

i) less than 10 wt. % xylitol,
ii) less than 15 wt. % sorbitol, and
iii) at least 85wt. % isomalt or maltitol or mixtures thereof,
by weight of the bulk sweetener blend.

**10.** The composition of claim 9, wherein a morphology of the crisp chewing gum product comprises a plurality of globules and optionally the plurality of globules comprise gum base when tested by scanning electron microscopy at a resolution of 100 microns.

**11.** The composition of claim 10, wherein the glass transition temperature of the bulk sweetener blend is from 20.1 to 40 °C as determined by differential scanning calorimetry, and/or wherein the crystallinity of the bulk sweetener blend is from 20% to 30% as measured by differential scanning calorimetry.

**12.** The composition of any of claims 10-11, wherein the bulk sweetener blend further comprises a maltitol/isomalt weight ratio of between 0.01 and 1.5.

**13.** A method for making a chewing gum product, the method comprising:

a) preparing a chewing gum mixture comprising 10 to 35 wt.% at least one gum base and 50 to 80 wt.% of a bulk sweetener blend comprising at least one polyol, wherein the bulk sweetener blend comprises xylitol, sorbitol and at least one of isomalt and maltitol;
b) exposing the chewing gum mixture to at least a first temperature, wherein the first temperature is a temperature at which the chewing gum mixture becomes a moldable fluid, at a first shear rate, to form a molten chewing gum mixture comprising at least one molten gum base and at least one molten polyol, and wherein the viscosity ratio (p) is 1000 or below, wherein the viscosity ratio (p) is the complex viscosity of the at least one molten base divided by the complex viscosity of the at least one molten polyol; and
c) depositing the melted chewing gum mixture onto a surface to form the chewing gum product.

**14.** The method of claim 13, wherein the first temperature is between 80 and 125 °C, or wherein the first temperature is between 125 and 160 °C

**15.** The method of any claims 13-14, wherein the chewing gum mixture comprises a polyol or a polyol blend having a weight average molecular weight of 150 to 350 g/mole.

## Patentansprüche

**1.** Kaugummizusammensetzung, umfassend 10 bis 35 Gew.-% an einer Gummigrundmasse und 50 bis 80 Gew.-% an einem Füllsüßstoffgemisch, wobei das Füllsüßstoffgemisch wenigstens ein Polyol umfasst und wobei die Kaugummizusammensetzung aus einer geschmolzenen Gummizusammensetzung gebildet ist, die wenigstens eine geschmolzene Gummigrundmasse und wenigstens ein geschmolzenes Polyol umfasst,
wobei das wenigstens eine Polyol Xylit, Sorbit und wenigstens eines von Isomalt und Maltit umfasst und wobei eine Morphologie der Kaugummizusammensetzung, wenn geprüft durch Rasterelektronenmikroskopie bei einer Auflösung von 100 Mikrometer, wenigstens eine kontinuierliche amorphe Phase umfasst.

**2.** Zusammensetzung gemäß Anspruch 1, wobei die Gummigrundmasse ein Butadien-Styrol-Copolymer, Polyisobutylen, Isobutylen-Isopren-Copolymer oder eine Kombination davon umfasst.

**3.** Zusammensetzung gemäß einem der vorstehenden Ansprüche,
wobei die Zusammensetzung eine weiche Kaugummizusammensetzung ist,

wobei das Füllsüßstoffgemisch umfasst:

i) 12 bis 57 Gew.-% Xylit,
ii) 10 bis 70 Gew.-% Sorbit und
iii) 5 bis 61 Gew.-% Isomalt oder Maltit oder Gemische davon.

**4.** Zusammensetzung gemäß einem der vorstehenden Ansprüche, wobei die Zusammensetzung eine weiche Kaugummizusammensetzung ist, wobei das Füllsüßstoffgemisch die Eigenschaften aufweist:

i) eine Glasübergangstemperatur von unter 0 °C, wie bestimmt durch Differenzscanningkalorimetrie; und
ii) eine Kristallinität von weniger als 25 %, wie gemessen durch Differenzscanningkalorimetrie.

**5.** Zusammensetzung gemäß einem der vorstehenden Ansprüche, wobei das Füllsüßstoffgemisch amorph ist.

**6.** Zusammensetzung gemäß einem der vorstehenden Ansprüche, ferner umfassend zwischen 0,1 Gew.-% und 1 Gew.-% an einem Weichmacher, bezogen auf das Gesamtgewicht der Zusammensetzung, wobei der Weichmacher einen Partitionskoeffizienten von wenigstens 2 und ein Molekulargewicht von weniger als 1000 g/mol aufweist.

**7.** Zusammensetzung gemäß einem der Ansprüche 1-3, wobei die Zusammensetzung eine mittlere Textur und eine geringe Brüchigkeit aufweist,
wobei das Füllsüßstoffgemisch umfasst:

i) 29 bis 72 Gew.-% Xylit,
ii) 11 bis 34 Gew.-% Sorbit und
iii) 5 bis 49 Gew.-% Isomalt oder Maltit oder Gemische davon.

**8.** Zusammensetzung gemäß Anspruch 7, wobei das Füllsüßstoffgemisch eine Kristallinität von 40 bis 50 %, wie gemessen durch Differenzscanningkalorimetrie, aufweist und/oder wobei das Füllsüßstoffgemisch weniger als 65 Gew.-% Isomalt oder Maltit, wenigstens 15 Gew.-% Xylit und weniger als 65 Gew.-% Sorbit, alle bezogen auf das Gesamtgewicht des Füllsüßstoffgemischs, umfasst und wobei das Gewichtsverhältnis zwischen dem Polyol mit dem höchsten Gehalt und dem Polyol mit dem niedrigsten Gehalt größer als 1,5 ist.

**9.** Zusammensetzung gemäß einem der Ansprüche 1-3, wobei die Zusammensetzung eine knackige Textur aufweist und wobei das Füllsüßstoffgemisch umfasst:

i) weniger als 10 Gew.-% Xylit,
ii) weniger als 15 Gew.-% Sorbit und
iii) wenigstens 85 Gew.-% Isomalt oder Maltit oder Gemische davon,
bezogen auf das Gewicht des Füllsüßstoffgemischs.

**10.** Zusammensetzung gemäß Anspruch 9, wobei eine Morphologie des knackigen Kaugummiprodukts eine Vielzahl von Kügelchen umfasst und gegebenenfalls die Vielzahl von Kügelchen, wenn geprüft durch Rasterelektronenmikroskopie bei einer Auflösung von 100 Mikrometer, Gummigrundmasse umfasst.

**11.** Zusammensetzung gemäß Anspruch 10, wobei die Glasübergangstemperatur des Füllsüßstoffgemischs von 20,1 bis 40 °C, wie bestimmt durch Differenzscanningkalorimetrie, beträgt und/oder wobei die Kristallinität des Füllsüßstoffgemischs von 20 % bis 30 %, wie gemessen durch Differenzscanningkalorimetrie, beträgt.

**12.** Zusammensetzung gemäß einem der Ansprüche 10-11, wobei das Füllsüßstoffgemisch ferner ein Maltit/Isomalt-Gewichtsverhältnis von zwischen 0,01 und 1,5 aufweist.

**13.** Verfahren zur Herstellung eines Kaugummiprodukts, wobei das Verfahren umfasst:

a) Herstellen eines Kaugummigemischs, das 10 bis 35 Gew.-% an wenigstens einer Gummigrundmasse und 50 bis 80 Gew.-% an einem Füllsüßstoffgemisch umfassend wenigstens ein Polyol umfasst, wobei das Füllsüßstoffgemisch Xylit, Sorbit und wenigstens eines von Isomalt und Maltit umfasst;
b) Exponieren des Kaugummigemischs gegenüber wenigstens einer ersten Temperatur, wobei die erste Temperatur eine Temperatur ist, bei der das Kaugummigemisch zu einem gießbaren Fluid wird, bei einer ersten Scherrate, um ein geschmolzenes Kaugummigemisch zu bilden, das wenigstens eine geschmolzene Gummigrundmasse und wenigstens ein geschmolzenes Polyol umfasst, und wobei das Viskositätsverhältnis (p) 1000 oder darunter beträgt, wobei das Viskositätsverhältnis (p) die komplexe Viskosität von wenigstens einer geschmolzenen Grundmasse geteilt durch die komplexe Viskosität des wenigstens einen geschmolzenen Polyols ist; und
c) Aufbringen des geschmolzenen Kaugummigemischs auf eine Oberfläche, um das Kaugummiprodukt zu bilden.

**14.** Verfahren gemäß Anspruch 13, wobei die erste Temperatur zwischen 80 und 125 °C beträgt oder wobei die erste Temperatur zwischen 125 und 160 °C beträgt.

**15.** Verfahren gemäß einem der Ansprüche 13-14, wobei das Kaugummigemisch ein Polyol oder ein Polyolgemisch mit einem gewichtsgemittelten Molekulargewicht von 150 bis 350 g/mol umfasst.

## Revendications

**1.** Composition de chewing-gum comprenant 10 à 35 % en poids d'une base de gomme et 50 à 80 % en poids d'un mélange d'édulcorants en vrac, le mélange d'édulcorants en vrac comprenant au moins un polyol, et la composition de chewing-gum étant formée à partir d'une composition de gomme fondue comprenant au moins une base de gomme fondue et au moins un polyol fondu,
l'au moins un polyol comprenant du xylitol, du sorbitol, et au moins l'un parmi l'isomalt et le maltitol, et
une morphologie de la composition de chewing-gum comprenant au moins une phase amorphe continue lorsqu'elle est testée par microscopie électronique à balayage à une résolution de 100 microns.

**2.** Composition selon la revendication 1, la base de gomme comprenant un copolymère de butadiène-styrène, un polyisobutylène, un copolymère d'isobutylène-isoprène, ou une combinaison correspondante.

**3.** Composition selon l'une quelconque des revendications précédentes, la composition étant une composition de chewing-gum souple,
le mélange d'édulcorants en vrac comprenant :

i) 12 à 57 % en poids de xylitol,
ii) 10 à 70 % en poids de sorbitol, et
iii) 5 à 61 % en poids d'isomalt ou de maltitol ou de mélanges correspondants.

**4.** Composition selon l'une quelconque des revendications précédentes, la composition étant une composition de chewing-gum souple, le mélange d'édulcorants en vrac possédant les propriétés de :

i) une température de transition vitreuse inférieure à 0 °C telle que déterminée par calorimétrie différentielle à balayage ; et
ii) une cristallinité inférieure à 25 % telle que mesurée par calorimétrie différentielle à balayage.

**5.** Composition selon l'une quelconque des revendications précédentes, le mélange d'édulcorants en vrac étant amorphe.

**6.** Composition selon l'une quelconque des revendications précédentes, comprenant en outre entre 0,1 % et 1 % en poids d'un plastifiant, sur la base du poids total de la composition, le plastifiant possédant un coefficient de partition d'au moins 2 et un poids moléculaire inférieur à 1 000 g/mole.

**7.** Composition selon l'une quelconque des revendications 1 à 3, la composition possédant une texture intermédiaire et une faible friabilité,
le mélange d'édulcorants en vrac comprenant :

i) 29 à 72 % en poids de xylitol,
ii) 11 à 34 % en poids de sorbitol, et
iii) 5 à 49 % en poids d'isomalt ou de maltitol ou de mélanges correspondants.

**8.** Composition selon la revendication 7, le mélange d'édulcorants en vrac possédant une cristallinité allant de 40 à 50 % telle que mesurée par calorimétrie différentielle à balayage, et/ou le mélange d'édulcorants en vrac comprenant moins de 65 % en poids d'isomalt ou de maltitol, au moins 15 % en poids de xylitol, et moins de 65 % en poids de sorbitol, tous sur la base du poids total du mélange d'édulcorants en vrac, un rapport en poids entre la teneur la plus élevée en polyol et la teneur la plus basse en polyol étant supérieur à 1,5.

**9.** Composition selon l'une quelconque des revendications 1 à 3, la composition possédant une texture croquante, et le mélange d'édulcorants en vrac comprenant :

i) moins de 10 % en poids de xylitol,
ii) moins de 15 % en poids de sorbitol, et
iii) au moins 85 % en poids d'isomalt ou de maltitol ou de mélanges correspondants,
par poids du mélange d'édulcorants en vrac.

**10.** Composition selon la revendication 9, une morphologie du produit de chewing-gum croquant comprenant une pluralité de globules et éventuellement la pluralité de globules comprenant une base de gomme lorsqu'elle est testée par microscopie électronique à balayage à une résolution de 100 microns.

**11.** Composition selon la revendication 10, la température de transition vitreuse du mélange d'édulcorants en vrac étant de 20,1 à 40 °C telle que déterminée par calorimétrie différentielle à balayage, et/ou la cristallinité du mélange d'édulcorants en vrac étant de 20 % à 30 % telle que mesurée par calorimétrie différentielle à balayage.

**12.** Composition selon l'une quelconque des revendications 10 et 11, le mélange d'édulcorants en vrac comprenant en outre un rapport en poids de maltitol/isomalt compris entre 0,01 et 1,5.

**13.** Procédé pour la fabrication d'un produit de chewing-gum, le procédé comprenant :

a) la préparation d'un mélange pour chewing-gum comprenant 10 à 35 % en poids d'au moins une base de gomme et 50 à 80 % en poids d'un mélange d'édulcorants en vrac comprenant au moins un polyol, le mélange d'édulcorants en vrac comprenant du xylitol, du sorbitol et au moins l'un parmi l'isomalt et le maltitol ;
b) l'exposition du mélange pour chewing-gum à au moins une première température, la première température étant une température à laquelle le mélange pour chewing-gum devient un fluide pouvant être moulé, à une première vitesse de cisaillement, pour former un mélange pour chewing-gum fondu comprenant au moins une base de gomme fondue et au moins un polyol fondu, et le rapport de viscosité (p) étant de 1 000 ou moins, le rapport de viscosité (p) étant la viscosité complexe de l'au moins une base fondue divisée par la viscosité complexe de l'au moins un polyol fondu ; et
c) le dépôt du mélange pour chewing-gum fondu sur une surface pour former le produit de chewing-gum.

**14.** Procédé selon la revendication 13, la première température étant comprise entre 80 et 125 °C, ou la première température étant comprise entre 125 et 160 °C.

**15.** Procédé selon l'une quelconque des revendications 13 et 14, le mélange pour chewing-gum comprenant un polyol ou un mélange de polyols possédant un poids moléculaire moyen en poids de 150 à 350 g/mole.

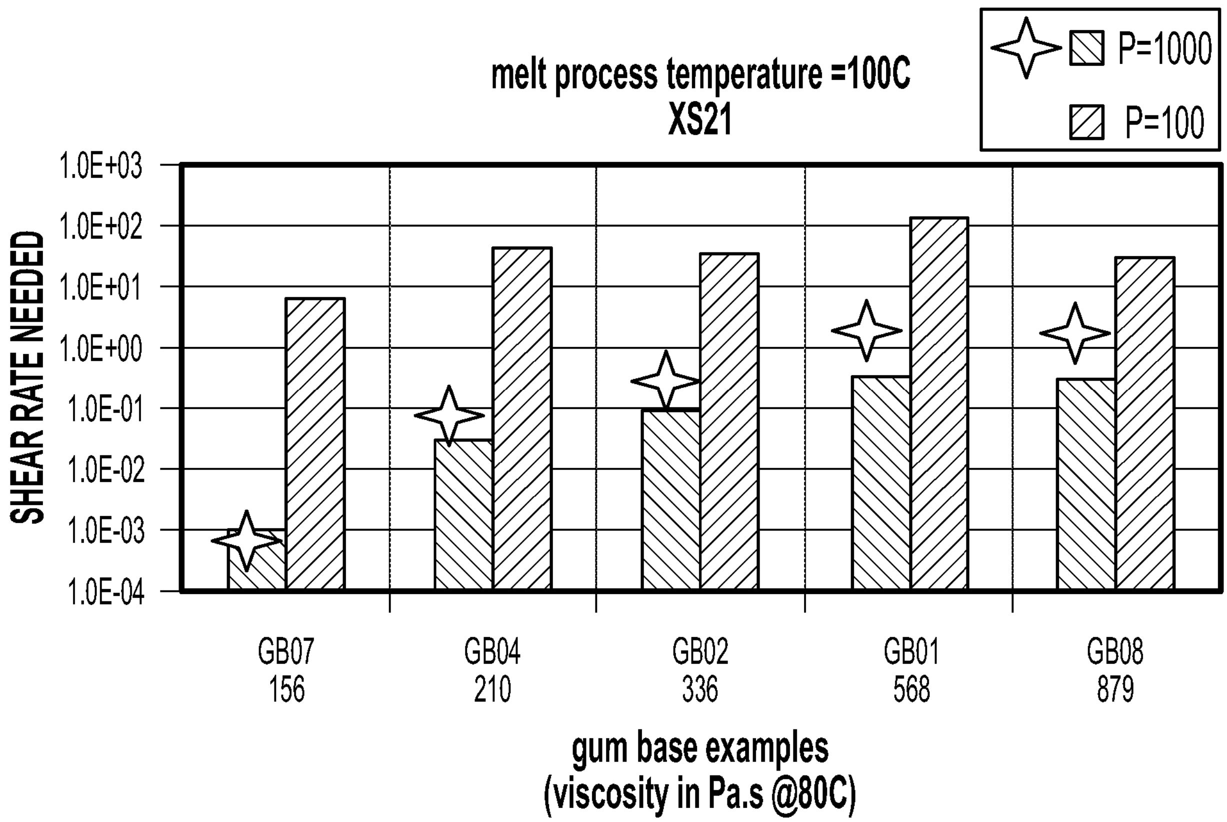
P=1000
P=100
melt process temperature =100C
XS21
1.0E+03
1.0E+02
1.0E+01
1.0E+00
1.0E-01
1.0E-02
1.0E-03
1.0E-04
SHEAR RATE NEEDED
GB07 156
GB04 210
GB02 336
GB01 568
GB08 879
gum base examples
(viscosity in Pa.s @80C)

FIG. 1

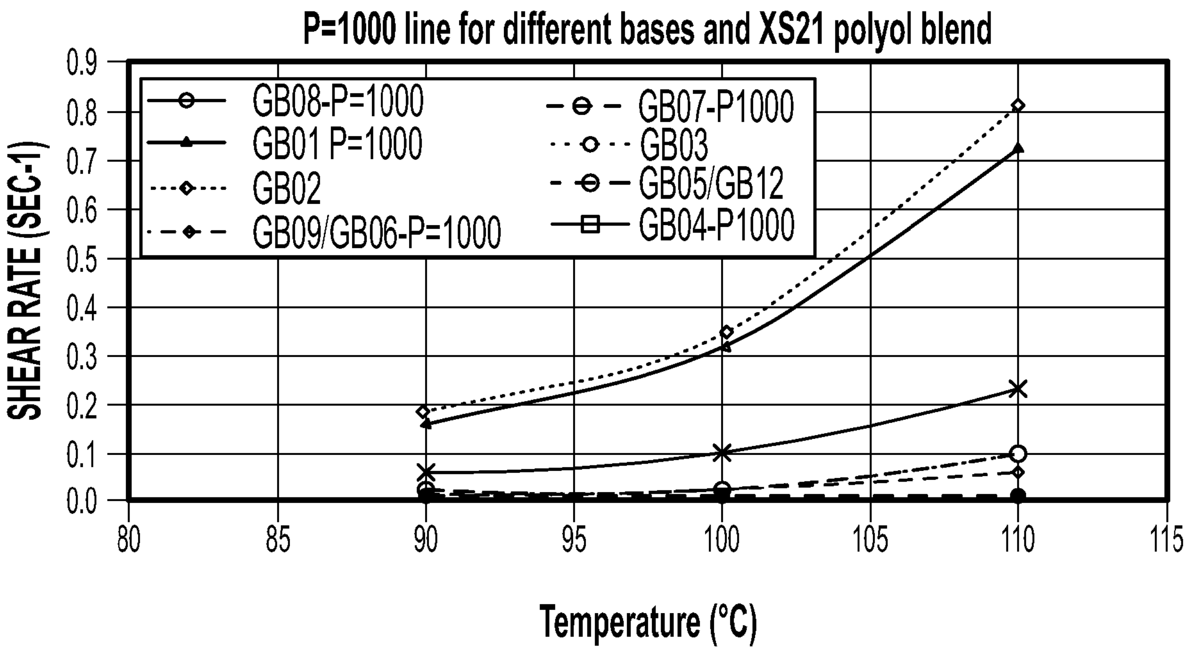
P=1000 line for different bases and XS21 polyol blend
GB08-P=1000
GB01 P=1000
GB02
GB09/GB06-P=1000
GB07-P1000
GB03
GB05/GB12
GB04-P1000
0.9
0.8
0.7
0.6
0.5
0.4
0.3
0.2
0.1
0.0
SHEAR RATE (SEC-1)
80
85
90
95
100
105
110
115
Temperature (°C)

FIG. 2

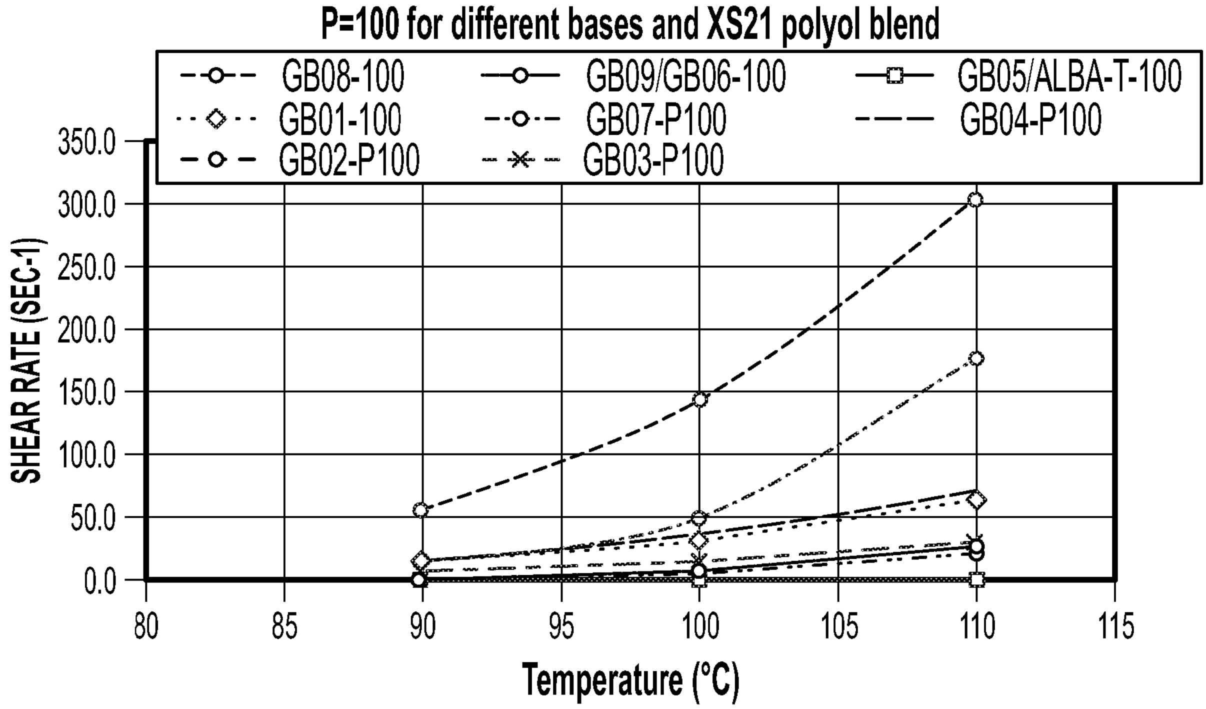

P=100 for different bases and XS21 polyol blend
GB08-100
GB09/GB06-100
GB05/ALBA-T-100
GB01-100
GB07-P100
GB04-P100
GB02-P100
GB03-P100
SHEAR RATE (SEC-1)
350.0
300.0
250.0
200.0
150.0
100.0
50.0
0.0
80
85
90
95
100
105
110
115
Temperature (°C)


**FIG. 3**

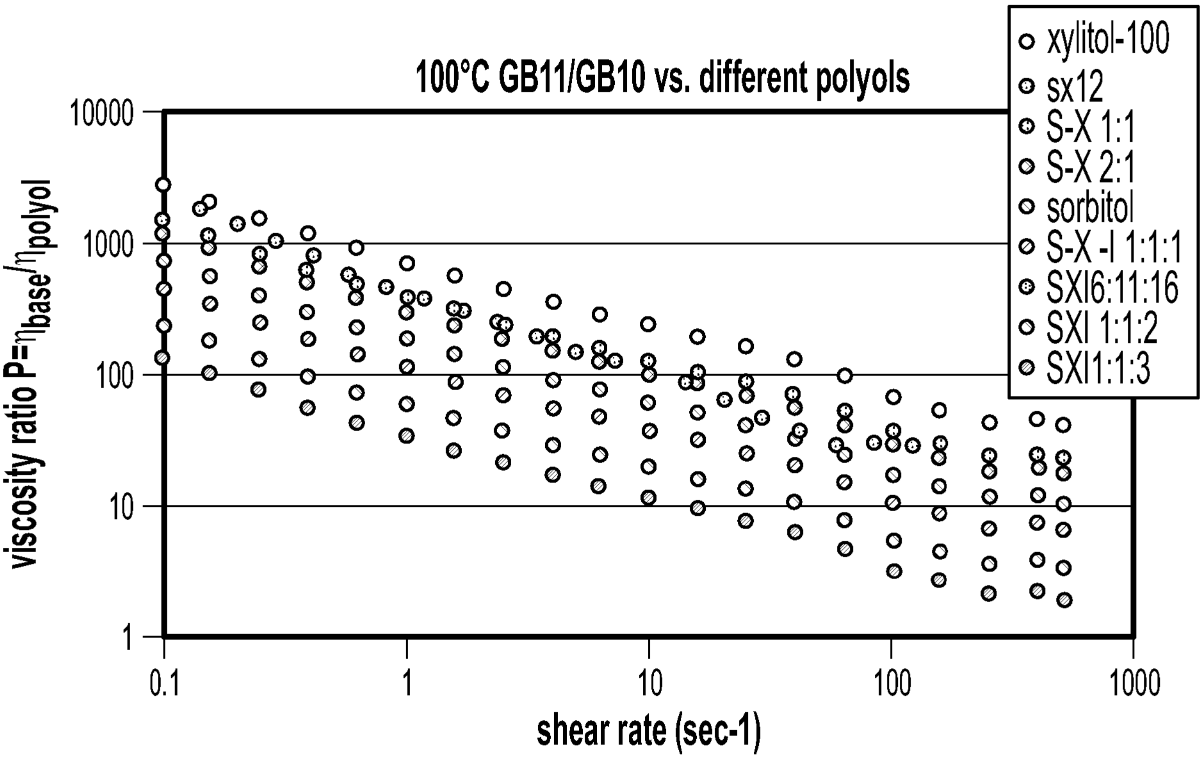

100°C GB11/GB10 vs. different polyols
xylitol-100
sx12
S-X 1:1
S-X 2:1
sorbitol
S-X -I 1:1:1
SXI6:11:16
SXI 1:1:2
SXI1:1:3
viscosity ratio P=ηbase/ηpolyol
10000
1000
100
10
1
0.1
1
10
100
1000
shear rate (sec-1)


**FIG. 4**

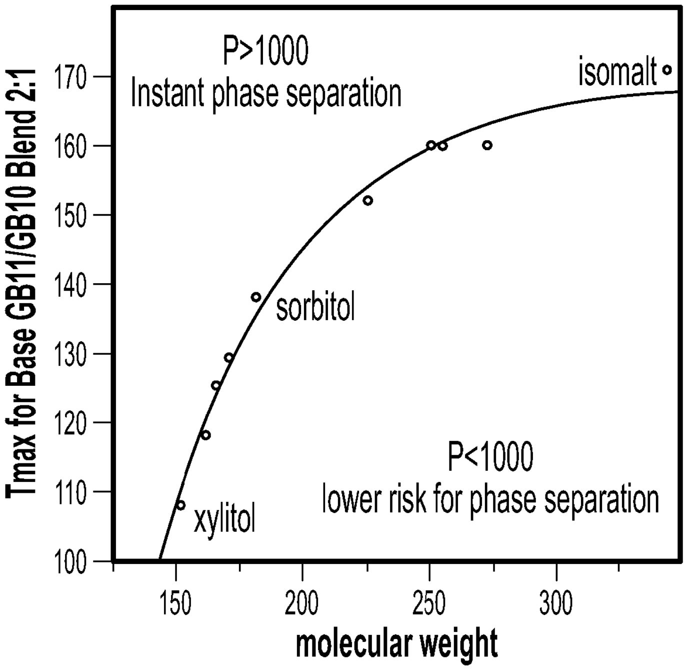
P>1000
Instant phase separation
isomalt
sorbitol
xylitol
P<1000
lower risk for phase separation
Tmax for Base GB11/GB10 Blend 2:1
100
110
120
130
140
150
160
170
150
200
250
300
molecular weight

FIG. 5

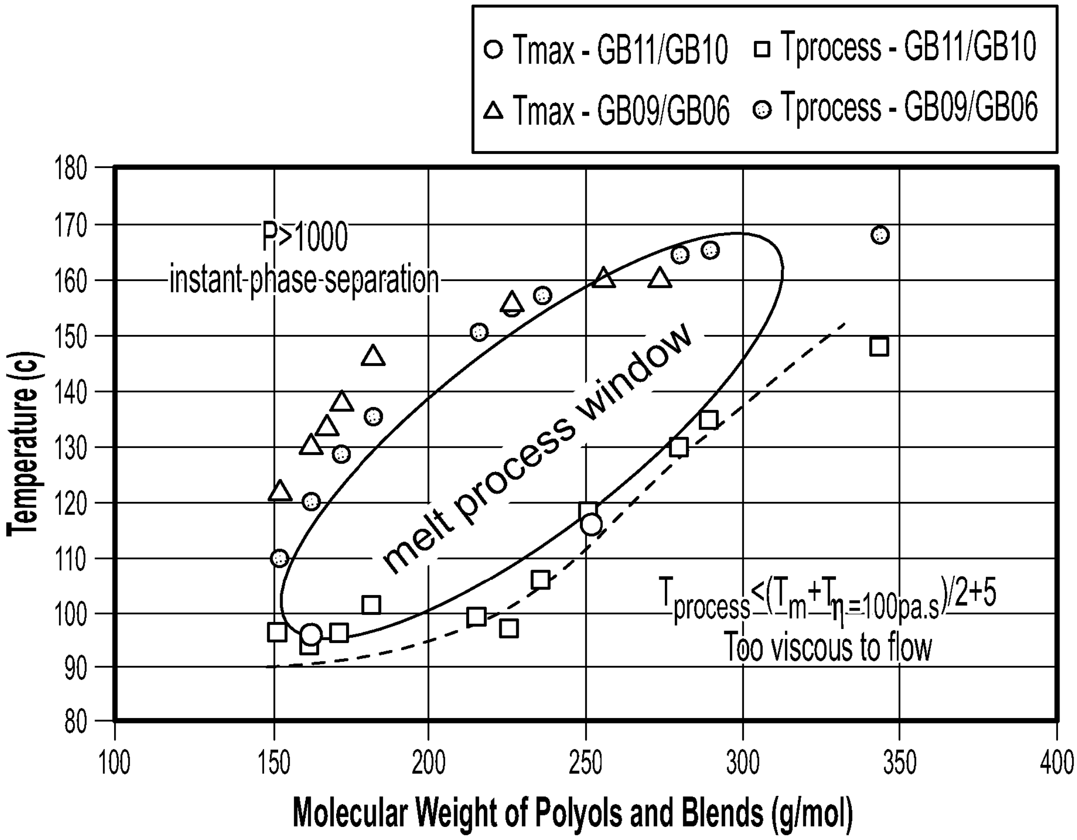
Tmax - GB11/GB10
Tprocess - GB11/GB10
Tmax - GB09/GB06
Tprocess - GB09/GB06
P>1000
instant phase separation
melt process window
Tprocess<(Tm+Tη=100pa.s)/2+5
Too viscous to flow
Temperature (c)
80
90
100
110
120
130
140
150
160
170
180
100
150
200
250
300
350
400
Molecular Weight of Polyols and Blends (g/mol)

FIG. 6

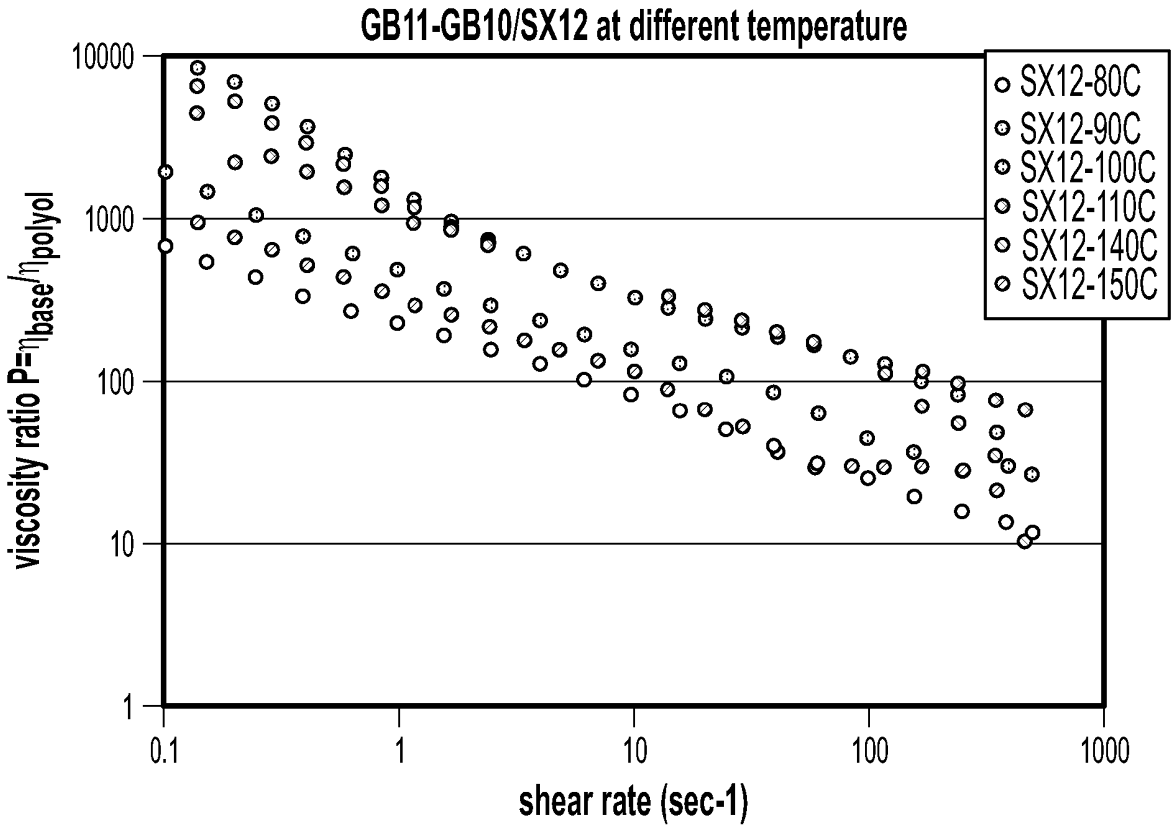
GB11-GB10/SX12 at different temperature
10000
1000
100
10
1
viscosity ratio P=ηbase/ηpolyol
0.1
1
10
100
1000
shear rate (sec-1)
SX12-80C
SX12-90C
SX12-100C
SX12-110C
SX12-140C
SX12-150C

FIG. 7

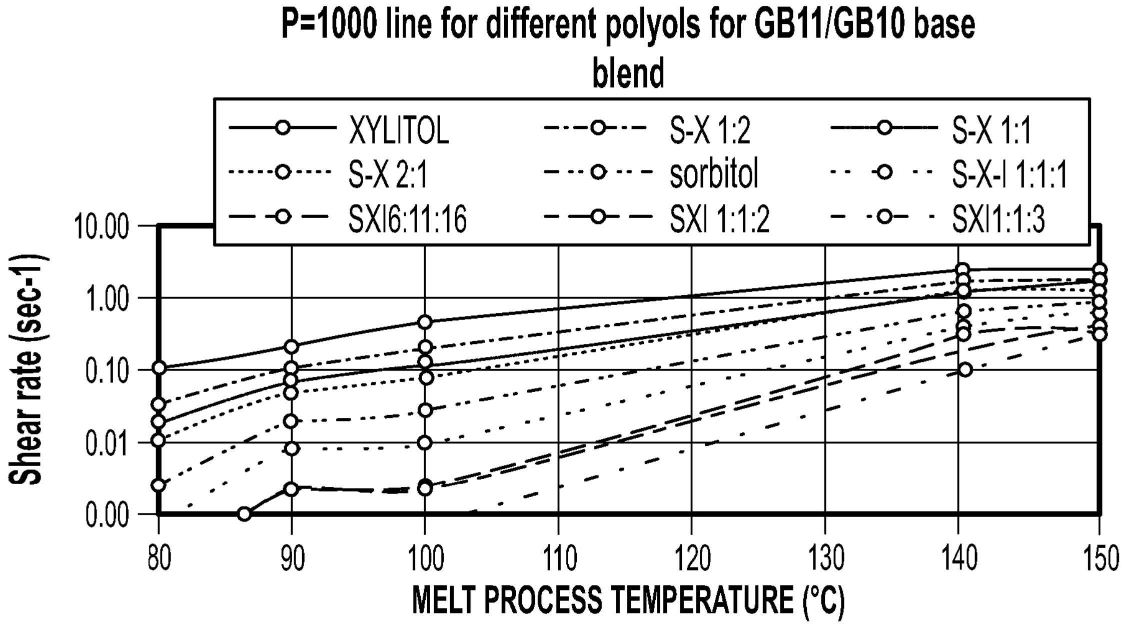
P=1000 line for different polyols for GB11/GB10 base blend
XYLITOL
S-X 1:2
S-X 1:1
S-X 2:1
sorbitol
S-X-I 1:1:1
SXI6:11:16
SXI 1:1:2
SXI1:1:3
10.00
1.00
0.10
0.01
0.00
Shear rate (sec-1)
80
90
100
110
120
130
140
150
MELT PROCESS TEMPERATURE (°C)

FIG. 8

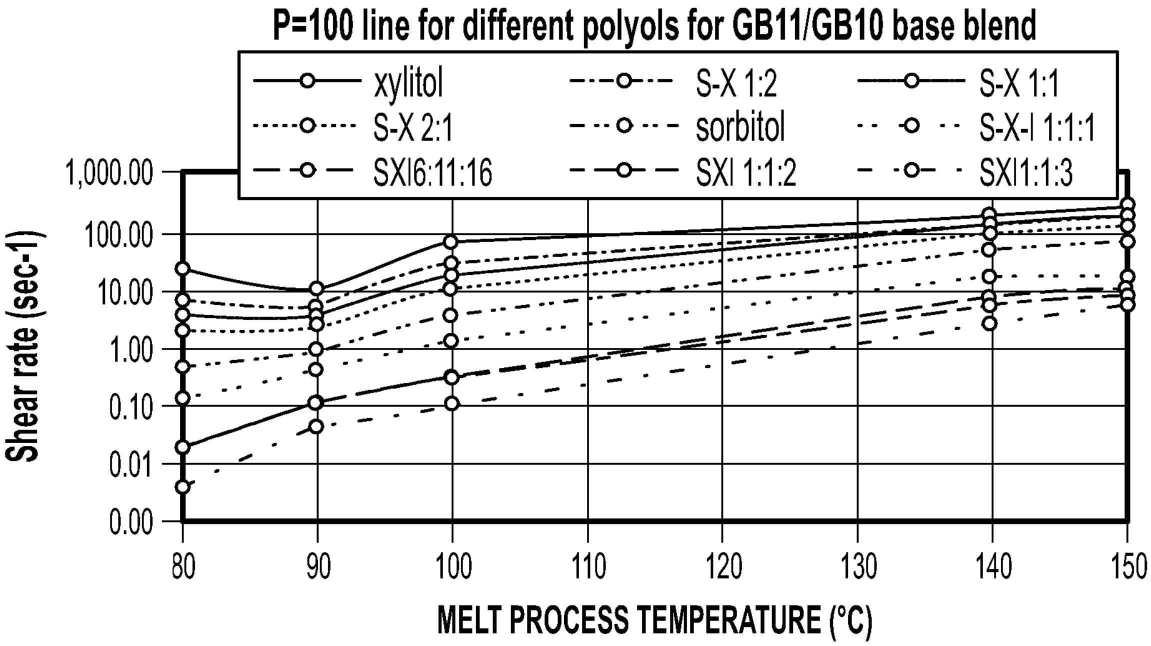
P=100 line for different polyols for GB11/GB10 base blend
xylitol
S-X 1:2
S-X 1:1
S-X 2:1
sorbitol
S-X-I 1:1:1
SXI6:11:16
SXI 1:1:2
SXI1:1:3
Shear rate (sec-1)
1,000.00
100.00
10.00
1.00
0.10
0.01
0.00
80
90
100
110
120
130
140
150
MELT PROCESS TEMPERATURE (°C)

FIG. 9

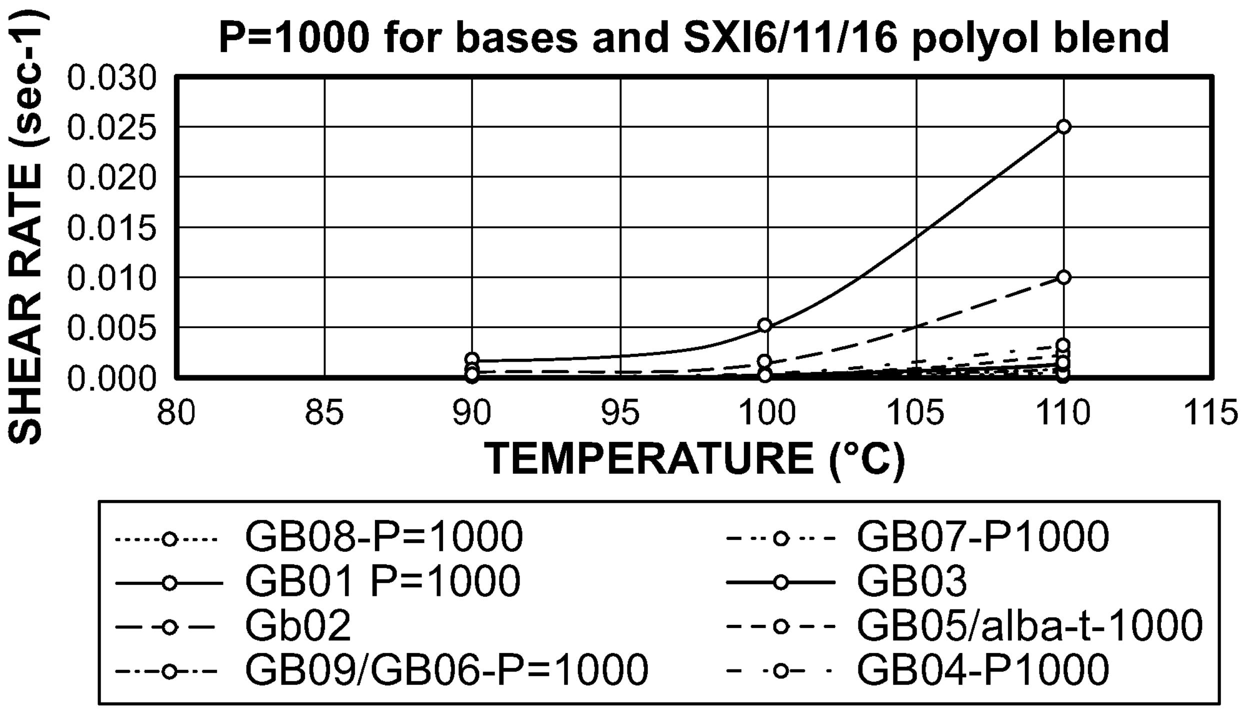
P=1000 for bases and SXI6/11/16 polyol blend
SHEAR RATE (sec-1)
0.030
0.025
0.020
0.015
0.010
0.005
0.000
80
85
90
95
100
105
110
115
TEMPERATURE (°C)
GB08-P=1000
GB07-P1000
GB01 P=1000
GB03
Gb02
GB05/alba-t-1000
GB09/GB06-P=1000
GB04-P1000

FIG. 10

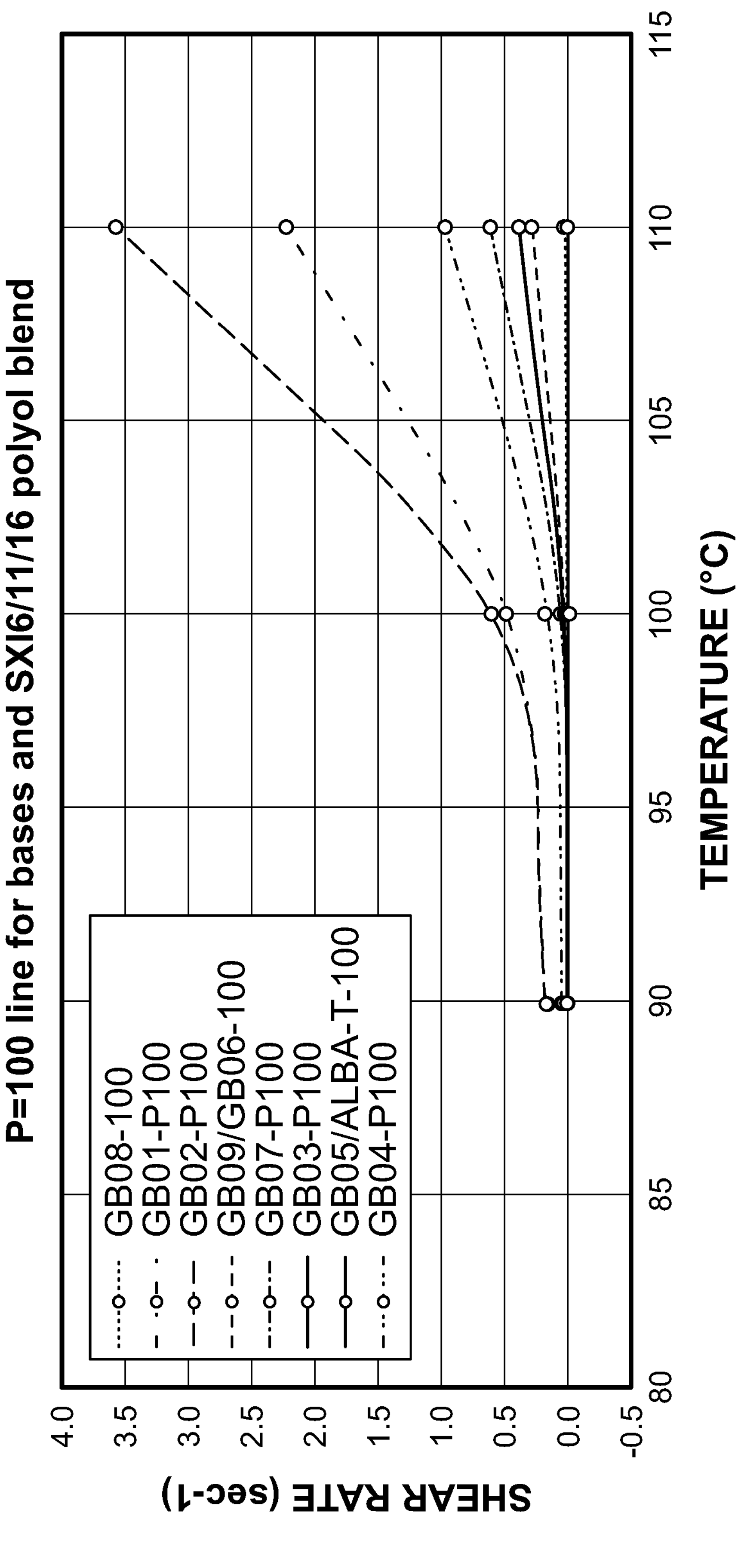
P=100 line for bases and SXI6/11/16 polyol blend
GB08-100
GB01-P100
GB02-P100
GB09/GB06-100
GB07-P100
GB03-P100
GB05/ALBA-T-100
GB04-P100
SHEAR RATE (sec-1)
4.0
3.5
3.0
2.5
2.0
1.5
1.0
0.5
0.0
-0.5
80
85
90
95
100
105
110
115
TEMPERATURE (°C)

FIG. 11

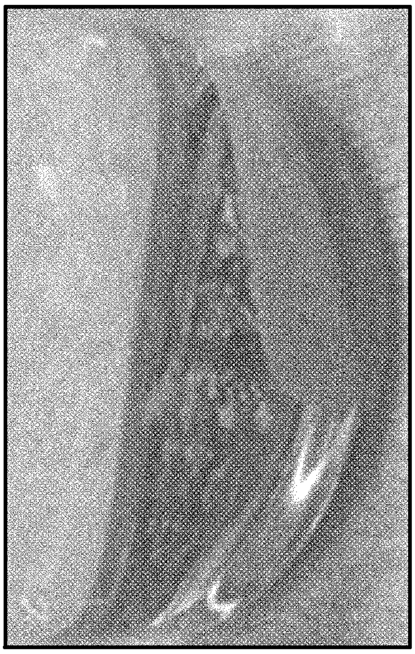
FIG. 12A

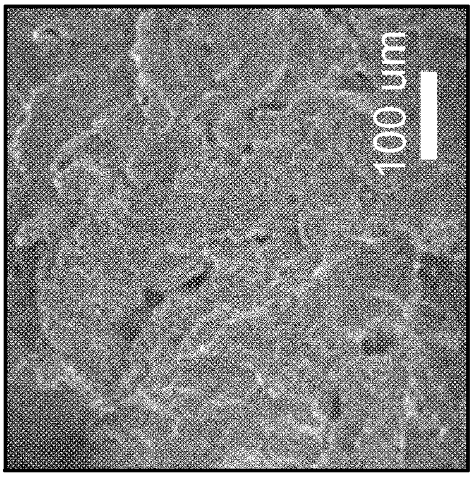

FIG. 12B

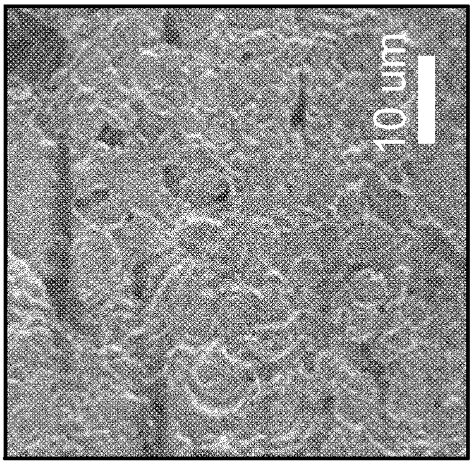

FIG. 12C

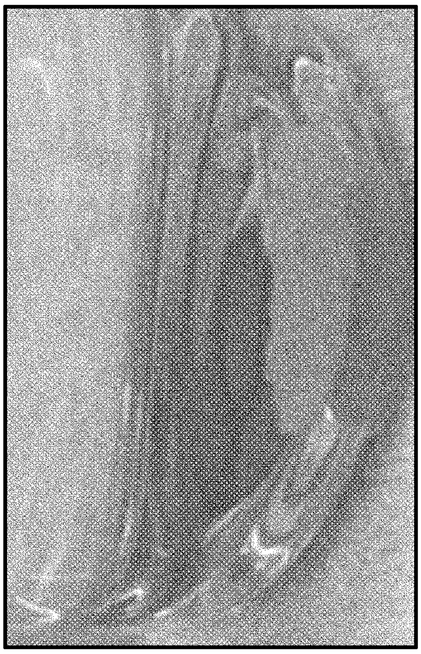
FIG. 12D

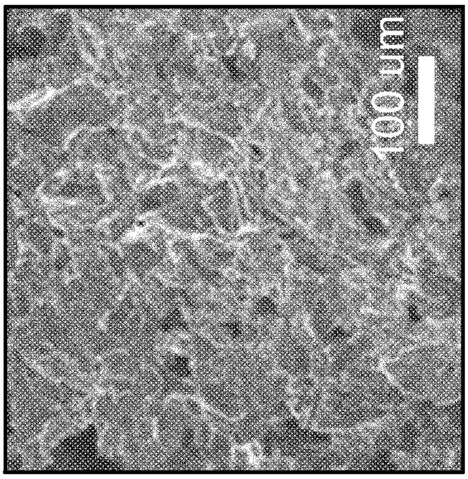

FIG. 12E

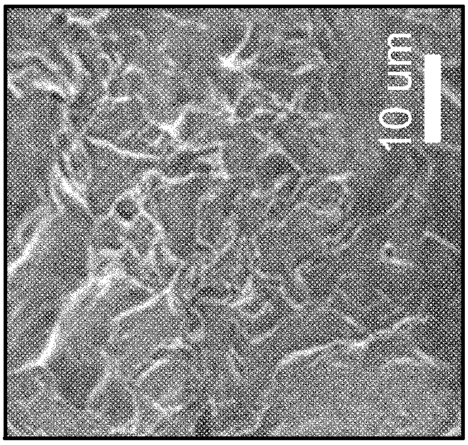

FIG. 12F

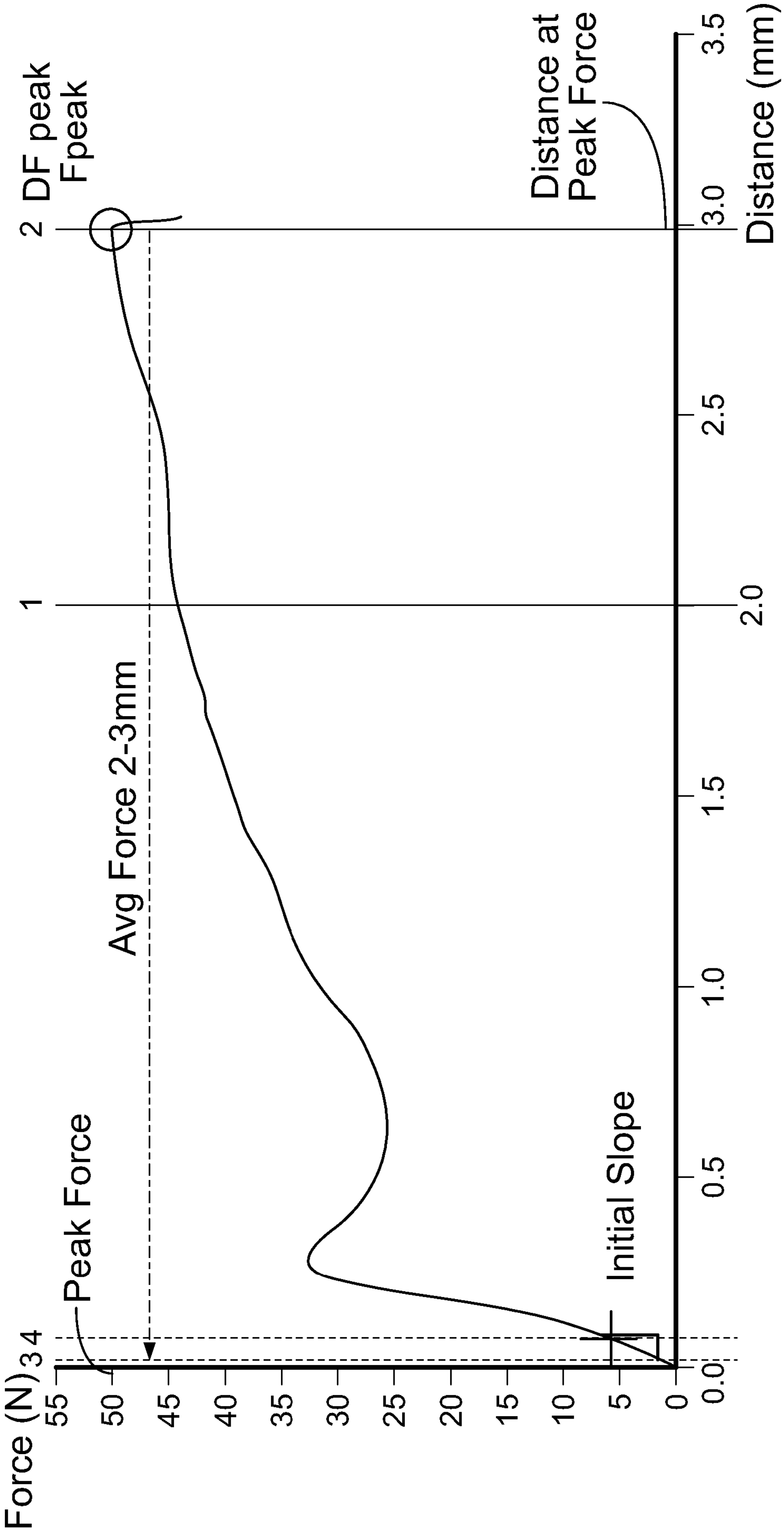
Force (N)
55
50
45
40
35
30
25
20
15
10
5
0
0.0
0.5
1.0
1.5
2.0
2.5
3.0
3.5
Distance (mm)
Peak Force
Avg Force 2-3mm
Initial Slope
DF peak
Fpeak
Distance at
Peak Force
1
2
3
4

FIG. 13

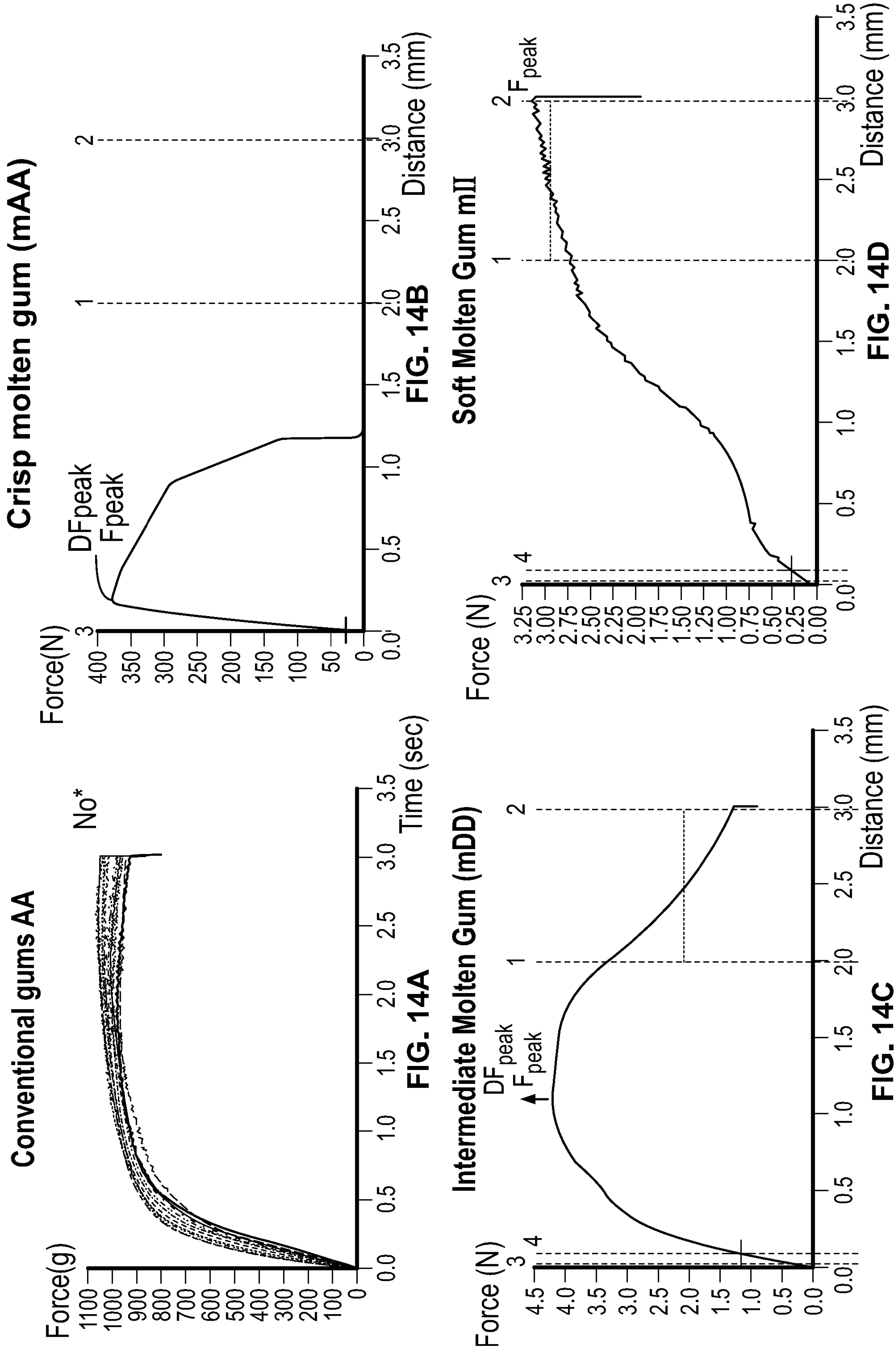


FIG. 14A

FIG. 14B

FIG. 14C

FIG. 14D

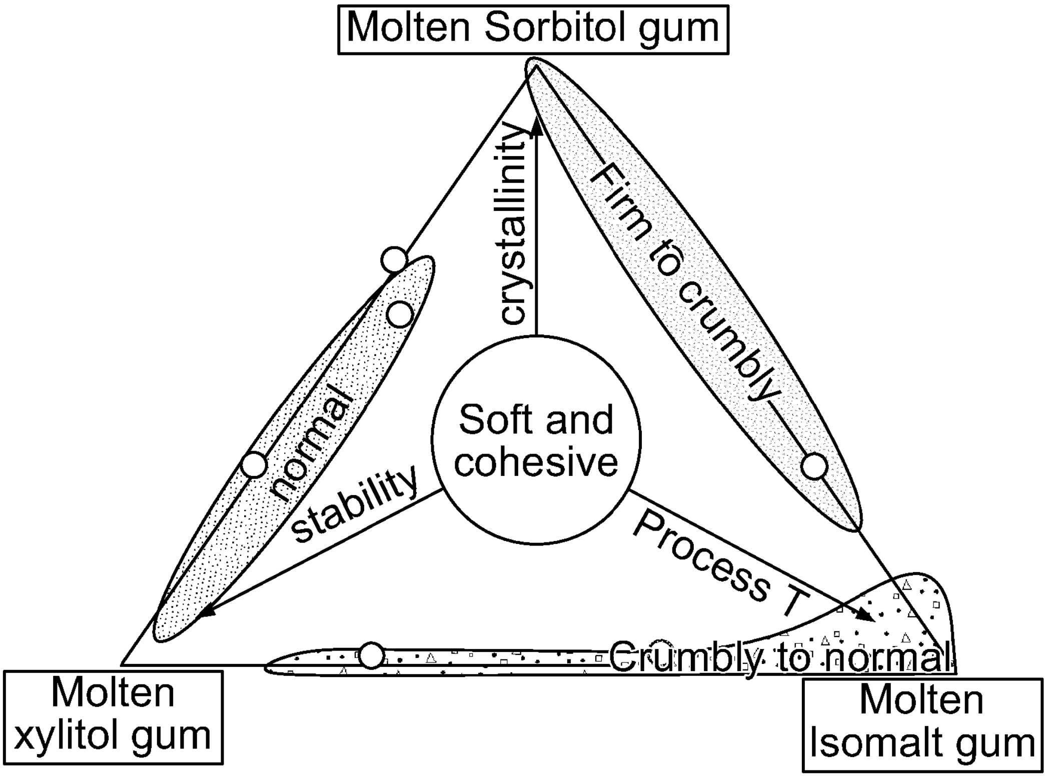


FIG. 15

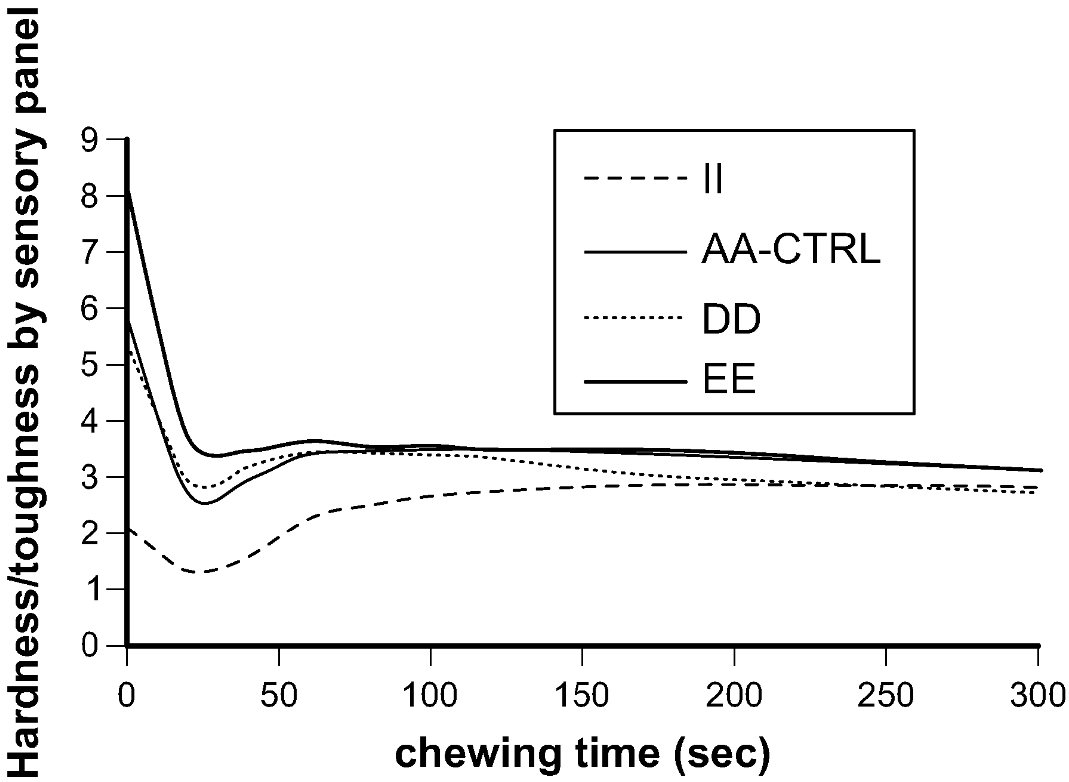


FIG. 16A

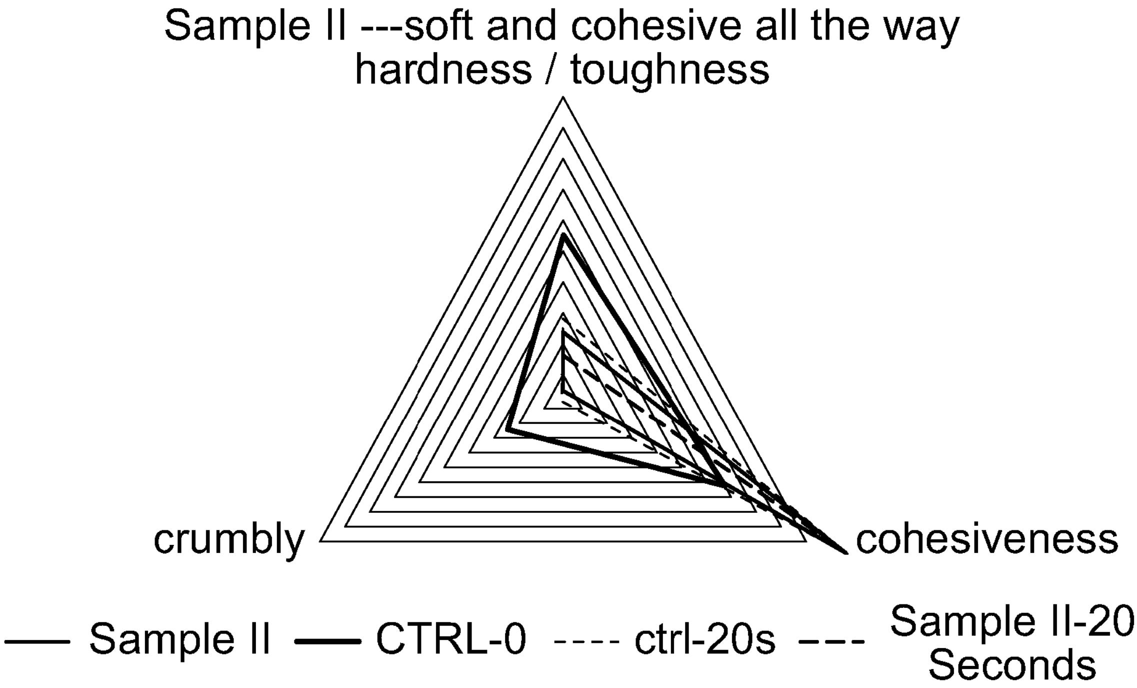


FIG. 16B

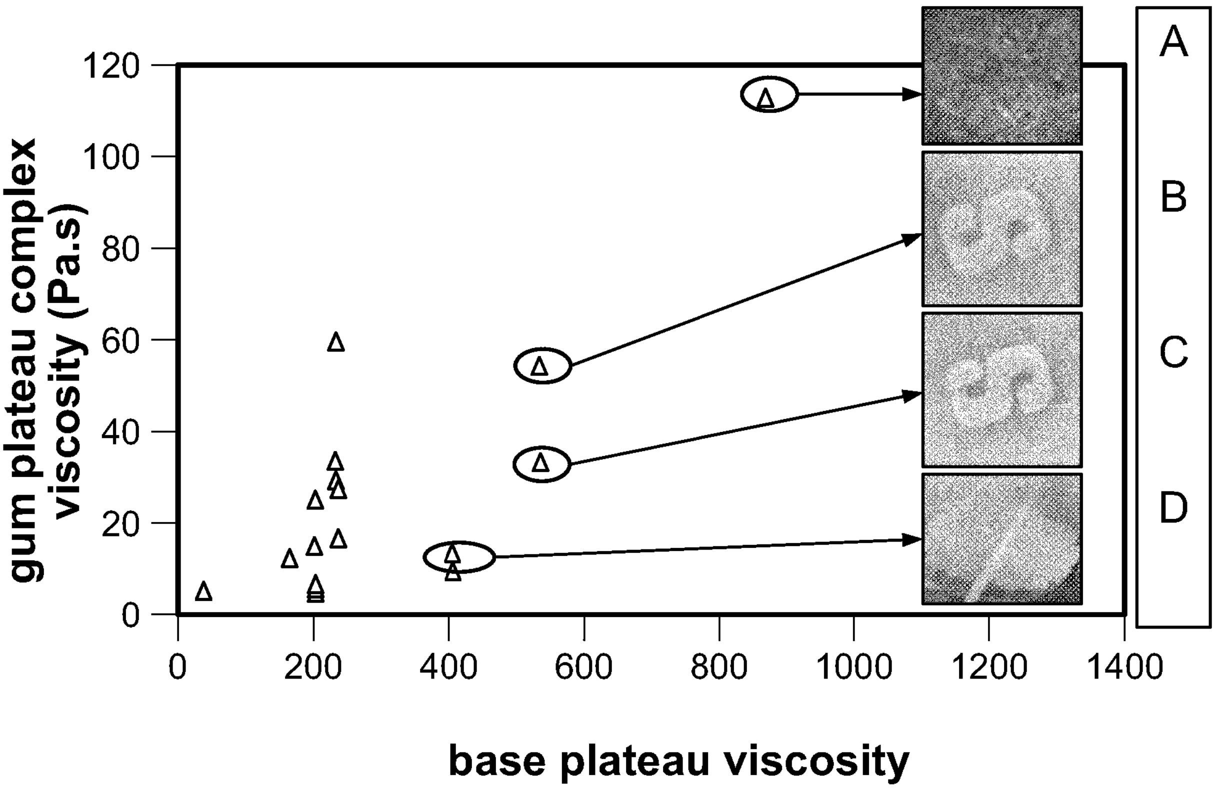


FIG. 17

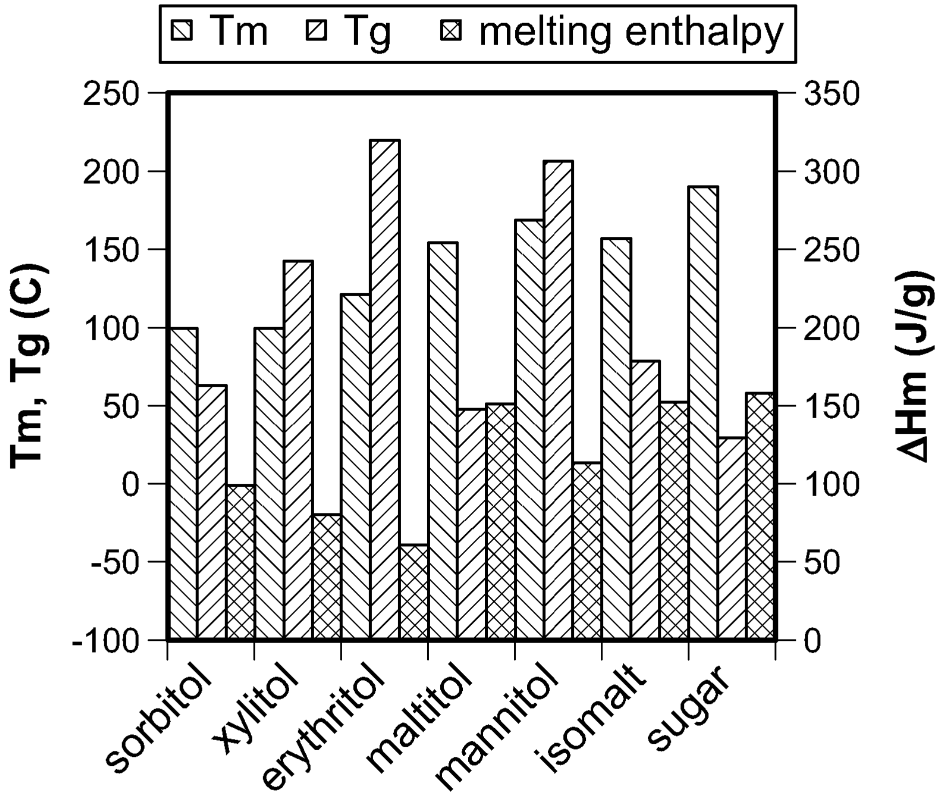
Tm
Tg
melting enthalpy
Tm, Tg (C)
ΔHm (J/g)
250
200
150
100
50
0
-50
-100
350
300
250
200
150
100
50
0
sorbitol
xylitol
erythritol
maltitol
mannitol
isomalt
sugar

FIG. 18

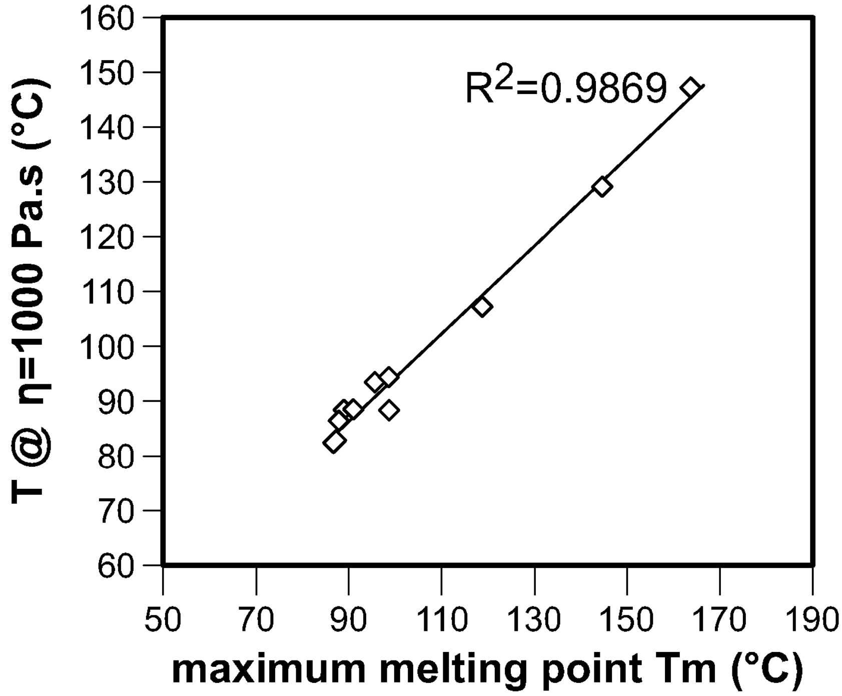
R2=0.9869
T @ η=1000 Pa.s (°C)
160
150
140
130
120
110
100
90
80
70
60
50
70
90
110
130
150
170
190
maximum melting point Tm (°C)

FIG. 19

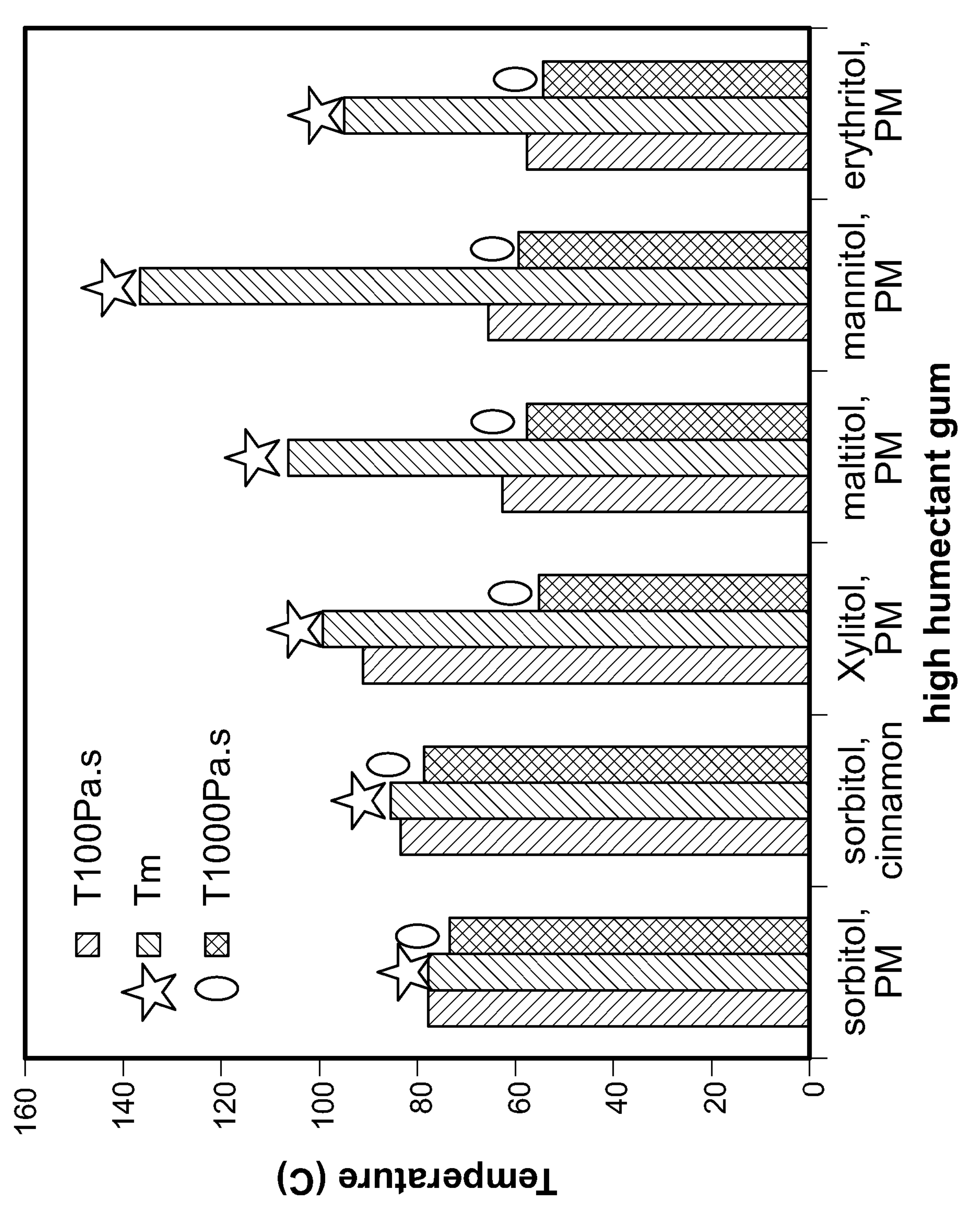
Temperature (C)
0
20
40
60
80
100
120
140
160
T100Pa.s
Tm
T1000Pa.s
sorbitol, PM
sorbitol, cinnamon
Xylitol, PM
maltitol, PM
mannitol, PM
erythritol, PM
high humectant gum

FIG. 20

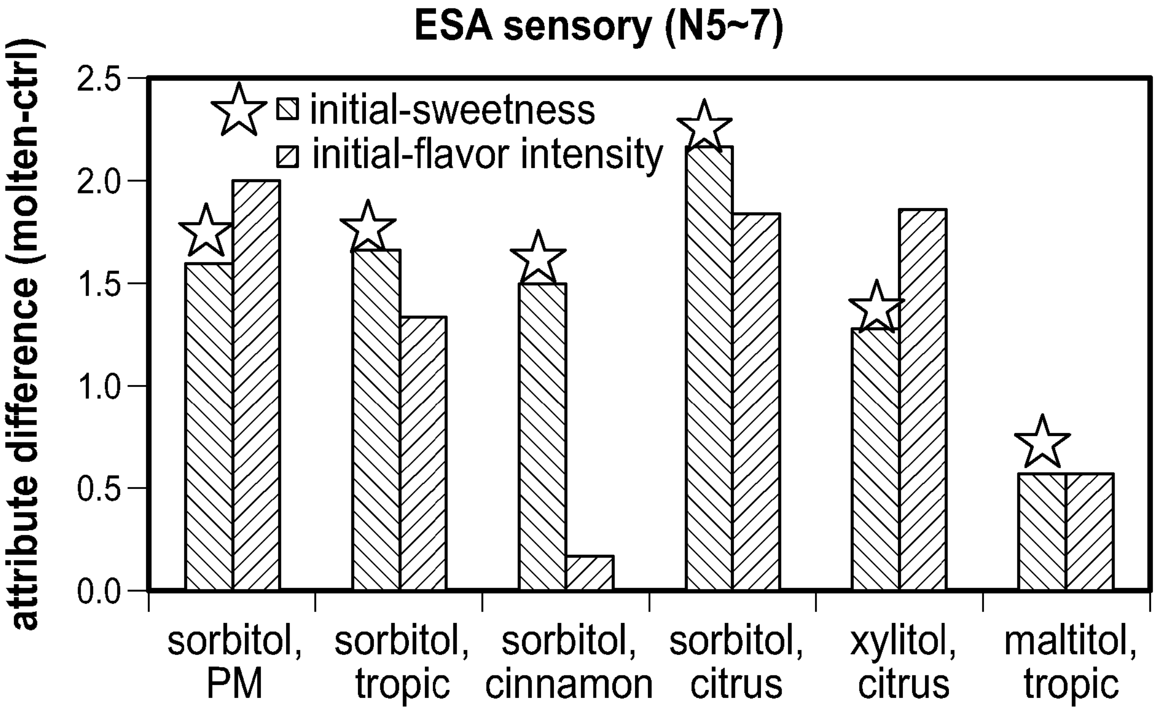


FIG. 21A

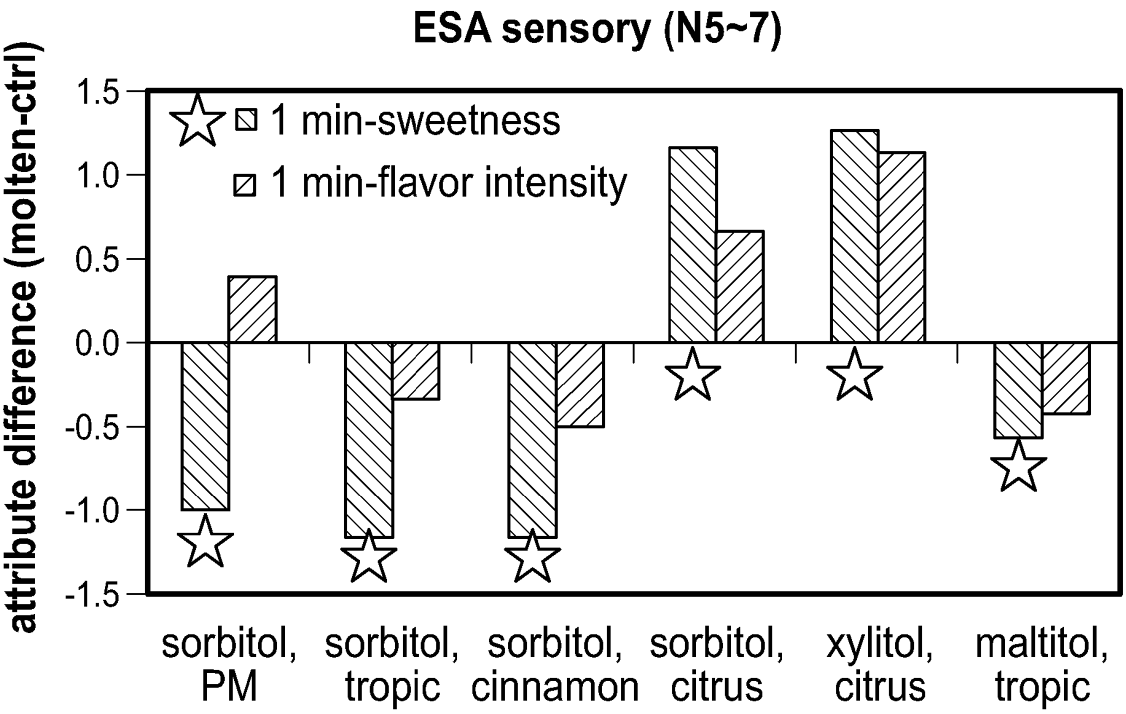


FIG. 21B

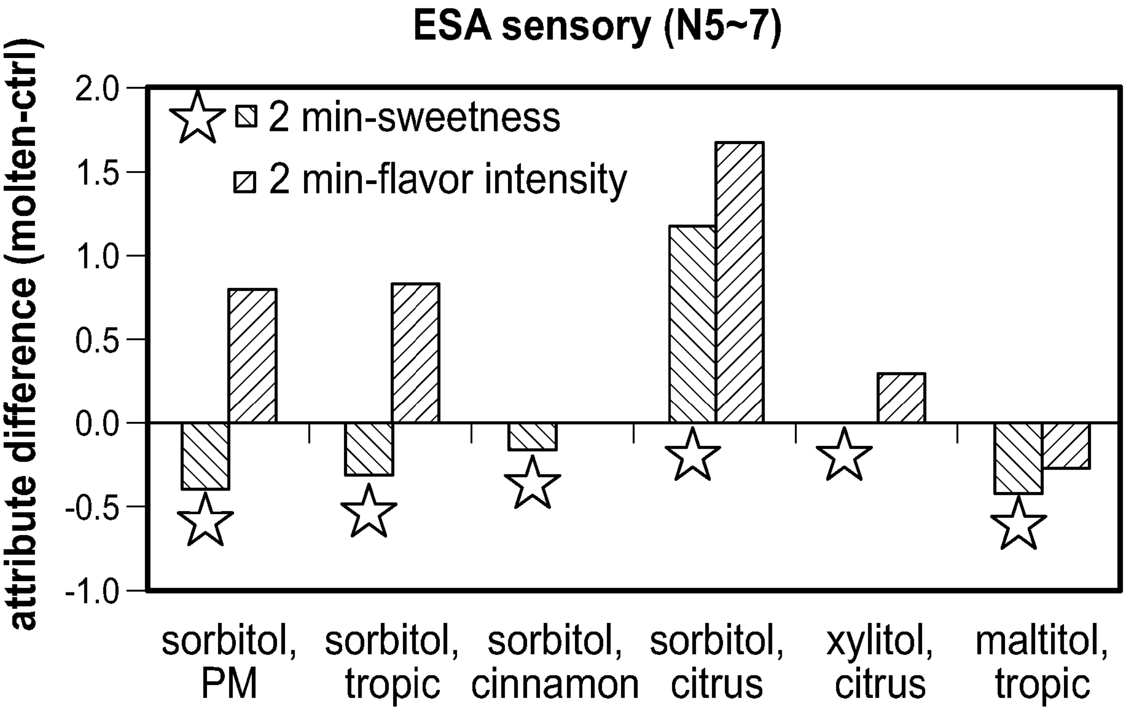


FIG. 22A

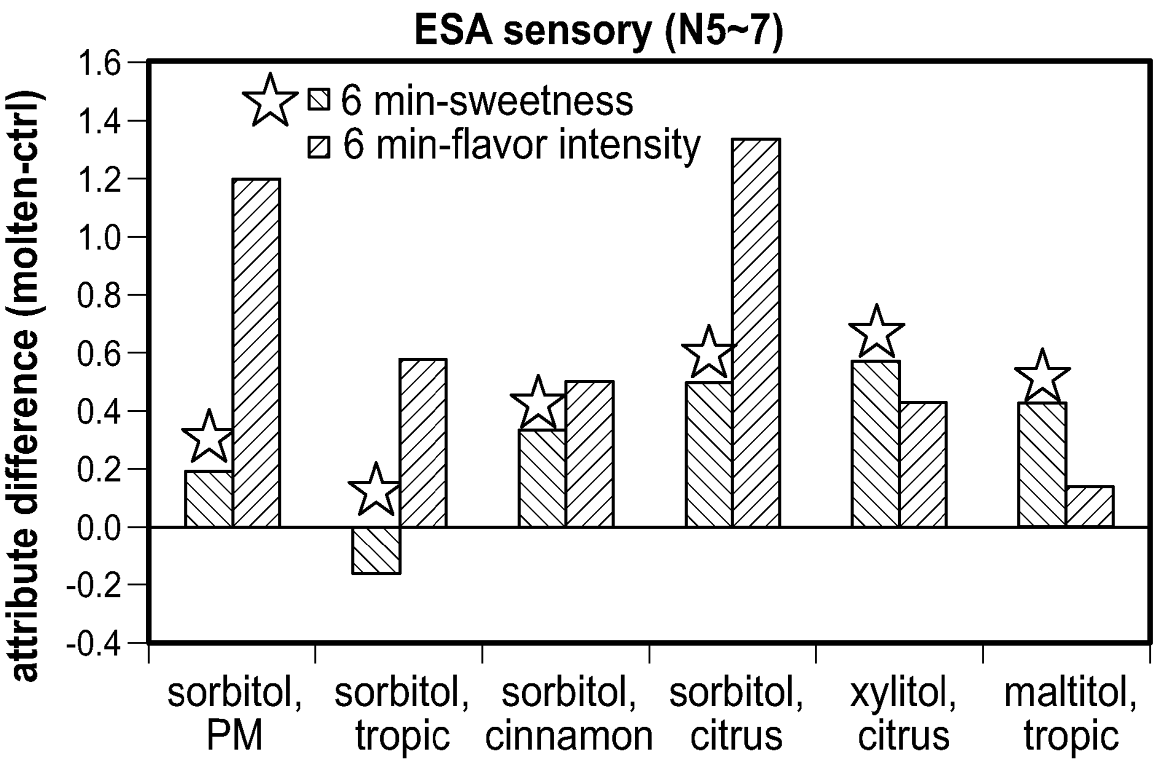


FIG. 22B

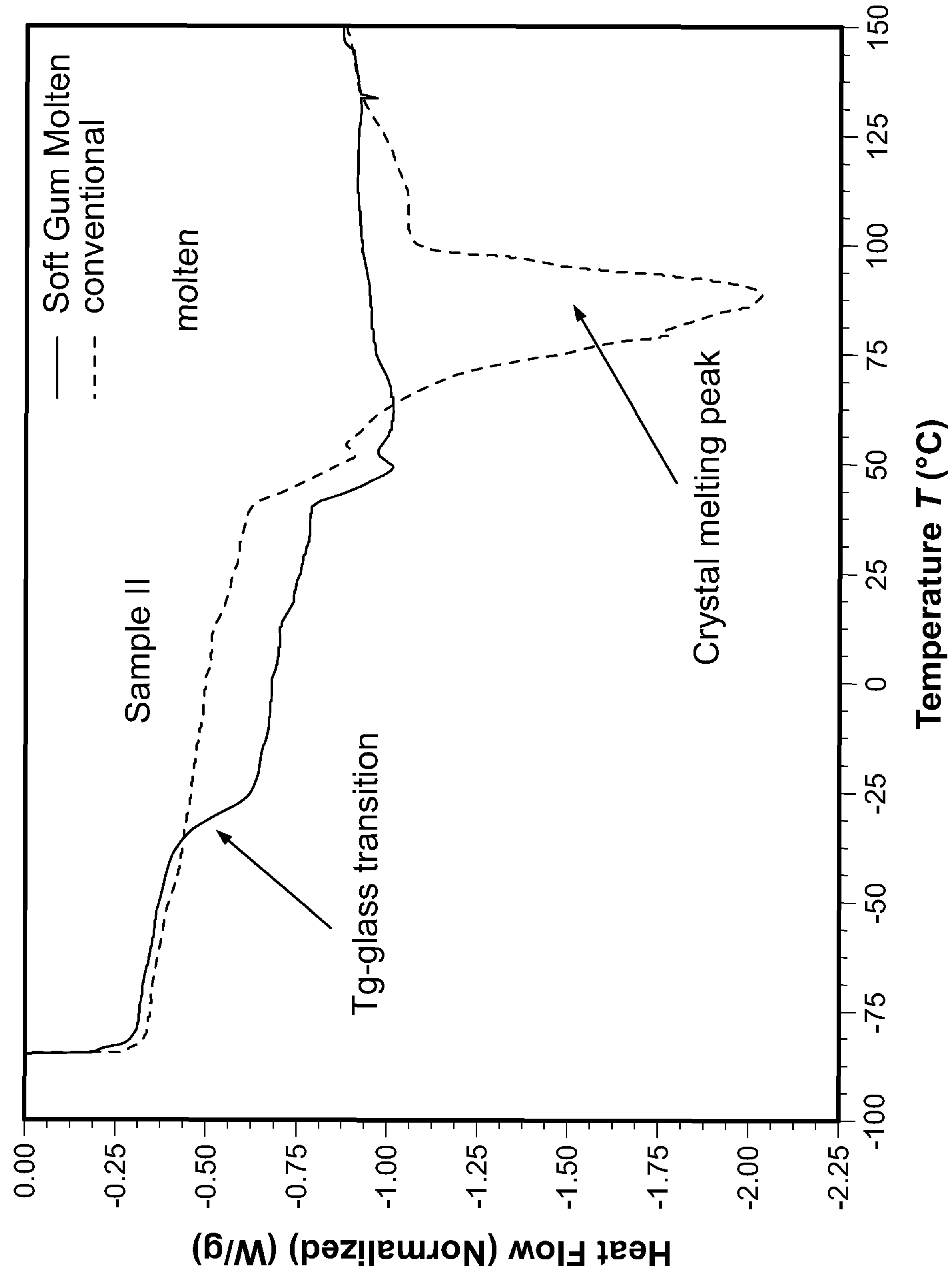
Soft Gum Molten
conventional
molten
Sample II
Tg-glass transition
Crystal melting peak
Heat Flow (Normalized) (W/g)
0.00
-0.25
-0.50
-0.75
-1.00
-1.25
-1.50
-1.75
-2.00
-2.25
Temperature *T* (°C)
-100
-75
-50
-25
0
25
50
75
100
125
150

FIG. 23

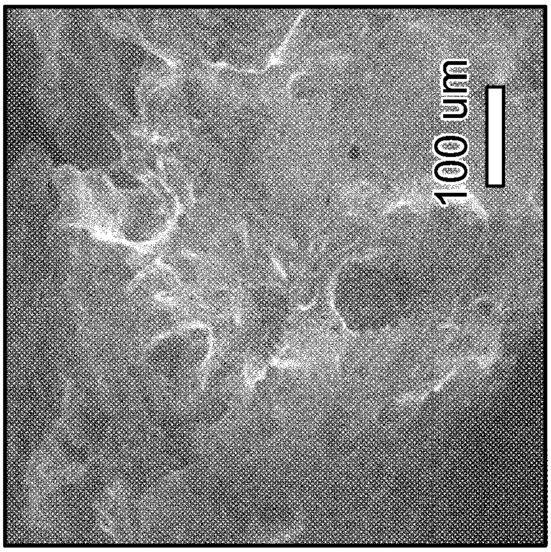

FIG. 24A

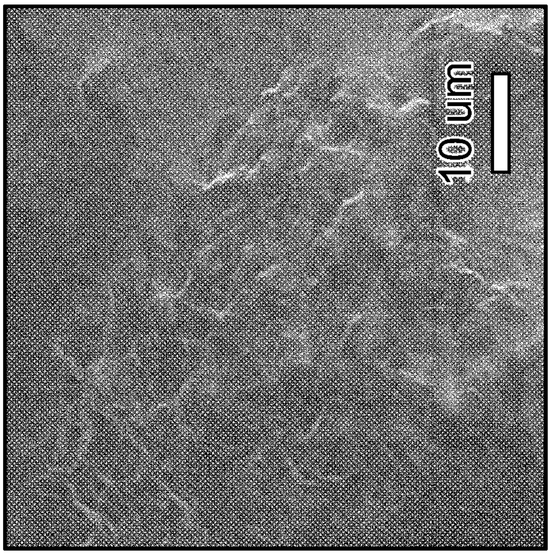

FIG. 24B

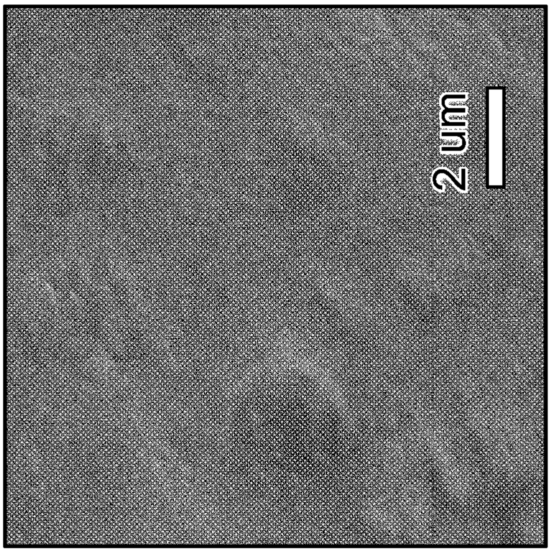

FIG. 24C

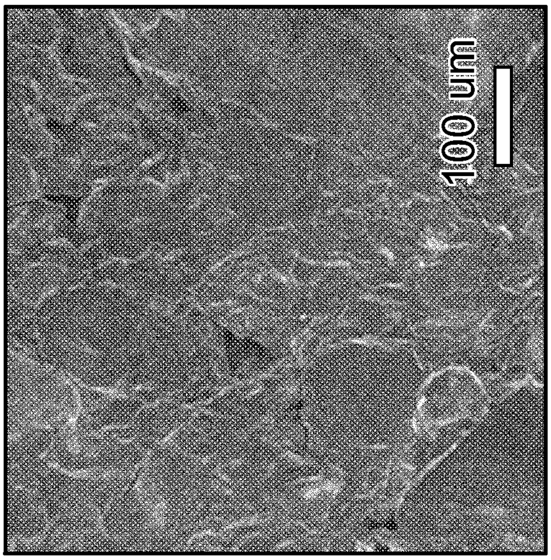

FIG. 24D

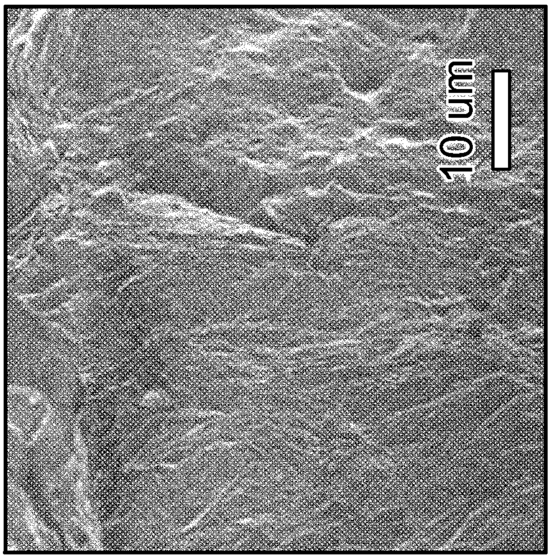

FIG. 24E

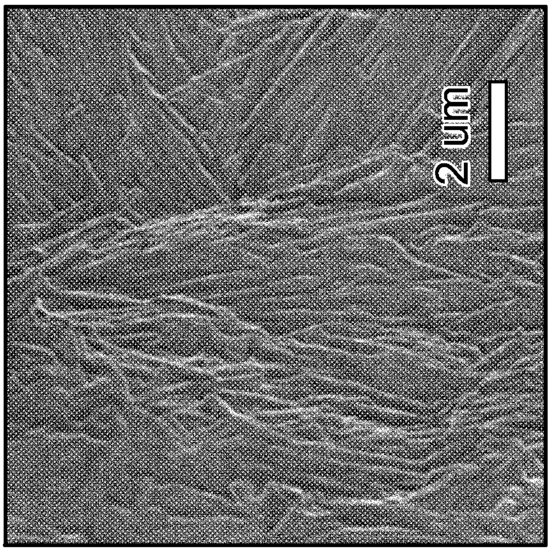

FIG. 24F

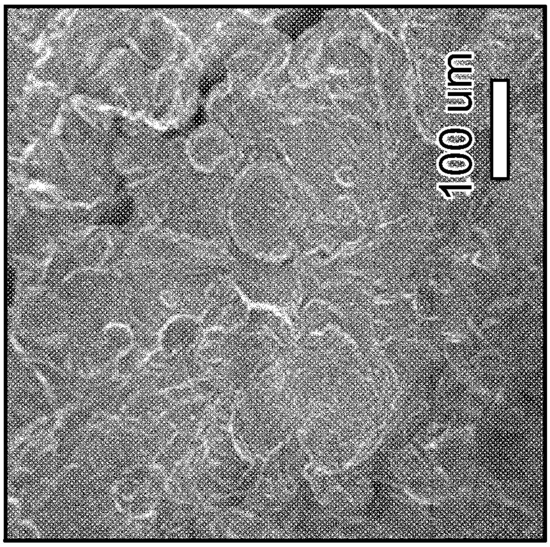

FIG. 25A

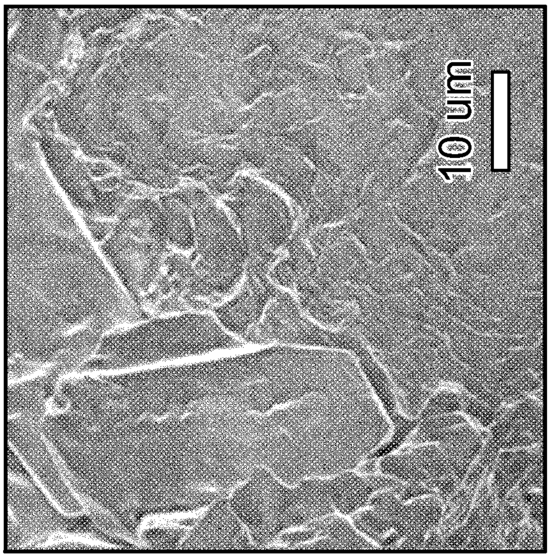

FIG. 25B

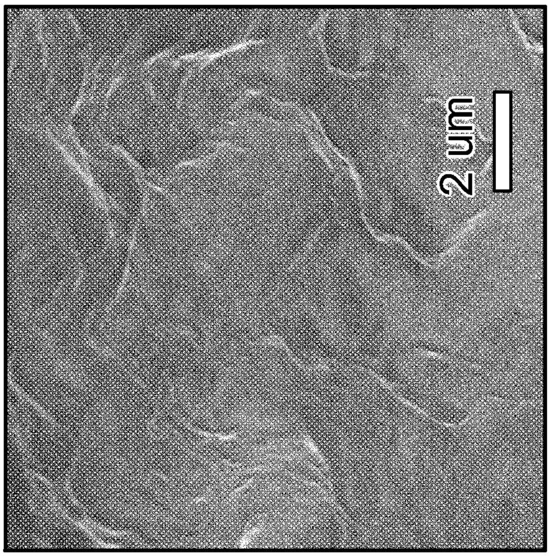

FIG. 25C

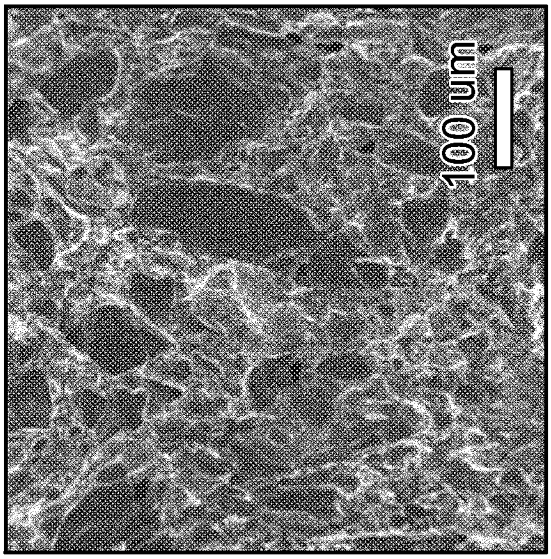

FIG. 25D

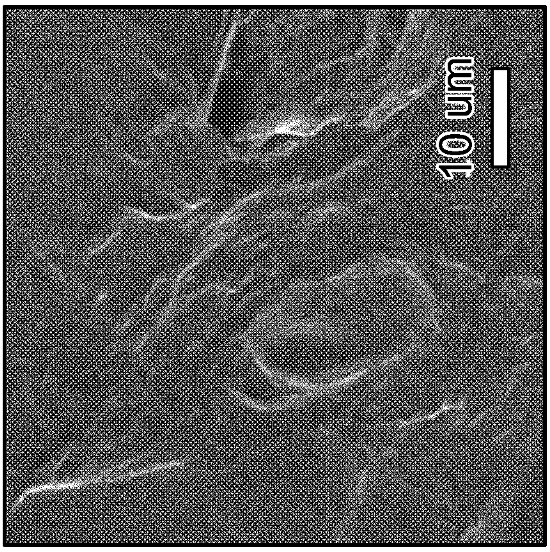

FIG. 25E

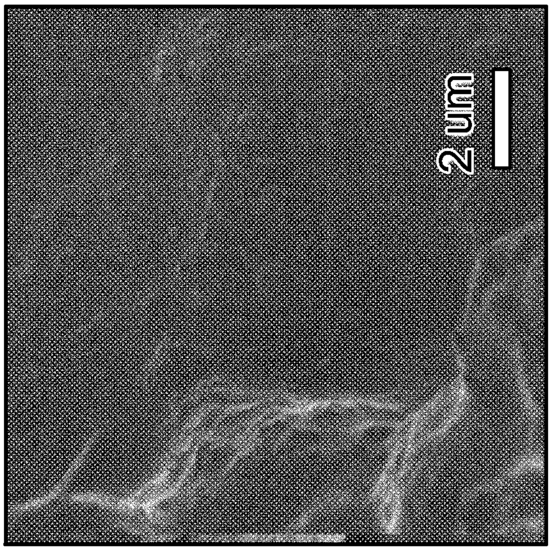

FIG. 25F

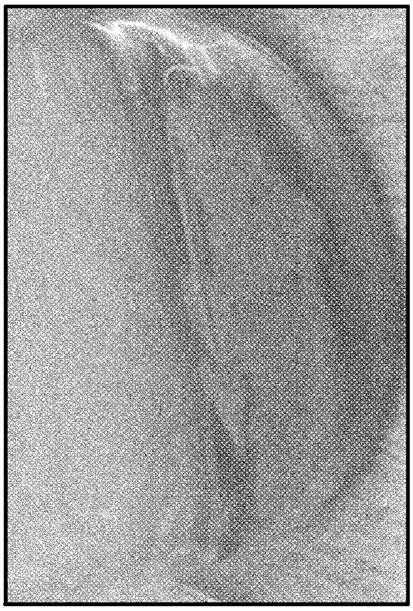
FIG. 26A

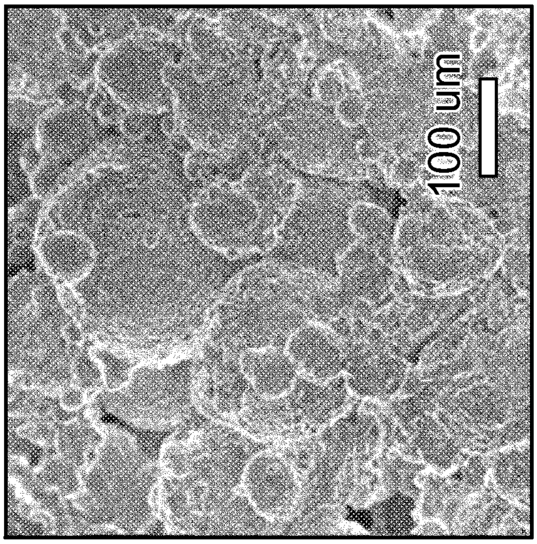

FIG. 26B

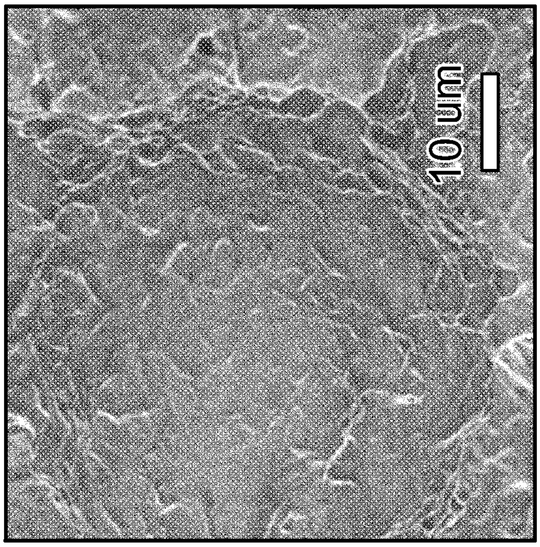

FIG. 26C

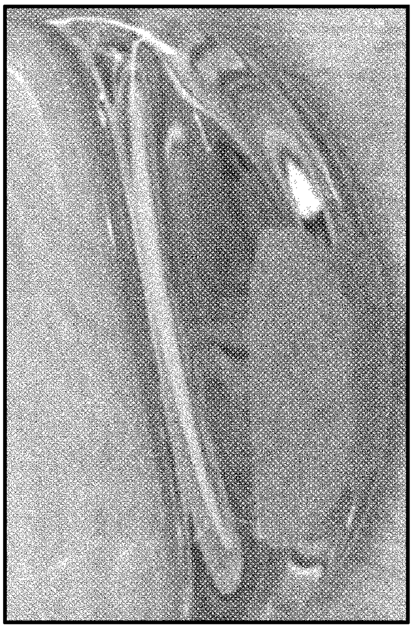
FIG. 26D

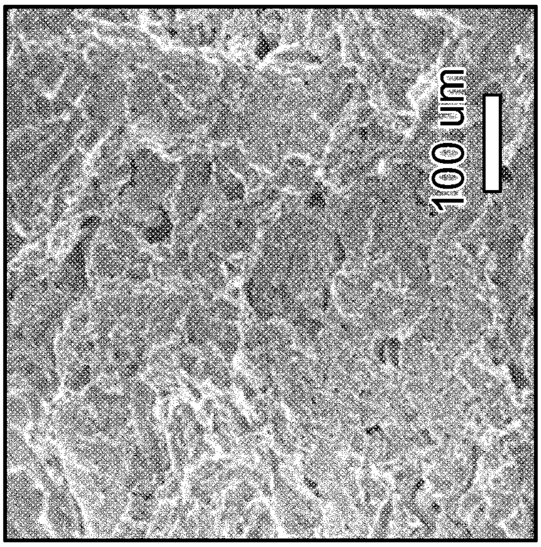

FIG. 26E

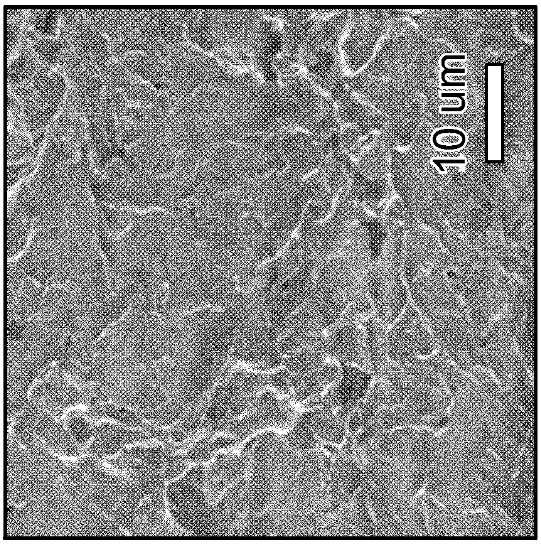

FIG. 26F

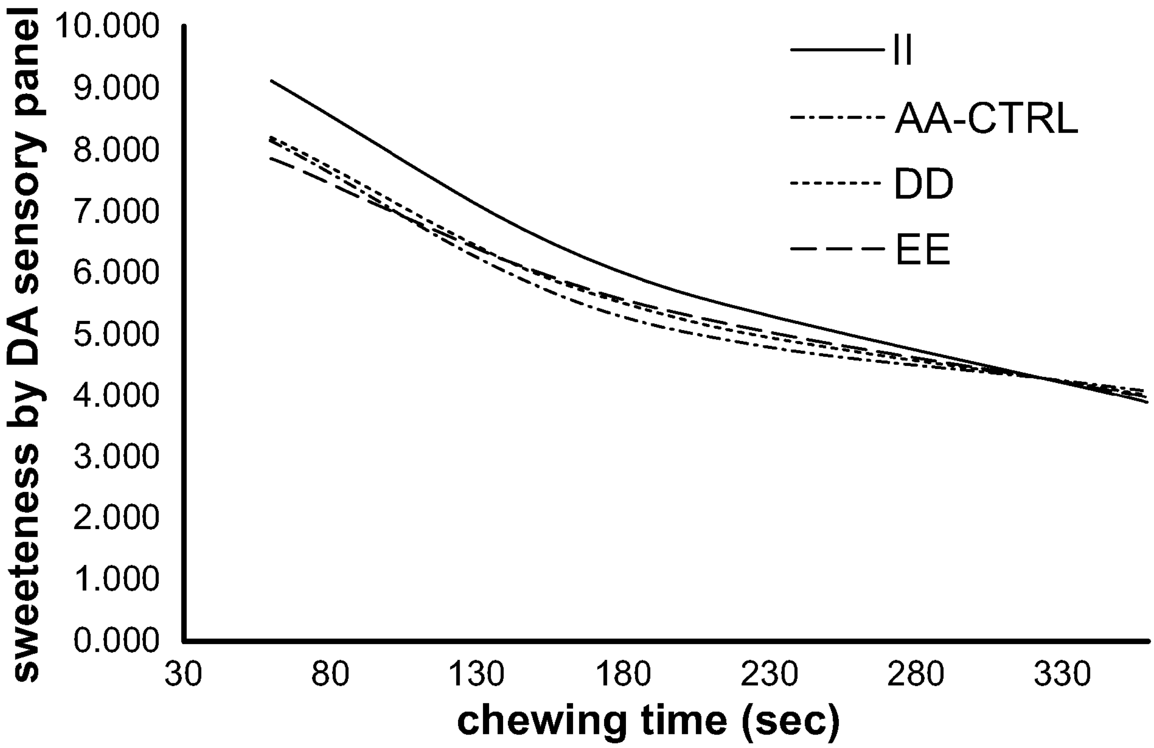
sweeteness by DA sensory panel
10.000
9.000
8.000
7.000
6.000
5.000
4.000
3.000
2.000
1.000
0.000
30
80
130
180
230
280
330
chewing time (sec)
II
AA-CTRL
DD
EE

FIG. 27

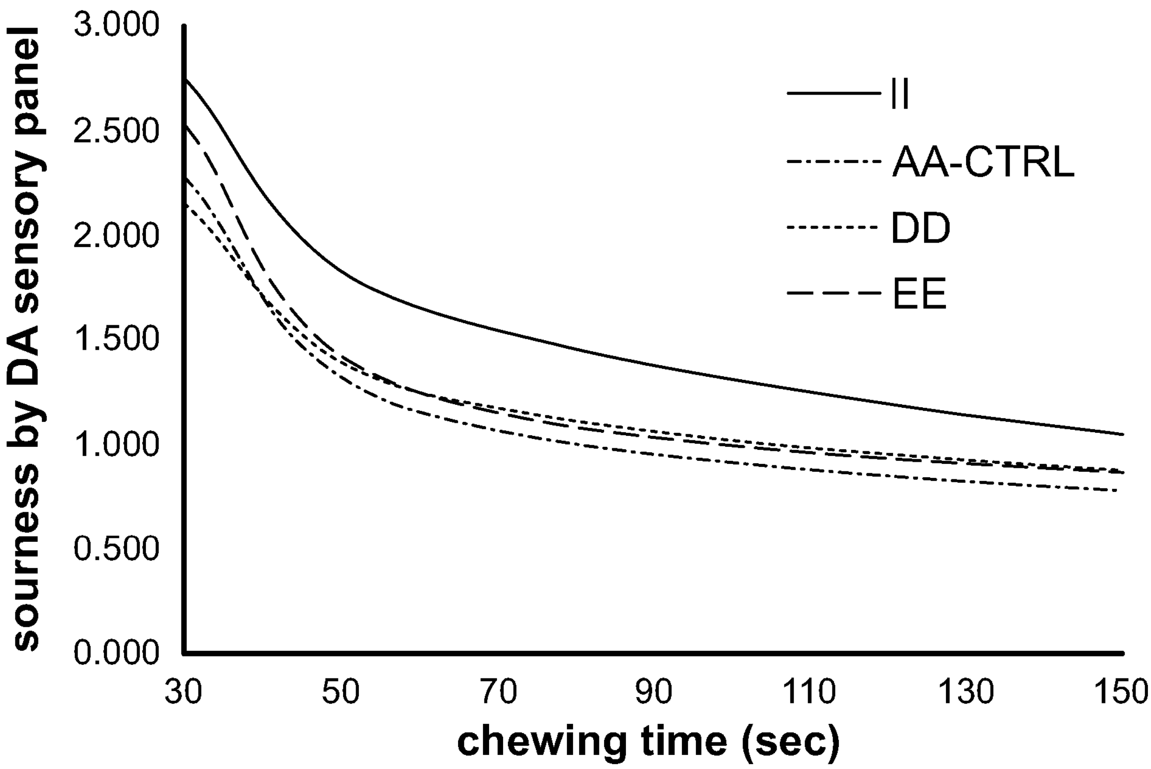
sourness by DA sensory panel
3.000
2.500
2.000
1.500
1.000
0.500
0.000
30
50
70
90
110
130
150
chewing time (sec)
II
AA-CTRL
DD
EE

FIG. 28

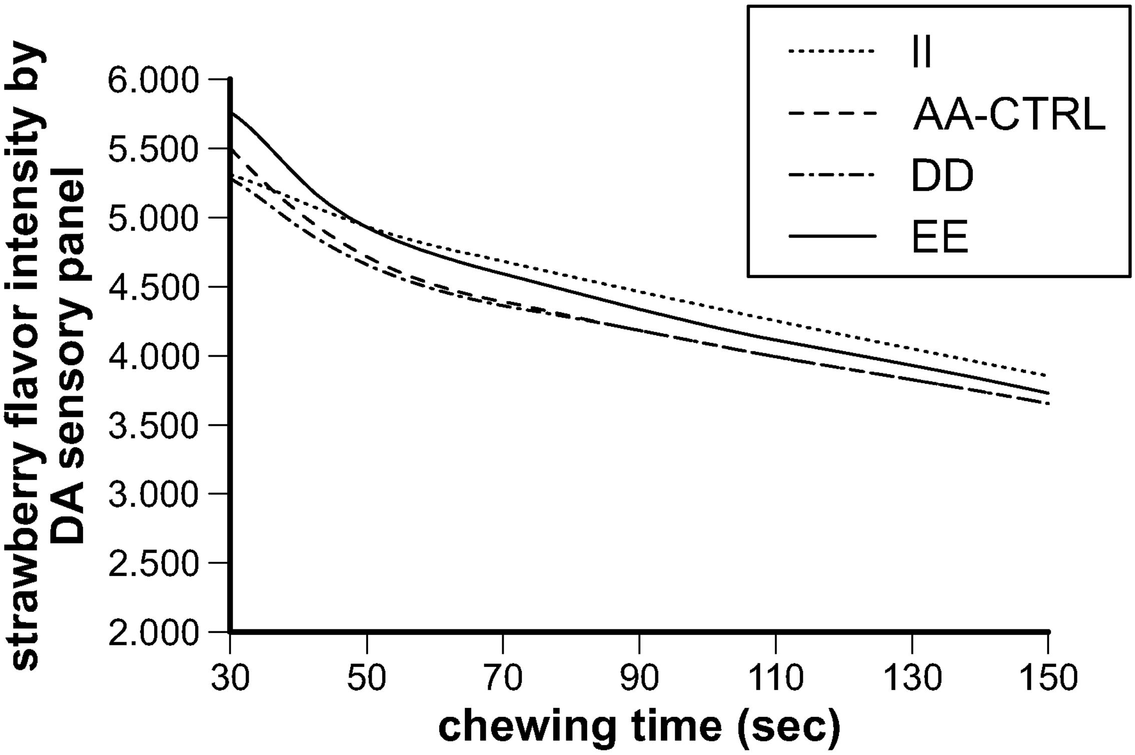


FIG. 29

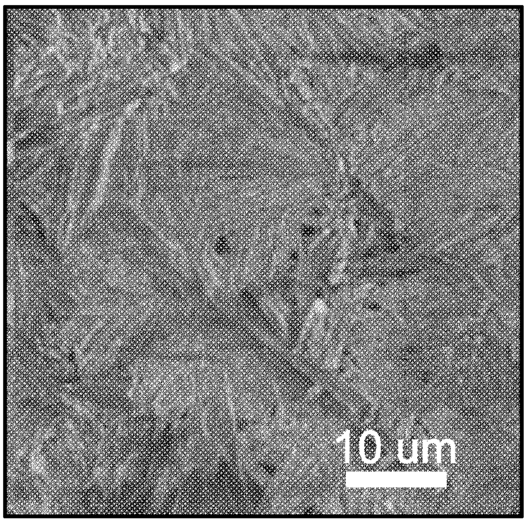


FIG. 30A

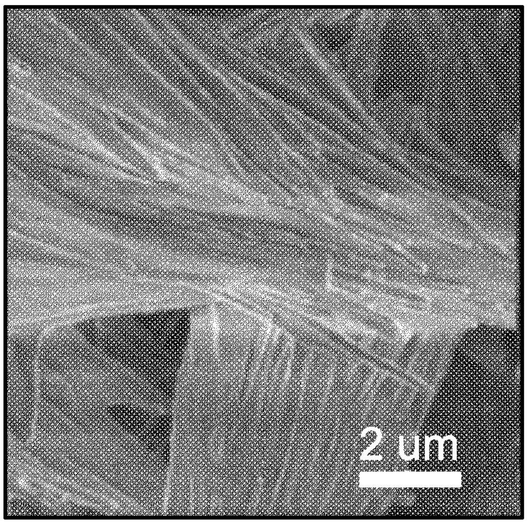


FIG. 30B

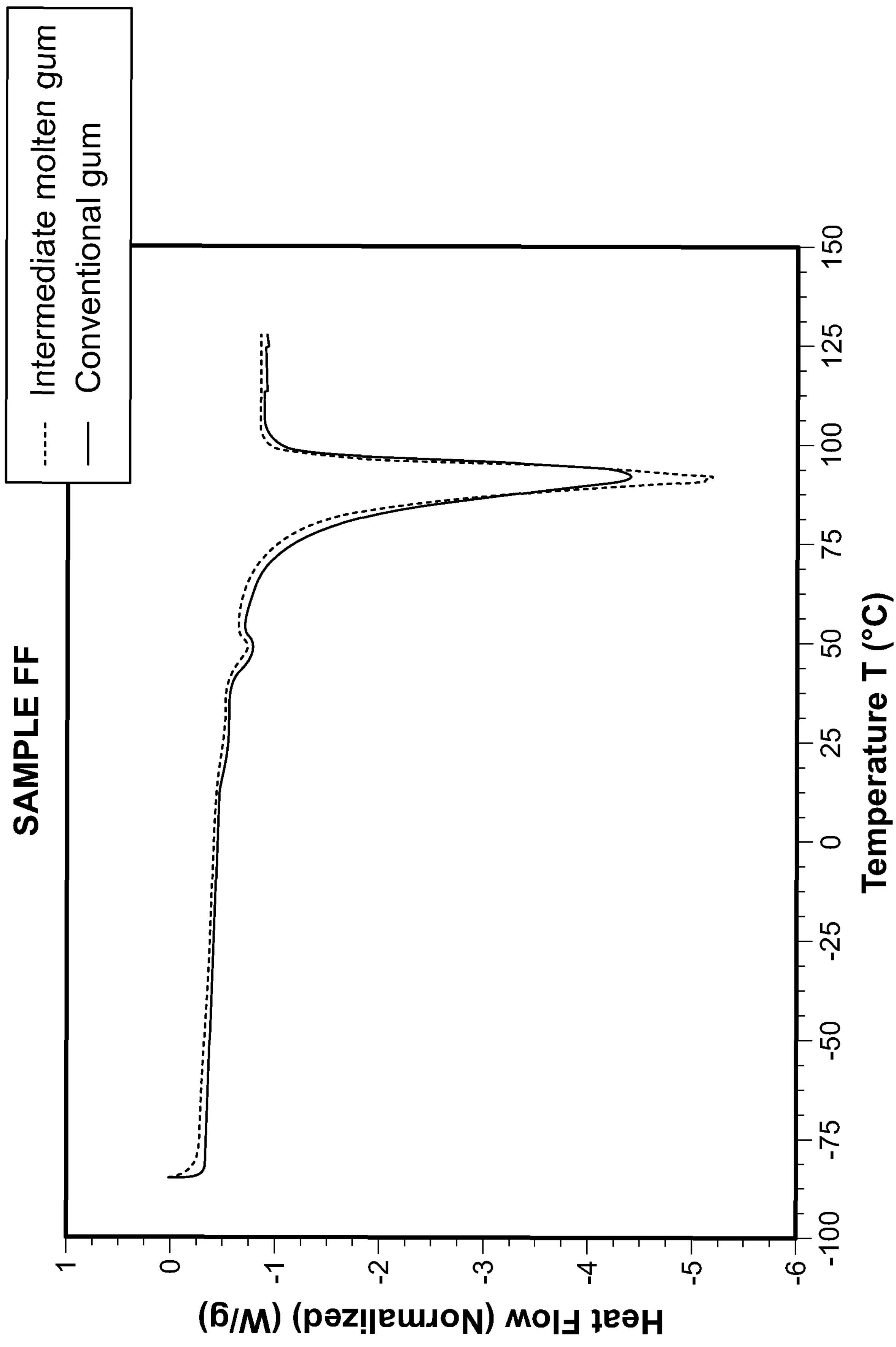
SAMPLE FF
Intermediate molten gum
Conventional gum
Heat Flow (Normalized) (W/g)
1
0
-1
-2
-3
-4
-5
-6
Temperature T (°C)
-100
-75
-50
-25
0
25
50
75
100
125
150

FIG. 31A

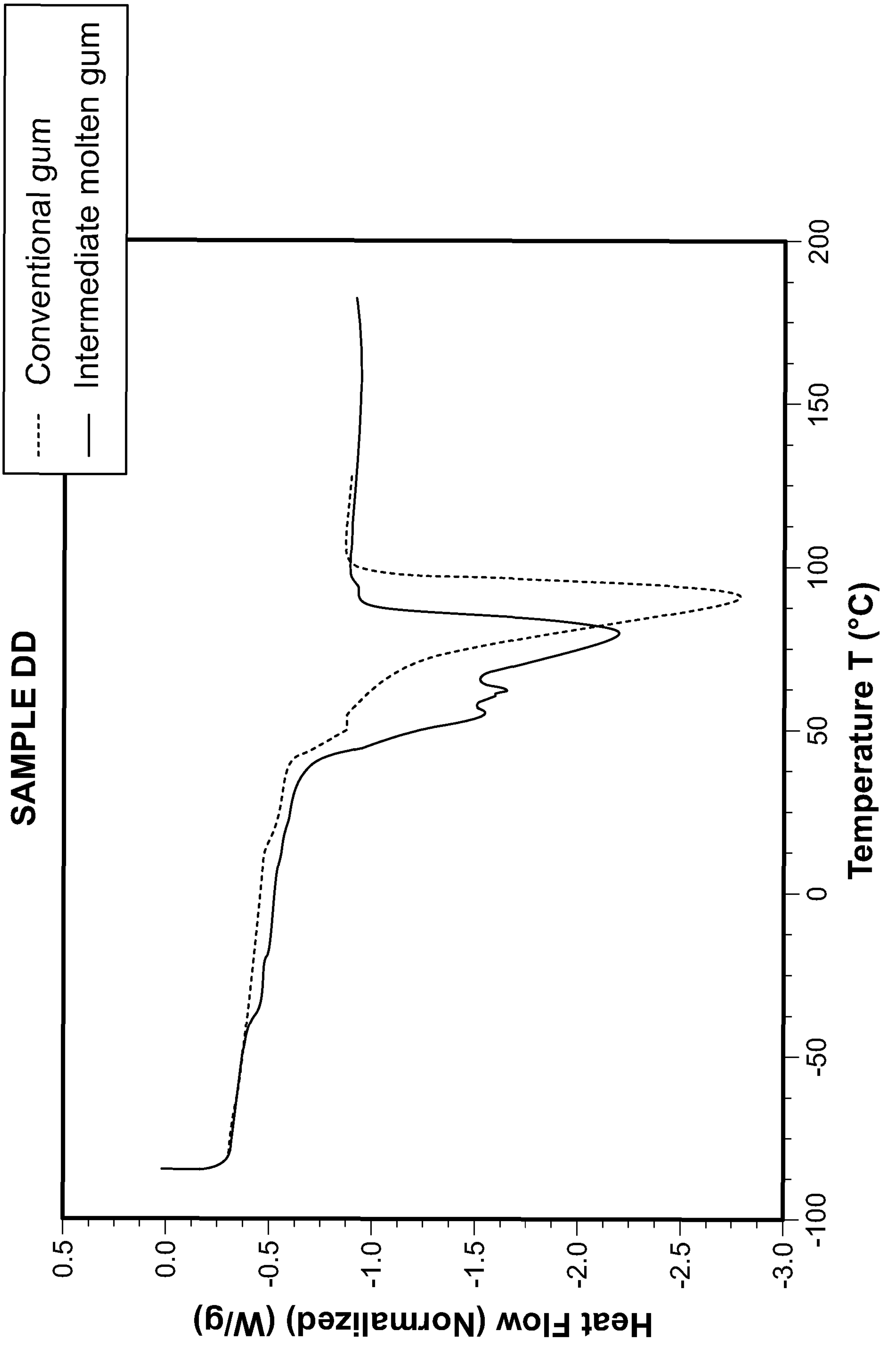
SAMPLE DD
Conventional gum
Intermediate molten gum
Heat Flow (Normalized) (W/g)
0.5
0.0
-0.5
-1.0
-1.5
-2.0
-2.5
-3.0
Temperature T (°C)
-100
-50
0
50
100
150
200

FIG. 31B

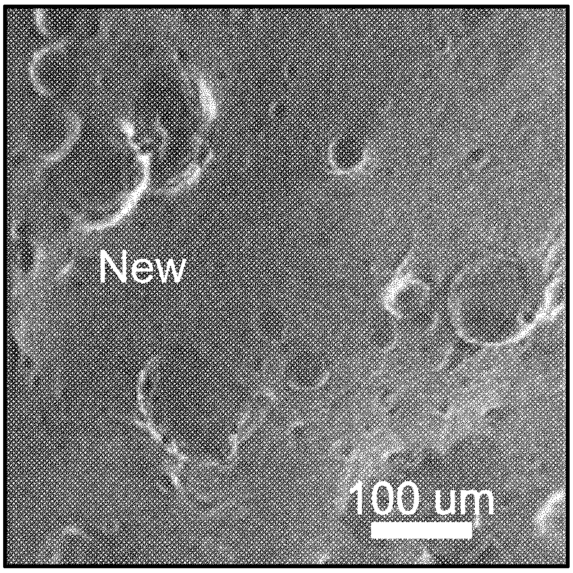


FIG. 32A

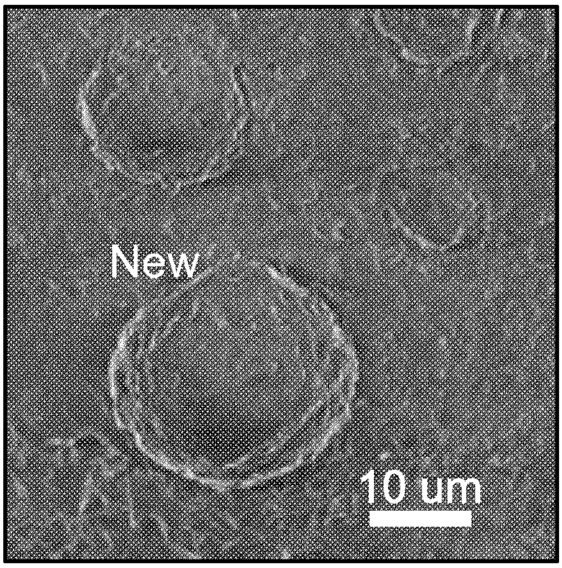


FIG. 32B

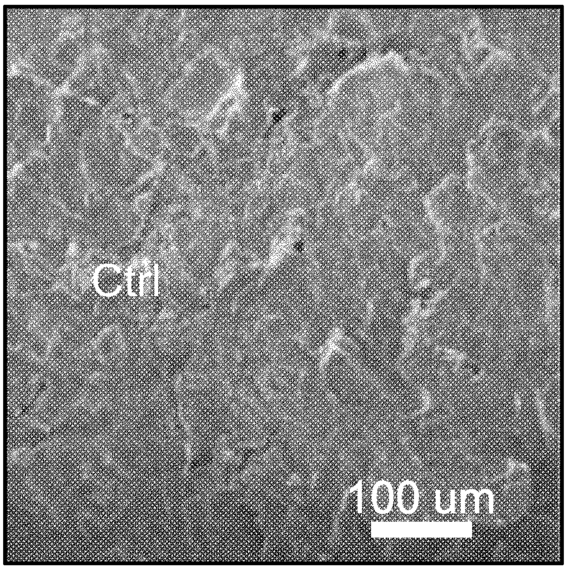


FIG. 32C

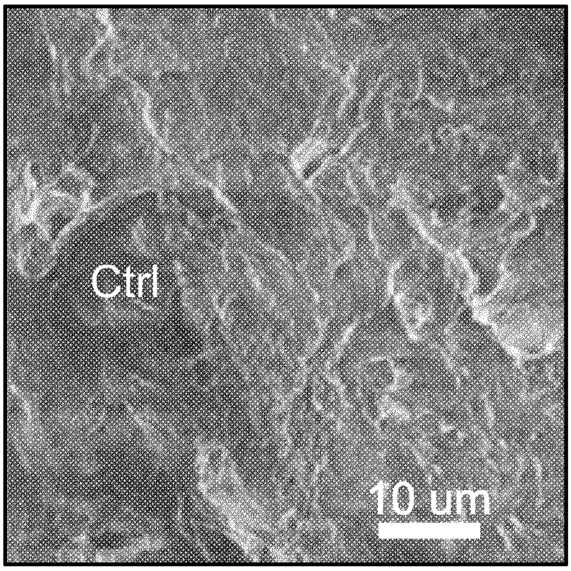


FIG. 32D

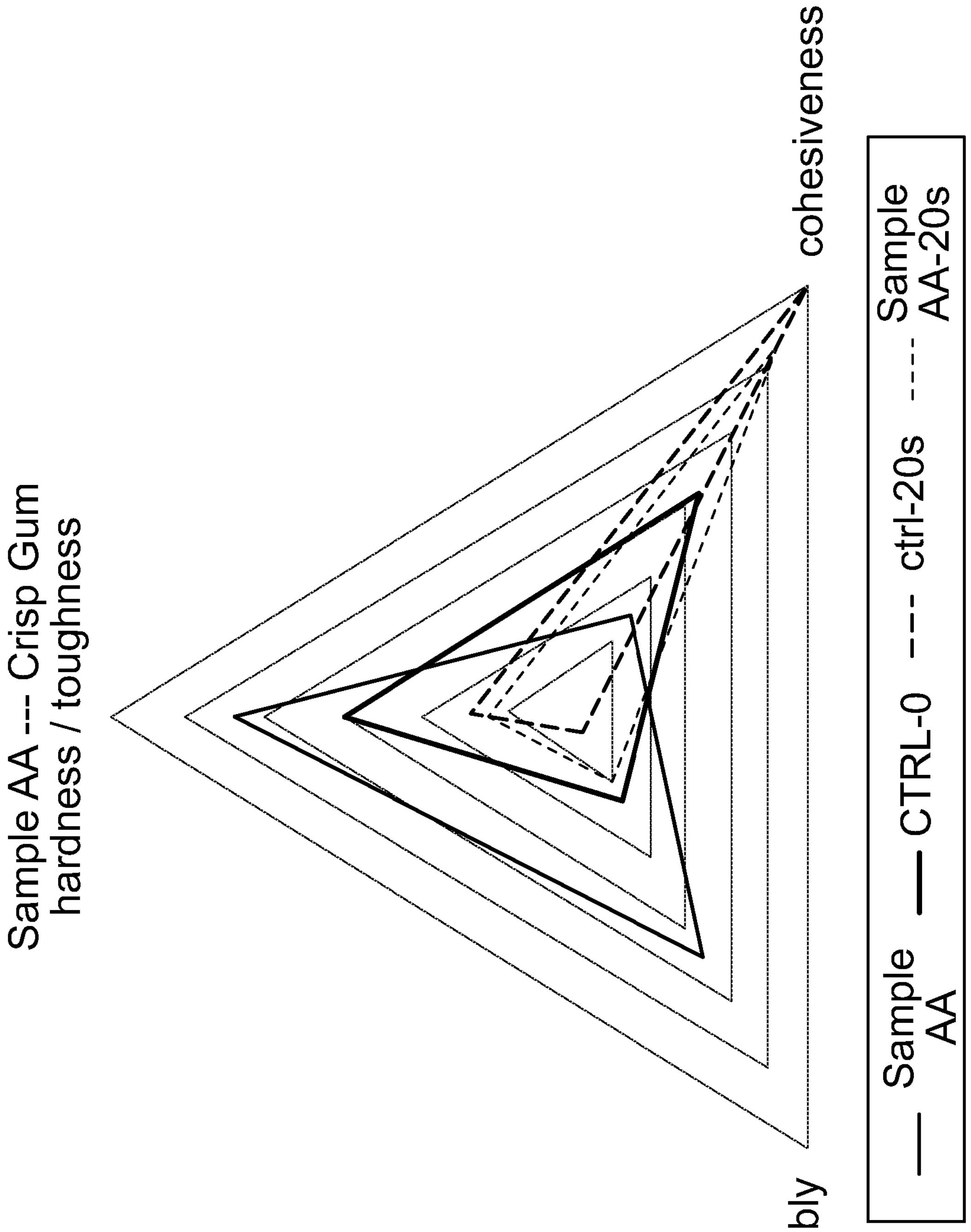
Sample AA --- Crisp Gum
hardness / toughness
cohesiveness
crumbly
Sample AA
CTRL-0
ctrl-20s
Sample AA-20s

FIG. 32E

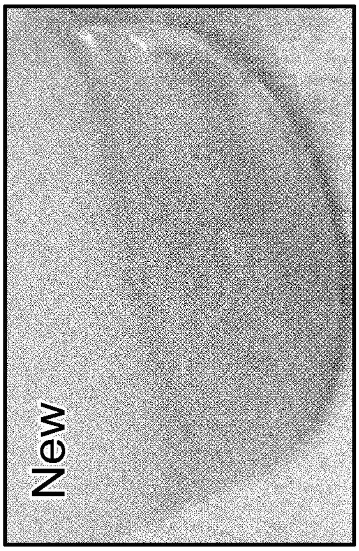


FIG. 33A

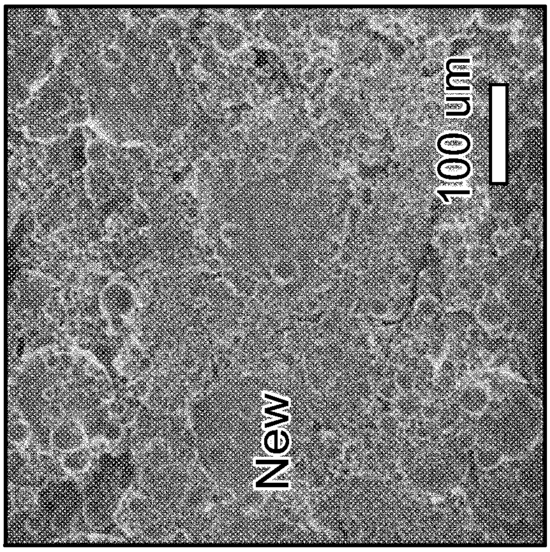


FIG. 33B

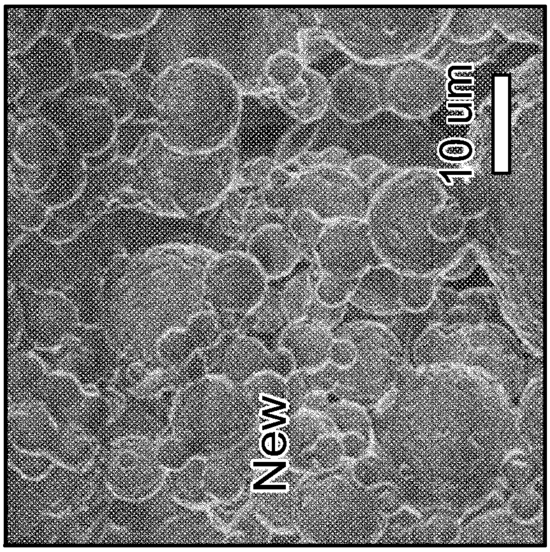


FIG. 33C

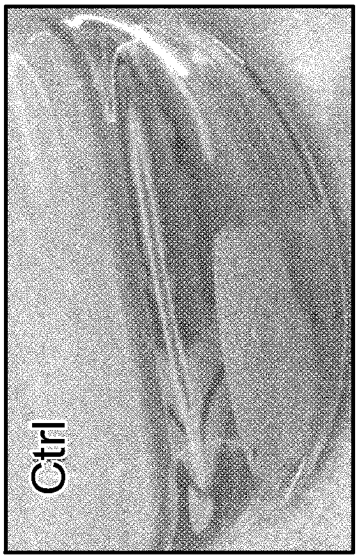


FIG. 33D

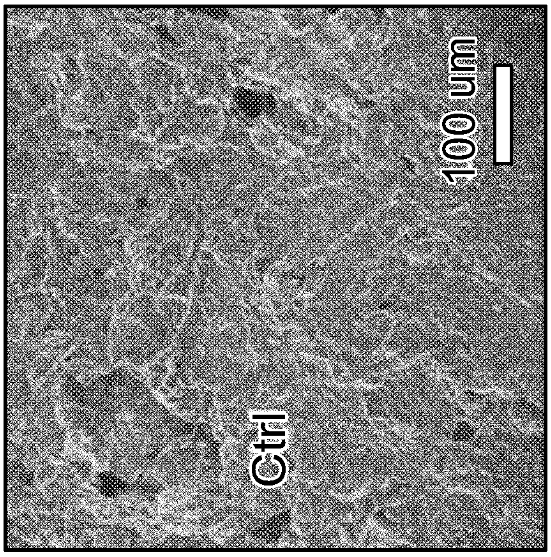


FIG. 33E

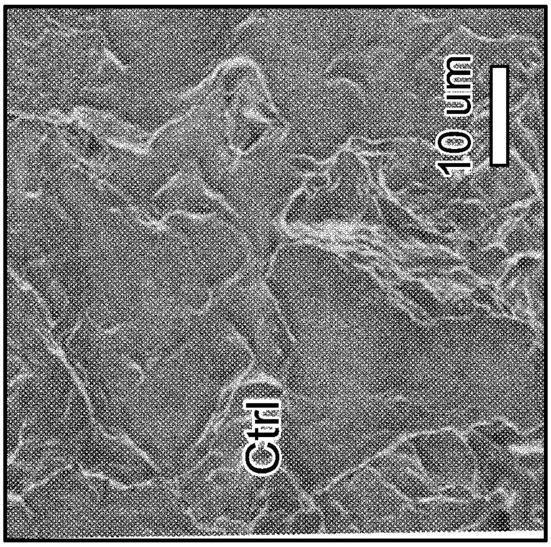


FIG. 33F

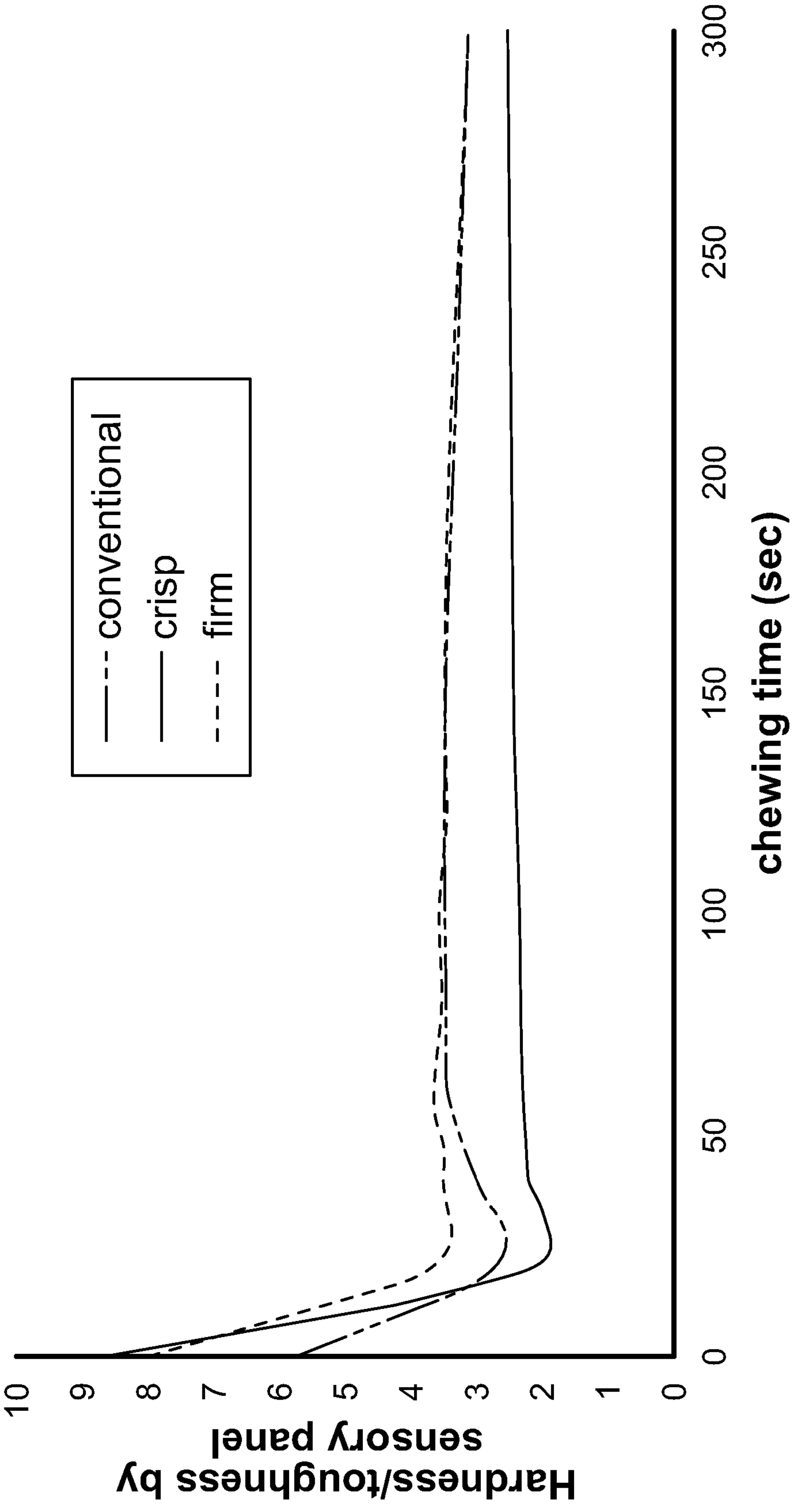
Hardness/toughness by sensory panel
0
1
2
3
4
5
6
7
8
9
10
chewing time (sec)
0
50
100
150
200
250
300
conventional
crisp
firm

FIG. 34

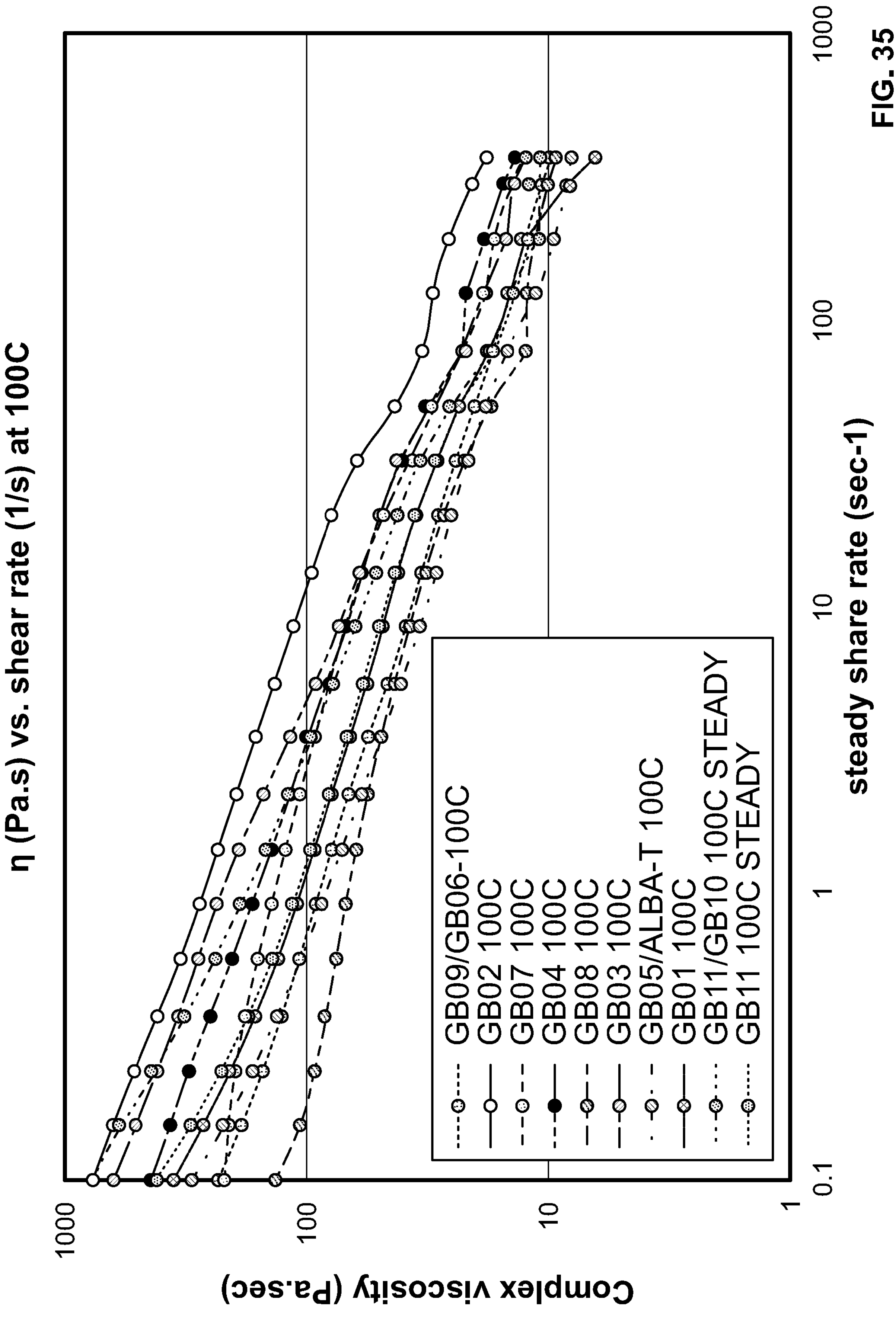
η (Pa.s) vs. shear rate (1/s) at 100C
Complex viscosity (Pa.sec)
1000
100
10
1
0.1
1
10
100
1000
steady share rate (sec-1)
GB09/GB06-100C
GB02 100C
GB07 100C
GB04 100C
GB08 100C
GB03 100C
GB05/ALBA-T 100C
GB01 100C
GB11/GB10 100C STEADY
GB11 100C STEADY

FIG. 35

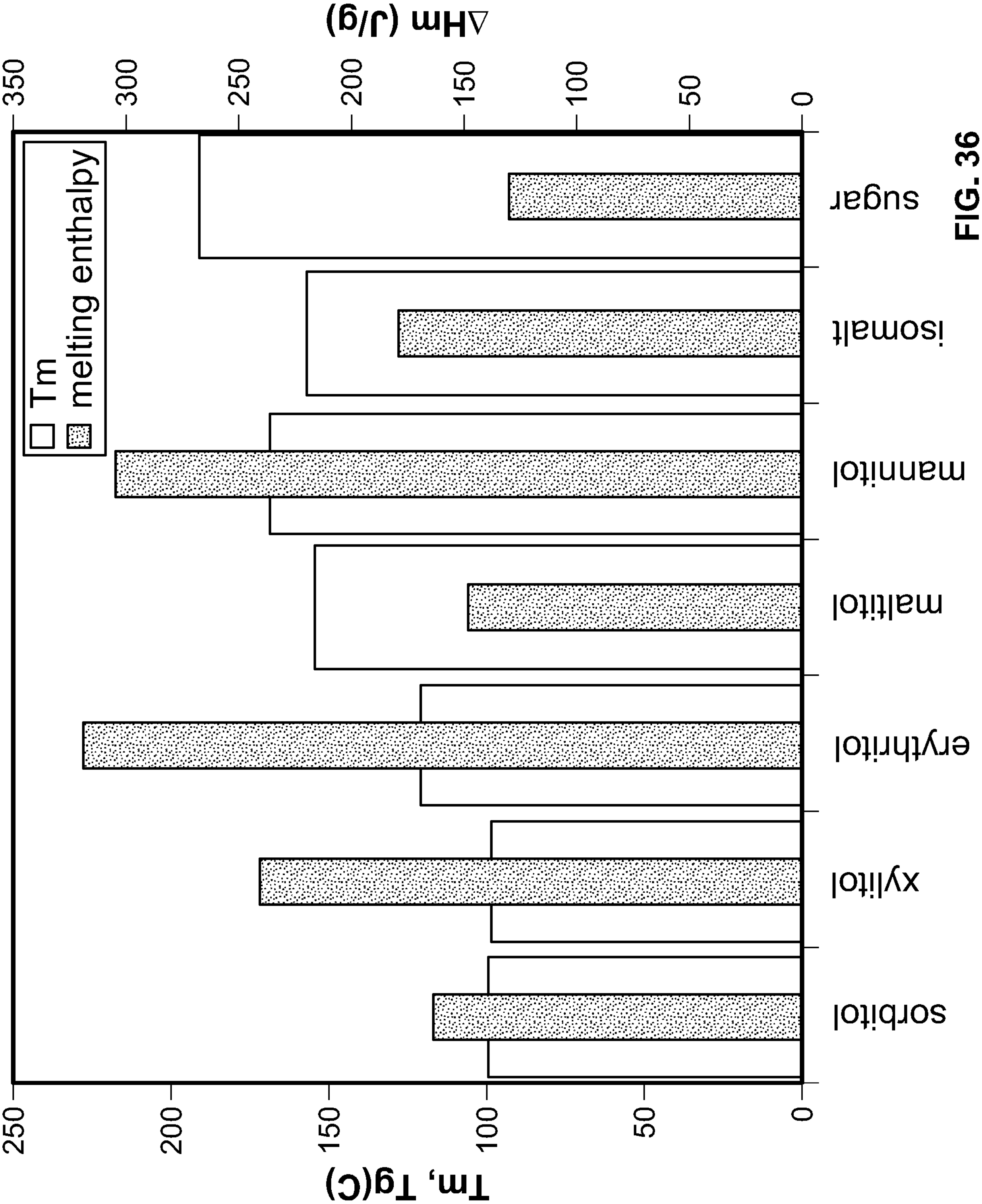

ΔHm (J/g)
350
300
250
200
150
100
50
0
Tm
melting enthalpy
sugar
isomalt
mannitol
maltitol
erythritol
xylitol
sorbitol
250
200
150
100
50
0
Tm, Tg(C)


FIG. 36

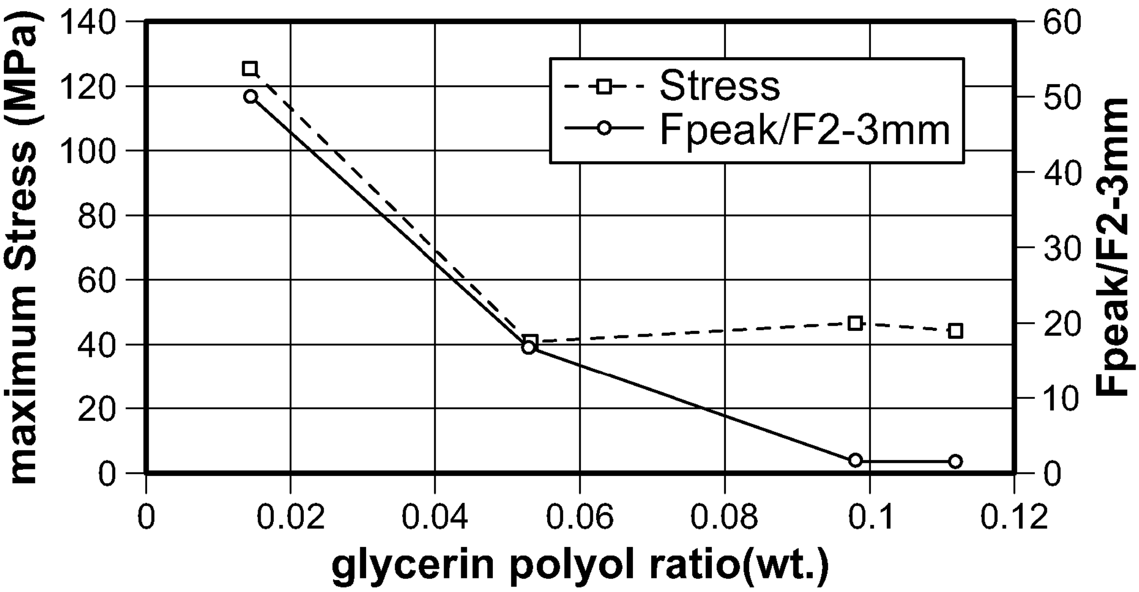
maximum Stress (MPa)
Fpeak/F2-3mm
Stress
Fpeak/F2-3mm
glycerin polyol ratio(wt.)
0
20
40
60
80
100
120
140
0
10
20
30
40
50
60
0
0.02
0.04
0.06
0.08
0.1
0.12

FIG. 37

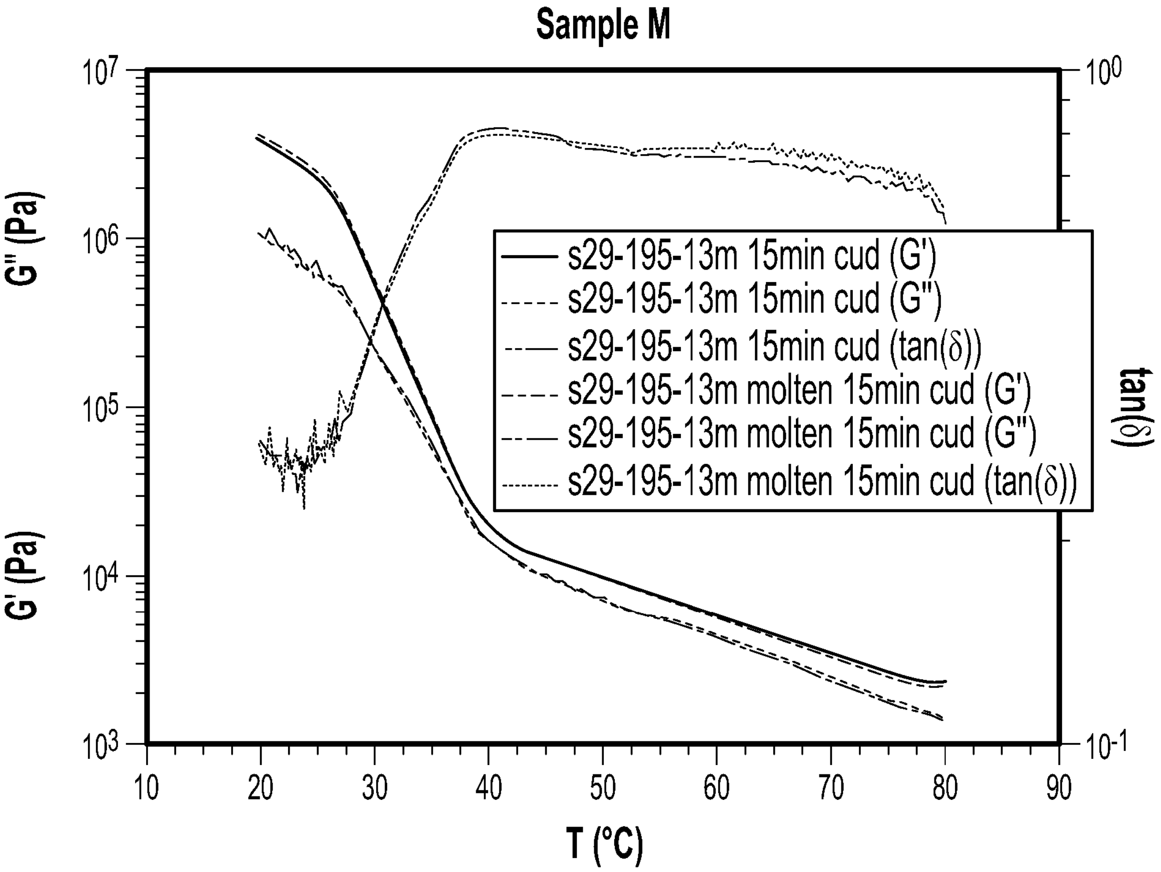
Sample M
G'' (Pa)
G' (Pa)
tan(δ)
T (°C)
s29-195-13m 15min cud (G')
s29-195-13m 15min cud (G'')
s29-195-13m 15min cud (tan(δ))
s29-195-13m molten 15min cud (G')
s29-195-13m molten 15min cud (G'')
s29-195-13m molten 15min cud (tan(δ))
10^3
10^4
10^5
10^6
10^7
10^0
10^-1
10
20
30
40
50
60
70
80
90

FIG. 38

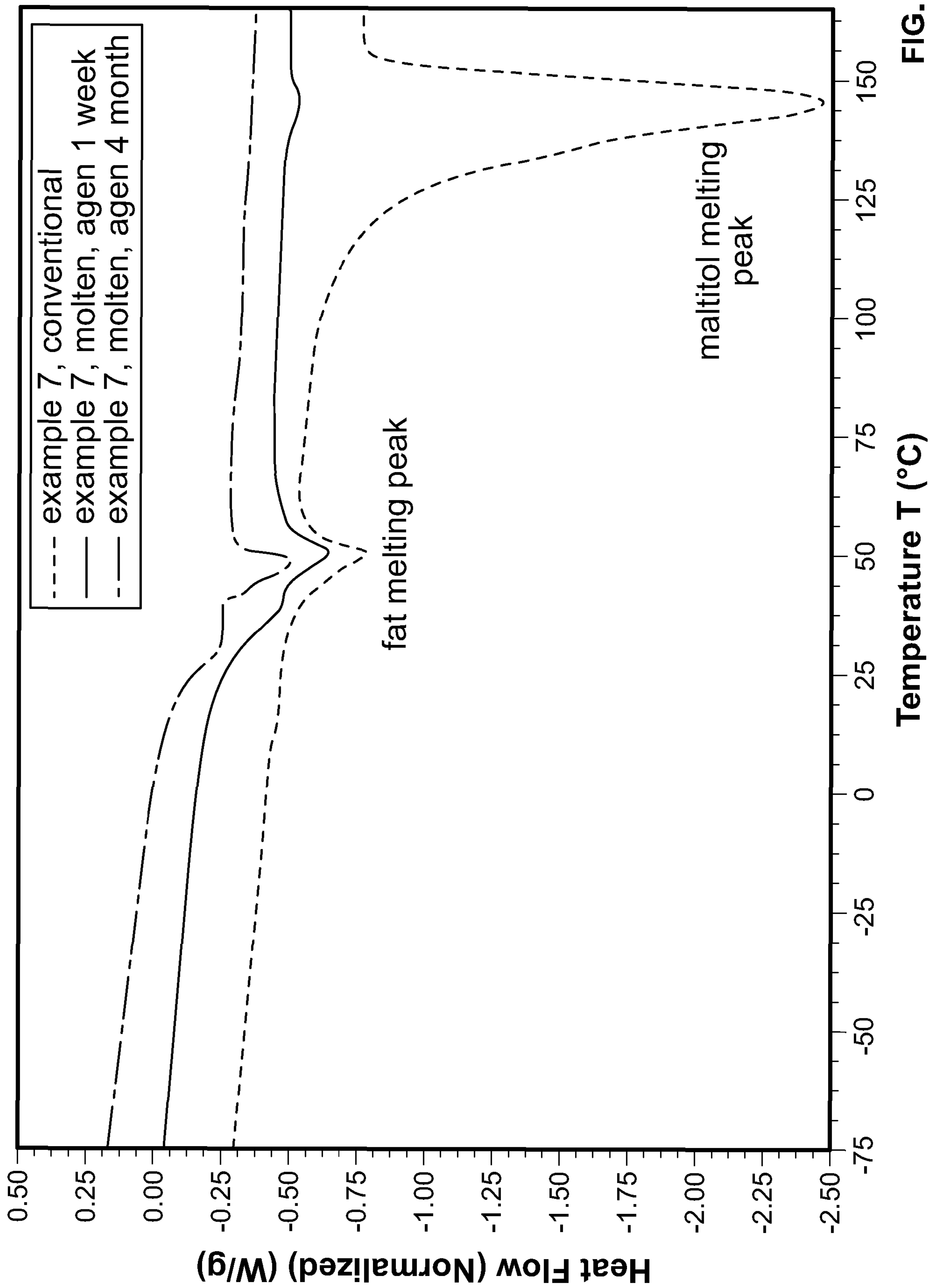
example 7, conventional
example 7, molten, agen 1 week
example 7, molten, agen 4 month
fat melting peak
maltitol melting peak
Heat Flow (Normalized) (W/g)
Temperature T (°C)
0.50
0.25
0.00
-0.25
-0.50
-0.75
-1.00
-1.25
-1.50
-1.75
-2.00
-2.25
-2.50
-75
-50
-25
0
25
50
75
100
125
150

FIG. 39

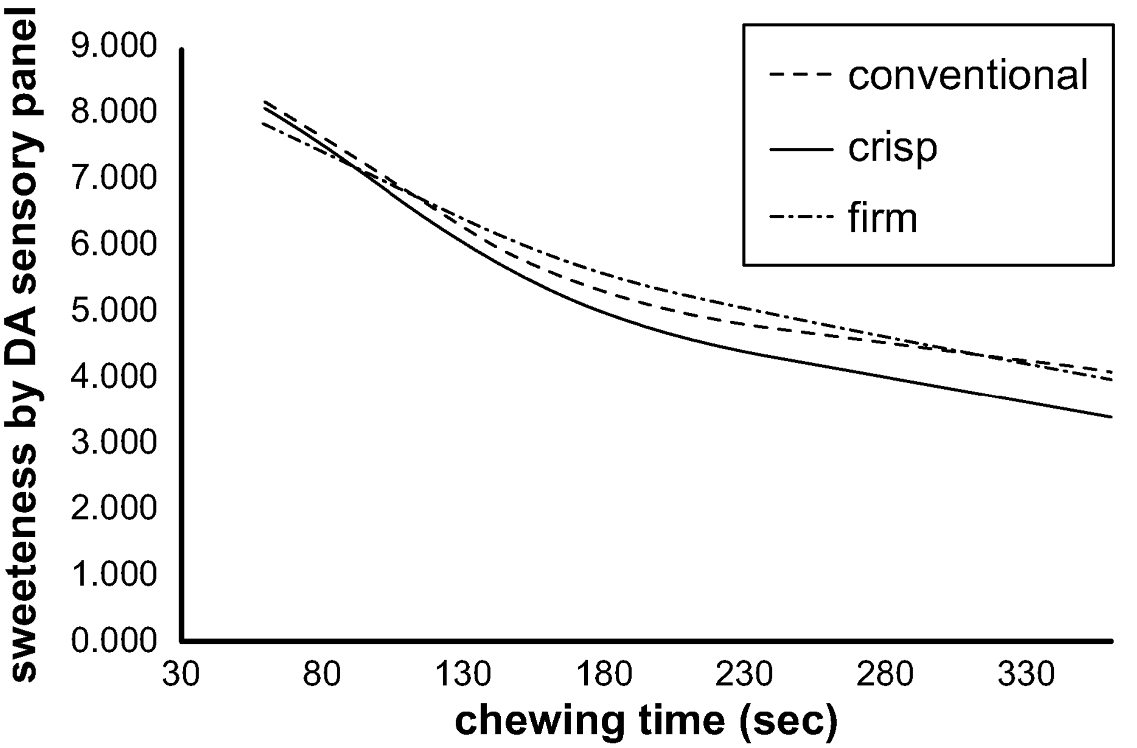
sweeteness by DA sensory panel
9.000
8.000
7.000
6.000
5.000
4.000
3.000
2.000
1.000
0.000
30
80
130
180
230
280
330
chewing time (sec)
conventional
crisp
firm

FIG. 40

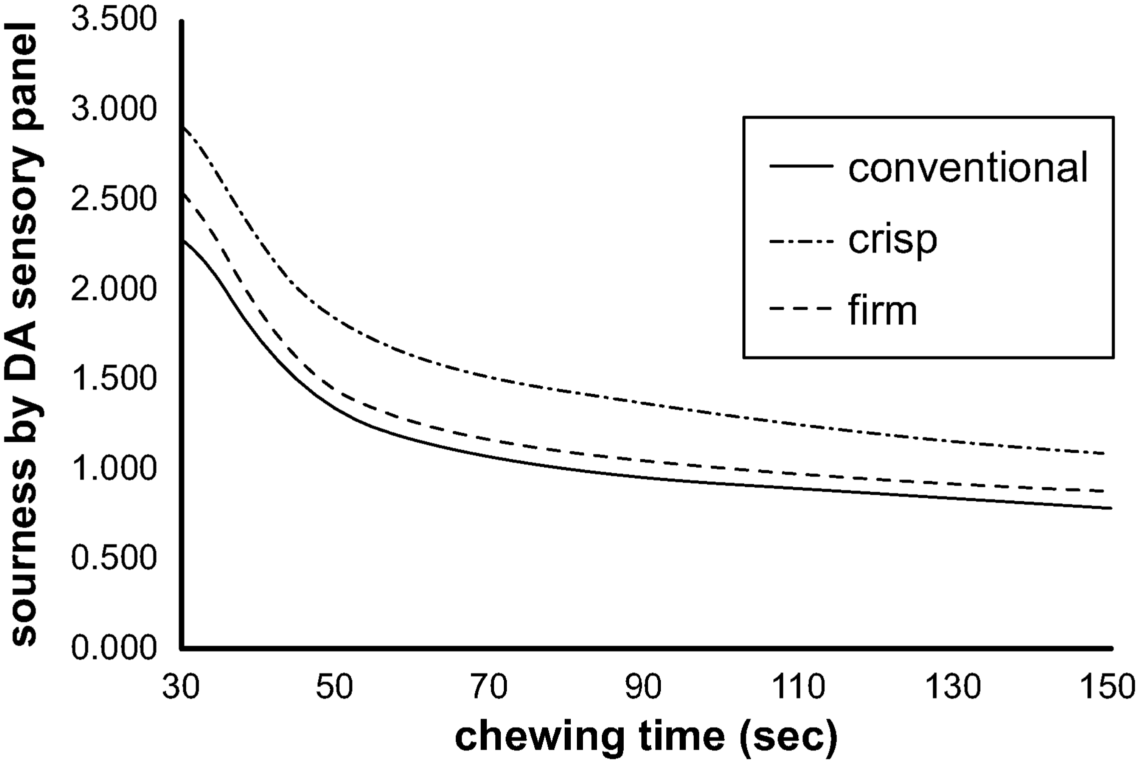
sourness by DA sensory panel
3.500
3.000
2.500
2.000
1.500
1.000
0.500
0.000
30
50
70
90
110
130
150
chewing time (sec)
conventional
crisp
firm

FIG. 41

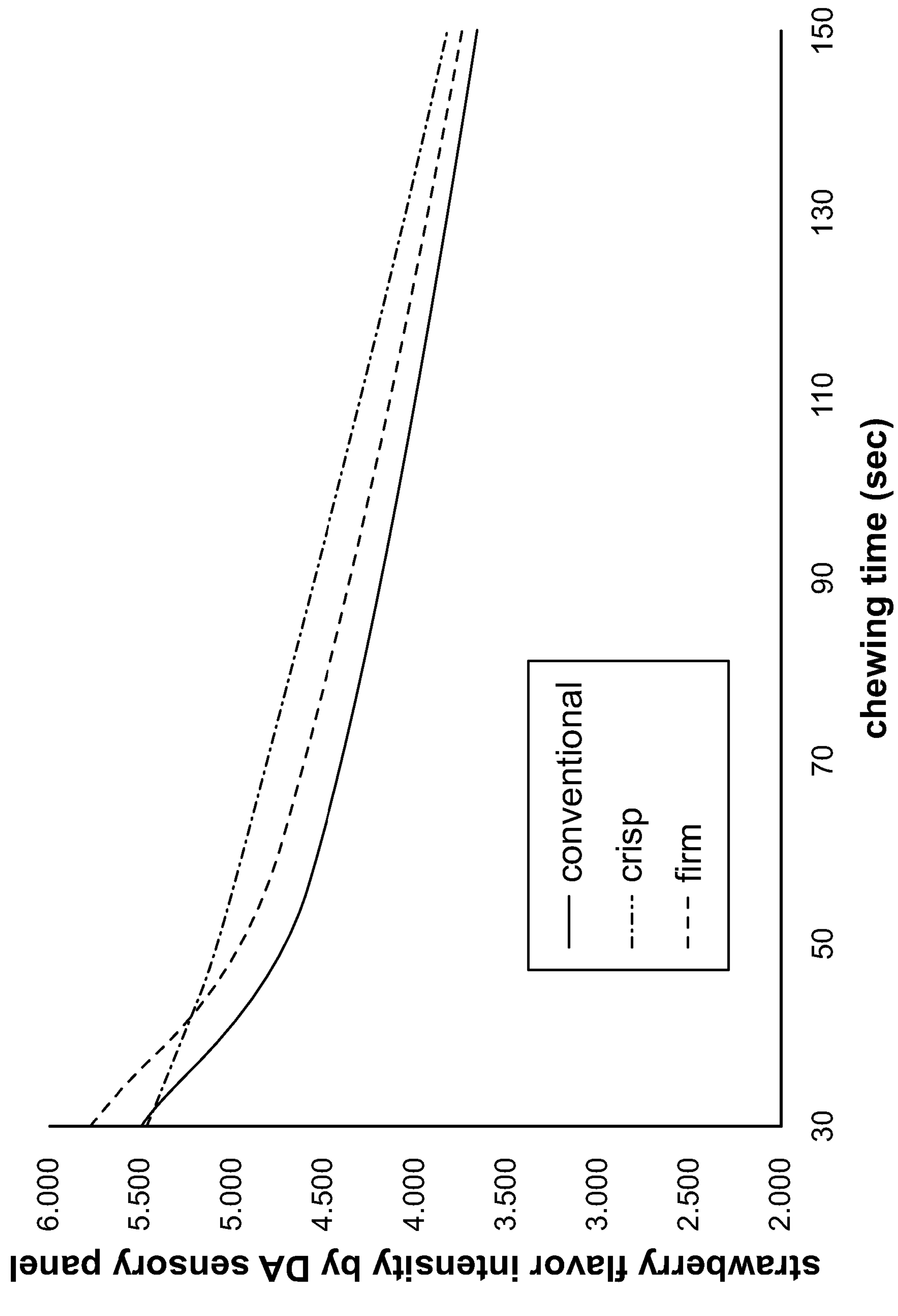
strawberry flavor intensity by DA sensory panel
6.000
5.500
5.000
4.500
4.000
3.500
3.000
2.500
2.000
30
50
70
90
110
130
150
chewing time (sec)
conventional
crisp
firm

FIG. 42

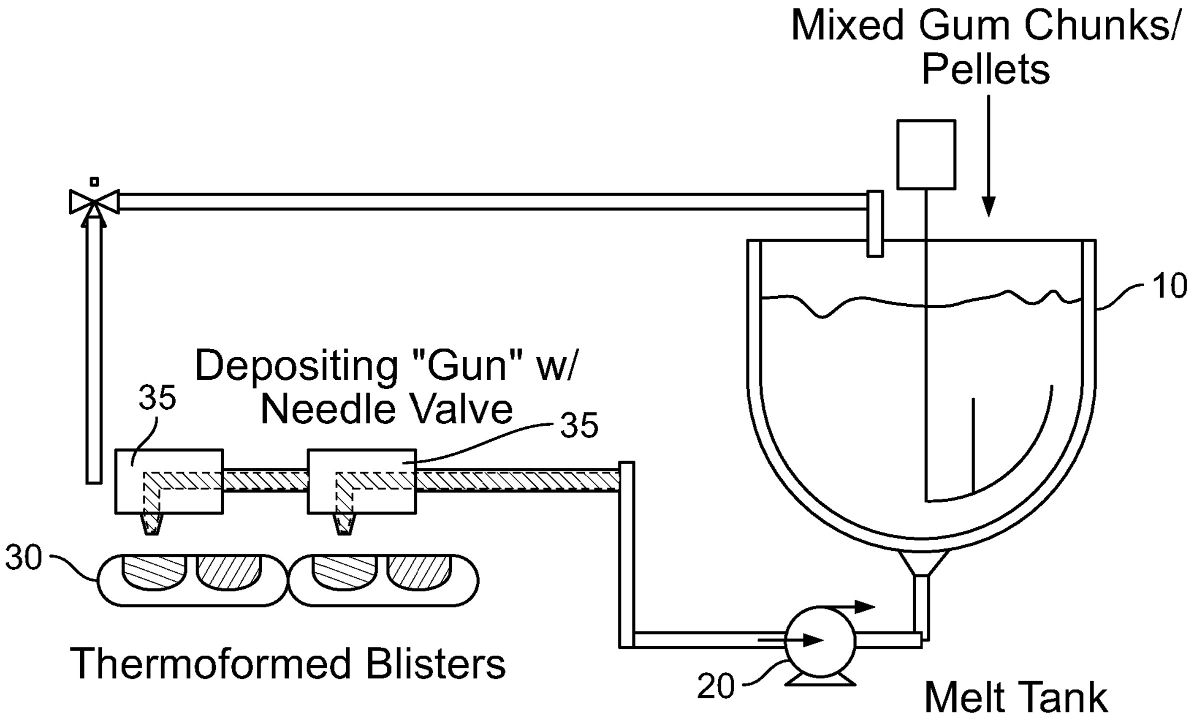


FIG. 43A

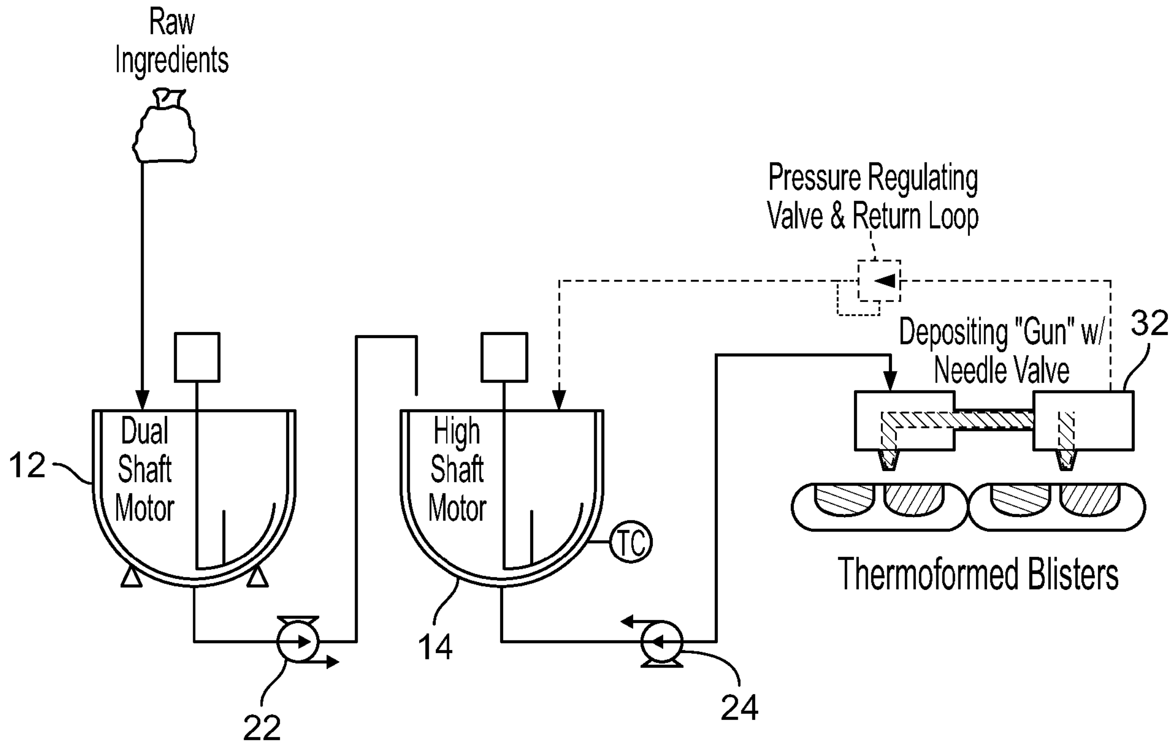


FIG. 43B

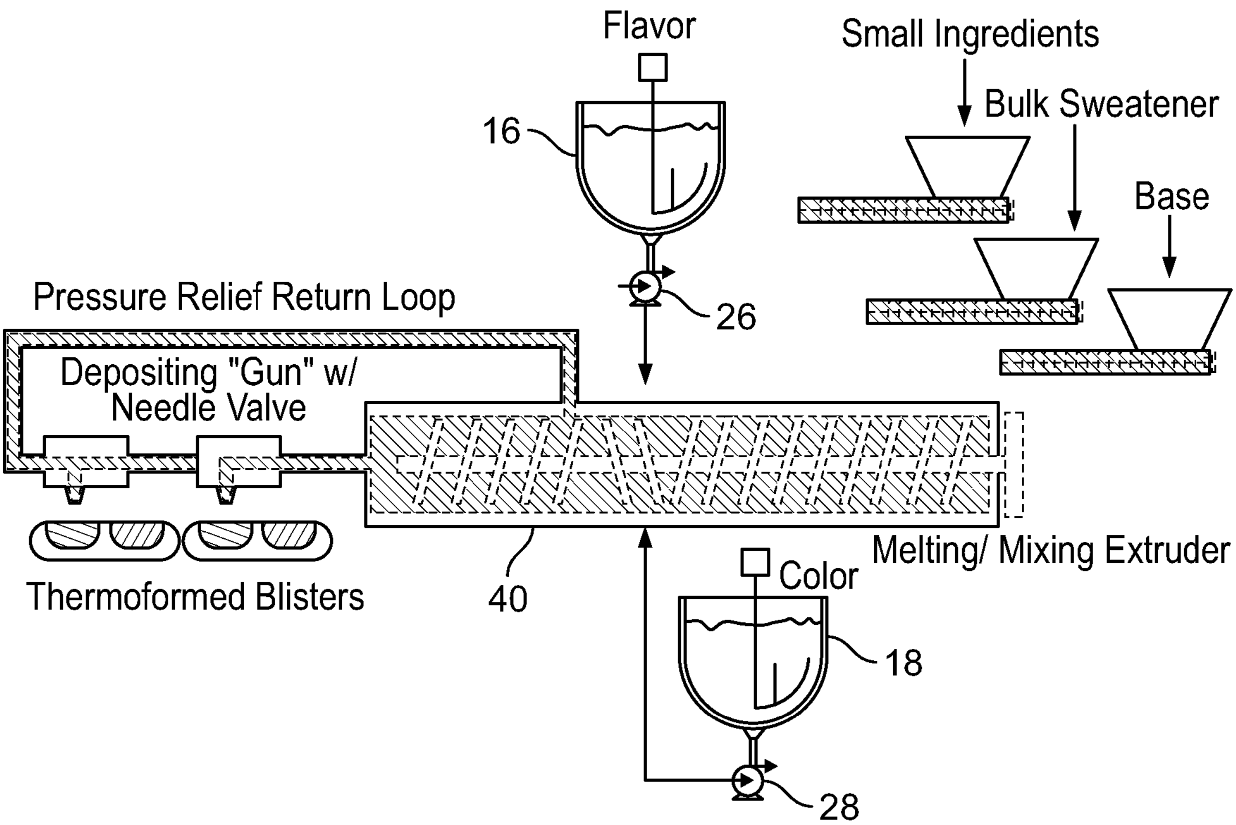
Flavor
Small Ingredients
Bulk Sweatener
Base
16
26
Pressure Relief Return Loop
Depositing "Gun" w/ Needle Valve
Thermoformed Blisters
40
Color
Melting/ Mixing Extruder
18
28

FIG. 43C